(19) Europäisches Patentamt
European Patent Office
Office européen des brevets

(11) **EP 3 142 283 A1**

(12) **EUROPEAN PATENT APPLICATION**
published in accordance with Art. 153(4) EPC

(43) Date of publication:
**15.03.2017 Bulletin 2017/11**

(51) Int Cl.:
***H04L 5/00*** *(2006.01)*

(21) Application number: **14891182.9**

(86) International application number:
**PCT/CN2014/087471**

(22) Date of filing: **25.09.2014**

(87) International publication number:
**WO 2015/169037 (12.11.2015 Gazette 2015/45)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **09.05.2014 CN 201410196644**

(71) Applicant: **ZTE Corporation**
**Shenzhen, Guangdong 518057 (CN)**

(72) Inventors:
• **LI, Chunxu**
  **Shenzhen**
  **Guangdong 518057 (CN)**

• **GUO, Senbao**
  **Shenzhen**
  **Guangdong 518057 (CN)**
• **ZHANG, Junfeng**
  **Shenzhen**
  **Guangdong 518057 (CN)**

(74) Representative: **Carangelo, Pierluigi et al**
**Jacobacci & Partners S.p.A.**
**Via delle Quattro Fontane, 15**
**00184 Roma (IT)**

(54) **DYNAMIC RESOURCE ALLOCATION METHOD AND DEVICE, BASE STATION AND TERMINAL**

(57)    The disclosure provides a method for dynamically allocating resource and device, an evolved Node B and User Equipment (UE). Wherein, the method includes that: an evolved Node B acquires resource allocation information of DownLink (DL) data and/or UpLink (UL) data indicated by DL control signaling, wherein the resource allocation information includes positions and number of Resource Allocation Elements (RAEs), the RAEs include N transmission symbols in a time domain, and occupy the whole bandwidth in a frequency domain, or each RAE occupies a Bandwidth Part (BP) in X BPs in the frequency domain, the X BPs forming the frequency domain, N being an integer more than 0 and X being an integer more than 1; and the evolved Node B sends the resource allocation information to UE. By the technical solutions provided by the disclosure, the problems of incapability in utilizing an LTE control channel to schedule multiple transmission symbols on a high-frequency carrier for DL service and UL service transmission, high control signaling overhead in LTE carrier and high-frequency carrier independent networks and the like in the related technology are solved, thereby implementing cross-carrier scheduling of an LTE carrier over the high-frequency carrier.

an evolved Node B acquires resource allocation information of DL data and/or UL data indicated by DL control signaling, wherein the resource allocation information includes positions and number of RAEs, each RAE includes N transmission symbols in a time domain, and occupies the whole bandwidth in a frequency domain, or each RAE occupies a BP in X BPs in the frequency domain, the X BPs forming the frequency domain, N is an integer more than 0 and X is an integer more than 1
— S102

↓

the evolved Node B sends the resource allocation information to UE
— S104

**Fig.1**

EP 3 142 283 A1

**Description**

**Technical Field**

The embodiments of the disclosure relate to the field of communication, and in particular to a method for dynamically allocating resource and device, an evolved Node B and UE.

**Background**

During high-frequency communication, adopting a higher carrier frequency for transmission may make average path loss much higher than that of a conventional Long-Term Evolution (LTE) system. For example, if a carrier frequency of 28GHz is adopted for transmission, by virtue of formula:

$$L_f = \left( \frac{4\pi R}{\lambda} \right)^2 ,$$

where $L_f$ is path loss of an LTE system, average proportion information of a high-frequency path loss value and an LTE path loss value is calculated as follows:

$$L_H \Big/ L_L = \left( \frac{4\pi R}{\lambda_H} \right)^2 \Big/ \left( \frac{4\pi R}{\lambda_L} \right)^2 = \left( \frac{\lambda_L}{\lambda_H} \right)^2 \approx 100 ,$$

$L_H$ representing path loss of high-frequency communication; and
in order to ensure coverage, namely meet a minimum Signal to Interference plus Noise Ratio (SINR) requirement on a receiving side in high-frequency communication, it is necessary to increase sender and receiver gains.

$$P_r = P_t G_t G_r \left( \frac{\lambda}{4\pi R} \right)^2 = P_t G_t G_r \Big/ L_f ,$$

where $P_r$ represents a receiver gain, $P_t$ represents a sender gain, $R$ is a radius of cell coverage, $\lambda_L$ is a wavelength of an LTE carrier, $\lambda_H$ is a wavelength of a high-frequency carrier, $G_t$ is a sending antenna gain, and $G_r$ is a receiving antenna gain.
LTE communication requires area coverage which maximally reaches 100km, and area coverage of high-frequency communication may maximally reach 1km if only average path loss is considered according to maximum coverage. If the characteristics of high air absorption (oxygen absorption, rain attenuation and fog attenuation), shadow fading sensitivity and the like of an actual high-frequency carrier are considered, actually supported coverage is smaller than 1 km.
If high-frequency communication supports maximum coverage of 1km, an SINR different from that of an LTE system may be obtained for the same coverage area, and a signal to noise ratio of the former is at least 20dB lower than that of the latter. In order to ensure that high-frequency communication and the LTE system have an approximate SINR within the same coverage, it is necessary to ensure an antenna gain of high-frequency communication. At this moment, high-frequency communication has a smaller wavelength, so that accommodation of more antenna elements on a unit area may be ensured, and more antenna elements may provide a higher antenna gain to ensure coverage performance of high-frequency communication.
Since a higher sending frequency is adopted for high-frequency communication and a Doppler frequency shift is directly proportional to a carrier frequency, a larger carrier spacing is required to avoid inter-carrier interference and a frequency shift. Since a symbol degree of Orthogonal Frequency Division Multiplexing (OFDM) is inversely proportional to a carrier spacing, a larger carrier spacing may cause a shorter transmission symbol duration, and a shorter transmission symbol duration may reduce robustness of an OFDM system for inter-symbol interference caused by a time delay. Therefore, a requirement of shorter maximum time delay is made on a high-frequency communication system, and high-frequency communication is mainly applied to configuration of a small cell system in an initial stage. A small cell may adopt a manner of hybrid networking with a 4th-Generation (4G) node, and may also adopt an independent networking manner. During hybrid networking with the 4G node, for ensuring coverage and robustness of control signaling, the control signaling may be sent on the 4G node, an enhanced data service is sent on a high-frequency carrier, and at this moment, the small cell and the 4G node may be required to be linked by adopting a non-ideal backhaul, or the high-frequency carrier and a conventional 4G carrier share the same station.

As mentioned above, with adoption of shorter transmission symbols (for example, OFDM signals), more transmission symbols may be accommodated within a unit time, so that more data information may be transmitted. Here, more transmission symbols are transmitted within a unit time, so that there exist two problems as follows: 1, in an LTE and high-frequency hybrid carrier network, a user plane is separated from a control plane, and when LTE-carrier-based transmission of control information and high-frequency carrier-based transmission of service data are implemented to ensure larger LTE coverage and higher control channel robustness, there exists the problem of how to utilize an LTE control channel to schedule multiple transmission symbols on a high-frequency carrier for DL (DL) service and UpLink (UL) service transmission; and 2, there exists a problem about control signaling overhead, i.e. the problem of how to reduce control signaling overhead for LTE and high-frequency carriers in LTE carrier and high-frequency carrier independent networks.

## Summary

For the problems of incapability in utilizing an LTE control channel to schedule multiple transmission symbols on a high-frequency carrier for DL service and UL service transmission, high control signaling overhead in LTE carrier and high-frequency carrier independent networks and the like in a related technology, the embodiments of the disclosure provide a method for dynamically allocating resource and device, an evolved Node B and UE, so as to at least solve the problems.

In order to achieve the purpose, according to an embodiment of the disclosure, a method for dynamically allocating resource is provided, which may include that: an evolved Node B acquires resource allocation information of DL data and/or UL data indicated by DL control signaling, wherein the resource allocation information may include positions and number of Resource Allocation Elements (RAEs), each RAE may include N transmission symbols in a time domain, and may occupy the whole bandwidth in a frequency domain, or each RAE may occupy a Bandwidth Part (BP) in X BPs in the frequency domain, the X BPs forming the frequency domain, N being an integer more than 0 and X being an integer more than 1; and the evolved Node B sends the resource allocation information to UE.

In the embodiment of the disclosure, (a) value(s) of N and/or X may be determined in at least one of manners as follows: the value(s) of N and/or X are/is predefined; the value(s) of N and/or X are/is determined according to a system bandwidth; and the value(s) of N and/or X are/is configured through high-layer signaling.

In the embodiment of the disclosure, a time-domain duration of the N transmission symbols may be S times of 0.1 ms or 1 ms, wherein S is an integer more than 0.

In the embodiment of the disclosure, a value of S may be determined in at least one of the following manners of that: predefinition of the value of S; configuration through high-layer signaling; determination by the system bandwidth; determination by both the system bandwidth and the high-layer signaling; and determination by the system bandwidth and multiple predefined values of S.

In the embodiment of the disclosure, in an LTE and high-frequency hybrid carrier network, an LTE carrier may schedule one or more RAEs in Y RAEs on a high-frequency carrier in a cross-carrier manner for the UE to receive the DL data or send the UL data, wherein Y is an integer more than 1; or, in a high-frequency carrier independent network, a high-frequency carrier may schedule multiple RAEs in multiple time-domain elements in a time-domain element for the UE to receive the DL data or send the UL data, wherein the time-domain element may be formed by a duration of an integral number of transmission symbols; or, in an LTE carrier independent network, an LTE carrier may schedule RAEs of multiple successive time-domain elements in a time-domain element, wherein the time-domain element may be formed by a duration of an integral number of transmission symbols.

In the embodiment of the disclosure, in the LTE and high-frequency hybrid carrier network, a time-domain duration of the Y RAEs may be 1ms; or, in the high-frequency carrier independent network, the time-domain element of the high-frequency carrier may be 0.1 ms; or, in the LTE carrier independent network, the time-domain element of the LTE carrier may be 1 ms, each RAE may consist of OFDM symbols in 1 ms in the time domain, and each RAE may include one or more Physical Resource Blocks (PRBs) in the frequency domain.

In the embodiment of the disclosure, the Y RAEs may form a scheduling time window $N_{RAE}^{sw}$ in the time domain, wherein (a) value(s) of $N_{RAE}^{sw}$ and/or Y may be determined in at least one of manners as follows: the evolved Node B configures the value(s) to the UE through high-layer signaling; the evolved Node B and the UE predefine the value(s) of $N_{RAE}^{sw}$ and/or Y; and different system bandwidths are predefined to correspond to different values of $N_{RAE}^{sw}$ and/or Y

In the embodiment of the disclosure, the system bandwidth may include: a bandwidth of a carrier where the DL control signaling is located.

In the embodiment of the disclosure, in the LTE and high-frequency hybrid carrier network, the LTE carrier may schedule multiple RAEs of the high-frequency carrier for the UE to receive the DL data or send the UL data in multiple RAEs of the high-frequency carrier.

In the embodiment of the disclosure, position(s) and number of the one or more RAEs may be indicated by bits in Downlink Control Information (DCI).

In the embodiment of the disclosure, (a) time-domain position(s) and/or frequency-domain position(s) of the one or more RAEs in the time window $N_{RAE}^{sw}$ may be indicated by the bits of the DCI in the time-domain element.

In the embodiment of the disclosure, the time-domain position(s) and/or frequency-domain position(s) of the one or more RAEs may be indicated in a manner of introducing a bitmap into the DCI.

In the embodiment of the disclosure, each bit in the bitmap may represent whether the RAE at the time-domain position and/or frequency-domain position corresponding to the bit is permitted to map data.

In the embodiment of the disclosure, in a case that the bitmap only represents the time-domain positions of the RAEs, each RAE may represent a whole-bandwidth resource; and in a case that the bitmap represents the time-domain positions and frequency-domain positions of the RAEs, each bit in the bitmap may represent the positions of an RAE, wherein each RAE may have a predetermined time-domain position and frequency-domain position, and each RAE may be sequenced according to a predetermined time-domain and frequency-domain rule.

In the embodiment of the disclosure, the time-domain position(s) and/or frequency-domain position(s) of the one or more RAEs in the time window $N_{RAE}^{sw}$ may be indicated by LTE DL resource allocation bits in the DCI.

In the embodiment of the disclosure, the LTE DL resource allocation bits may include: resource allocation bits in a DL resource allocation manner of Type 0, Type 1 or Type 2.

In the embodiment of the disclosure, in a case that the resource allocation bits only represent the time-domain positions of the RAEs, each RAE represents a whole-bandwidth resource; and in a case that the resource allocation bits represent the time-domain positions and frequency-domain positions of the RAEs, each RAE may have a predetermined time-domain position and frequency-domain position, and each RAE may be sequenced according to a predetermined time-domain and frequency-domain rule.

In the embodiment of the disclosure, the time-domain position(s) and/or frequency-domain position(s) of the one or more RAEs in the time window $N_{RAE}^{sw}$ may be indicated by LTE UL resource allocation bits in the DCI.

In the embodiment of the disclosure, the LTE UL resource allocation bits may at least include: resource allocation bits in a UL resource allocation manner of Type 0 and type 1.

In the embodiment of the disclosure, the evolved Node B may receive UL control information sent by the UE on a UL carrier corresponding to a DL carrier.

In the embodiment of the disclosure, a resource position of the UL control information may be determined by an initial time-domain position and/or initial frequency-domain position of a DL transmission data RAE and at least one of: a resource position of a control channel for scheduling a DL transmission data resource, a semi-statically configured resource offset position of a UL control channel, a dynamic resource offset position of the UL control channel indicated in the control channel for scheduling the DL transmission data resource, and an offset value corresponding to an antenna port index for sending DL transmission data.

In the embodiment of the disclosure, the DL carrier may be a high-frequency carrier, and the UL carrier may be an LTE carrier; or, the DL carrier may be a high-frequency carrier, a UL control channel carrier may be an LTE carrier, and a UL service channel carrier may be a high-frequency carrier; or, the DL carrier may be a high-frequency carrier, and the UL carrier may be a high-frequency carrier; or, the DL carrier may be an LTE carrier, and the UL carrier may be an LTE carrier.

In the embodiment of the disclosure, in the high-frequency carrier independent network and the LTE carrier independent network, one or more allocated RAE Groups (RAGs) in the time window $N_{RAE}^{sw}$ may correspond to one or more UL control channels, wherein each RAG may include at least one RAE.

In the embodiment of the disclosure, the number of the RAEs in each RAG may be 1.

In the embodiment of the disclosure, the evolved Node B may receive information transmitted on the UL control channel on the LTE carrier.

In the embodiment of the disclosure, a resource position of the UL control channel may be determined by at least one of: the resource position of the control channel for scheduling the DL transmission data resource, the semi-statically configured resource offset position of the UL control channel, the dynamic resource offset position of the UL control channel indicated in the control channel for scheduling the DL transmission data resource, the offset value corresponding to the antenna port index for sending the DL transmission data, an initial time-domain position of a DL transmission data RAE, and an initial frequency-domain position of the DL transmission data RAE.

In the embodiment of the disclosure, when the UL control channel includes Acknowledgement/Non-Acknowledgement (ACK/NACK) information: the ACK/NACK information may be fed back after corresponding DL data is received and the time window $N_{RAE}^{sw}$ ends, and set time from DL data sending to ACK/NACK reception of the evolved Node B may be R1 ms, R1 being an integer more than 0; and/or, the evolved Node B makes a predefinition that the UE feeds back the ACK/NACK information after the time window $N_{RAE}^{sw}$ ends, and set time from ending of the time window to ACK/NACK information reception of the evolved Node B may be R2ms, R2 being an integer more than 0.

In the embodiment of the disclosure, a value of R1 may be 8, and/or a value of R2 may be 4.

In the embodiment of the disclosure, the evolved Node B may indicate whether the evolved Node B has correctly received the UL data sent by the corresponding UE or not on a Physical Hybrid Automatic Repeat Request (ARQ) Indicator Channel (PHICH) of the DL carrier.

In the embodiment of the disclosure, (a) time-domain and/or frequency-domain resource(s) of the PHICH may be determined by at least one of: a resource position of a control channel for scheduling a UL service, bits in DCI for scheduling the UL service, a demodulation reference signal sequence index adopted for the UL service, a demodulation reference signal cyclic shift index adopted for the UL service, a demodulation reference signal orthogonal mask index adopted for the UL service, an initial time-domain position of the DL transmission data RAE, and the initial frequency-domain position of the DL transmission data RAE.

In the embodiment of the disclosure, in the high-frequency carrier independent network and the LTE carrier independent network, the one or more allocated RAGs in the time window $N_{RAE}^{sw}$ may correspond to a PHICH.

In the embodiment of the disclosure, the number of the RAEs in each RAG may be 1.

In the embodiment of the disclosure, when the DL carrier includes a PHICH: after receiving corresponding UL data, the PHICH is sent after the time window $N_{RAE}^{sw}$ ends, and set time from UL data scheduling to PHICH sending of the evolved Node B may be Mms, wherein M is an integer more than 0; and/or, the evolved Node B makes a predefinition that the UE receives the PHICH after the time window of the Y RAEs for sending the UL service ends, and set time from ending of the time window to reception of the PHICH is Nms, wherein N is an integer more than 0.

In the embodiment of the disclosure, a value of M may be 8; and/or a value of N may be 4.

In order to achieve the purpose, according to another embodiment of the disclosure, a method for processing dynamic resource allocation is further provided, which may include that: UE receives DL control signaling; and the UE acquires resource allocation information configured to indicate DL data and/or UL data from the DL control signaling, wherein the resource allocation information may include positions and number of RAEs, each RAE may include N transmission symbols in a time domain, and may occupy the whole bandwidth in a frequency domain, or each RAE may occupy a BP in X BPs in the frequency domain, the X BPs forming the frequency domain, N being an integer more than 0 and X being an integer more than 1.

In the embodiment of the disclosure, (a) value(s) of N and/or X may be determined in at least one of manners as follows: the value(s) of N and/or X are/is predefined; the value(s) of N and/or X are/is determined according to a system bandwidth; and the value(s) of N and/or X are/is configured through high-layer signaling.

In the embodiment of the disclosure, a time-domain duration of the N transmission symbols may be S times of 0.1 ms or 1 ms, wherein S is an integer more than 0.

In the embodiment of the disclosure, a value of S may be determined in at least one of the following manners of that: predefinition of the value of S; configuration through high-layer signaling; determination by the system bandwidth; determination by both the system bandwidth and the high-layer signaling; and determination by the system bandwidth and multiple predefined values of S.

In the embodiment of the disclosure, in an LTE and high-frequency hybrid carrier network, an LTE carrier may schedule one or more RAEs in Y RAEs on a high-frequency carrier in a cross-carrier manner for the UE to receive the DL data or send the UL data, wherein Y is an integer more than 1; or, in a high-frequency carrier independent network, a high-frequency carrier may schedule multiple RAEs in multiple time-domain elements in a time-domain element for the UE to receive the DL data or send the UL data, wherein the time-domain element may be formed by a duration of an integral number of transmission symbols; or, in an LTE carrier independent network, an LTE carrier may schedule RAEs of multiple successive time-domain elements in a time-domain element, wherein the time-domain element may be formed by a duration of an integral number of transmission symbols.

In the embodiment of the disclosure, in the LTE and high-frequency hybrid carrier network, a time-domain duration of the Y RAEs may be 1ms; or, in the high-frequency carrier independent network, the time-domain element of the high-frequency carrier may be 0.1 ms; or, in the LTE carrier independent network, the time-domain element of the LTE carrier may be 1 ms, each RAE may consist of OFDM symbols in 1 ms in the time domain, and each RAE may include one or more PRBs in the frequency domain.

In the embodiment of the disclosure, the Y RAEs may form a scheduling time window $N_{RAE}^{sw}$ in the time domain, wherein (a) value(s) of $N_{RAE}^{sw}$ and/or Y may be determined in at least one of manners as follows: an evolved Node B configures the value(s) to the UE through high-layer signaling; the evolved Node B and the UE predefine the value(s) of $N_{RAE}^{sw}$ and/or Y; and different system bandwidths are predefined to correspond to different values of $N_{RAE}^{sw}$ and/or Y

In the embodiment of the disclosure, the system bandwidth may include: a bandwidth of a carrier where the DL control signaling is located.

In the embodiment of the disclosure, in the LTE and high-frequency hybrid carrier network, the LTE carrier may schedule multiple RAEs of the high-frequency carrier for the UE to receive the DL data or send the UL data through a PDCCH and an EPDCCH.

In the embodiment of the disclosure, position(s) and number of the one or more RAEs may be indicated by bits in DCI.

In the embodiment of the disclosure, (a) time-domain position(s) and/or frequency-domain position(s) of the one or more RAEs in the time window $N_{RAE}^{sw}$ may be indicated by the bits of the DCI in the time-domain element.

In the embodiment of the disclosure, the time-domain position(s) and/or frequency-domain position(s) of the one or more RAEs may be indicated in a manner of introducing a bitmap into the DCI.

In the embodiment of the disclosure, each bit in the bitmap may represent whether the RAE at the time-domain position and/or frequency-domain position corresponding to the bit is permitted to map data.

In the embodiment of the disclosure, in a case that the bitmap only represents the time-domain positions of the RAEs, each RAE may represent a whole-bandwidth resource; and in a case that the bitmap represents the time-domain positions and frequency-domain positions of the RAEs, each bit in the bitmap may represent the positions of an RAE, wherein each RAE may have a predetermined time-domain position and frequency-domain position, and each RAE may be sequenced according to a predetermined time-domain and frequency-domain rule.

In the embodiment of the disclosure, the time-domain position(s) and/or frequency-domain position(s) of the one or more RAEs in the time window $N_{RAE}^{sw}$ may be indicated by LTE DL resource allocation bits in the DCI.

In the embodiment of the disclosure, the LTE DL resource allocation bits may include: resource allocation bits in a DL resource allocation manner of Type 0, Type 1 or Type 2.

In the embodiment of the disclosure, in a case that the resource allocation bits only represent the time-domain positions of the RAEs, each RAE represents a whole-bandwidth resource; and in a case that the resource allocation bits represent the time-domain positions and frequency-domain positions of the RAEs, each RAE may have a predetermined time-domain position and frequency-domain position, and the RAEs may be sequenced according to a predetermined time-domain and frequency-domain rule.

In the embodiment of the disclosure, the time-domain position(s) and/or frequency-domain position(s) of the one or more RAEs in the time window $N_{RAE}^{sw}$ may be indicated by LTE UL resource allocation bits in the DCI.

In the embodiment of the disclosure, the LTE UL resource allocation bits may at least include: resource allocation bits in a UL resource allocation manner of Type 0 and type 1.

In the embodiment of the disclosure, the UE may send UL control information to the evolved Node B on a UL carrier corresponding to a DL carrier.

In the embodiment of the disclosure, a resource position of the UL control information may be determined by an initial time-domain position and/or initial frequency-domain position of a DL transmission data RAE and at least one of: a resource position of a control channel for scheduling a DL transmission data resource, a semi-statically configured resource offset position of a UL control channel, a dynamic resource offset position of the UL control channel indicated in the control channel for scheduling the DL transmission data resource, and an offset value corresponding to an antenna port index for sending DL transmission data.

In the embodiment of the disclosure, the DL carrier may be a high-frequency carrier, and the UL carrier may be an LTE carrier; or, the DL carrier may be a high-frequency carrier, a UL control channel carrier may be an LTE carrier, and a UL service channel carrier may be a high-frequency carrier; or, the DL carrier may be a high-frequency carrier, and the UL carrier may be a high-frequency carrier; or, the DL carrier may be an LTE carrier, and the UL carrier may be an LTE carrier.

In the embodiment of the disclosure, in the high-frequency carrier independent network and the LTE carrier independent network, one or more allocated RAGs in the time window $N_{RAE}^{sw}$ may correspond to one or more UL control channels, wherein each RAG may include at least one RAE.

In the embodiment of the disclosure, the number of the RAEs in each RAG may be 1.

In the embodiment of the disclosure, the evolved Node B may receive information transmitted on the UL control channel on the LTE carrier.

In the embodiment of the disclosure, a resource position of the UL control channel may be determined by at least one of: the resource position of the control channel for scheduling the DL transmission data resource, the semi-statically configured resource offset position of the UL control channel, the dynamic resource offset position of the UL control channel indicated in the control channel for scheduling the DL transmission data resource, the offset value corresponding to the antenna port index for sending the DL transmission data, an initial time-domain position of a DL transmission data RAE, and an initial frequency-domain position of the DL transmission data RAE.

In the embodiment of the disclosure, when the UL control channel includes ACK/NACK information: the ACK/NACK information may be fed back after corresponding DL data is received and the time window $N_{RAE}^{sw}$ ends, and set time from DL data sending to ACK/NACK reception of the evolved Node B may be R1 ms, R1 being an integer more than 0; and/or, the evolved Node B makes a predefinition that the UE feeds back the ACK/NACK information after the time window $N_{RAE}^{sw}$ ends, and set time from ending of the time window to ACK/NACK information reception of the evolved Node B may be R2ms, R2 being an integer more than 0.

In the embodiment of the disclosure, a value of R1 may be 8, and/or a value of R2 may be 4.

In the embodiment of the disclosure, the evolved Node B may indicate whether the evolved Node B has correctly received the UL data sent by the corresponding UE or not on a PHICH of the DL carrier.

In the embodiment of the disclosure, (a) time-domain and/or frequency-domain resource(s) of the PHICH may be determined by at least one of: a resource position of a control channel for scheduling a UL service, bits in DCI for scheduling the UL service, a demodulation reference signal sequence index adopted for the UL service, a demodulation reference signal cyclic shift index adopted for the UL service, a demodulation reference signal orthogonal mask index adopted for the UL service, an initial time-domain position of the DL transmission data RAE, and the initial frequency-domain position of the DL transmission data RAE.

In the embodiment of the disclosure, in the high-frequency carrier independent network and the LTE carrier independent network, the one or more allocated RAGs in the time window $N_{RAE}^{sw}$ may correspond to a PHICH.

In the embodiment of the disclosure, the number of the RAEs in each RAG may be 1.

In the embodiment of the disclosure, when the DL carrier includes a PHICH: after receiving corresponding UL data, the PHICH is sent after the time window $N_{RAE}^{sw}$ ends, and set time from UL data scheduling to PHICH sending of the evolved Node B may be Mms, wherein M is an integer more than 0; and/or, the evolved Node B makes a predefinition that the UE receives the PHICH after the time window of the Y RAEs for sending the UL service ends, and set time from ending of the time window to reception of the PHICH is Nms, wherein N is an integer more than 0.

In the embodiment of the disclosure, a value of M may be 8; and/or a value of N may be 4.

In order to achieve the purpose, according to another embodiment of the disclosure, a device for dynamically allocating resource is further provided, which may be applied to an evolved Node B, including: an acquisition component, configured to acquire resource allocation information of DL data and/or UL data indicated by DL control signaling, wherein the resource allocation information may include positions and number of RAEs, each RAE may include N transmission symbols in a time domain, and may occupy the whole bandwidth in a frequency domain, or each RAE may occupy a BP in X BPs in the frequency domain, the X BPs forming the frequency domain, N being an integer more than 0 and X being an integer more than 1; and a sending component, configured to send the resource allocation information to UE.

In the embodiment of the disclosure, (a) value(s) of N and/or X may be determined in at least one of manners as follows: the value(s) of N and/or X are/is predefined; the value(s) of N and/or X are/is determined according to a system bandwidth; and the value(s) of N and/or X are/is configured through high-layer signaling.

In the embodiment of the disclosure, a time-domain duration of the N transmission symbols may be S times of 0.1 ms or 1 ms, wherein S is an integer more than 0.

In the embodiment of the disclosure, a value of S may be determined in at least one of the following manners of that: predefinition of the value of S; configuration through high-layer signaling; determination by the system bandwidth; determination by both the system bandwidth and the high-layer signaling; and determination by the system bandwidth and multiple predefined values of S.

In the embodiment of the disclosure, in an LTE and high-frequency hybrid carrier network, an LTE carrier may schedule one or more RAEs in Y RAEs on a high-frequency carrier in a cross-carrier manner for the UE to receive the DL data or send the UL data, wherein Y is an integer more than 1; or, in a high-frequency carrier independent network, a high-frequency carrier may schedule multiple RAEs in multiple time-domain elements in a time-domain element for the UE to receive the DL data or send the UL data, wherein the time-domain element may be formed by a duration of an integral number of transmission symbols; or, in an LTE carrier independent network, an LTE carrier may schedule RAEs of multiple successive time-domain elements in a time-domain element, wherein the time-domain element may be formed by a duration of an integral number of transmission symbols.

In the embodiment of the disclosure, in the LTE and high-frequency hybrid carrier network, a time-domain duration of the Y RAEs may be 1ms; or, in the high-frequency carrier independent network, the time-domain element of the high-frequency carrier may be 0.1 ms; or, in the LTE carrier independent network, the time-domain element of the LTE carrier may be 1 ms, each RAE may consist of OFDM symbols in 1 ms in the time domain, and each RAE may include one or more PRBs in the frequency domain.

In the embodiment of the disclosure, the Y RAEs may form a scheduling time window $N_{RAE}^{sw}$ in the time domain, wherein (a) value(s) of $N_{RAE}^{sw}$ and/or Y may be determined in at least one of manners as follows: the evolved Node B configures the value(s) to the UE through high-layer signaling; the evolved Node B and the UE predefine the value(s) of $N_{RAE}^{sw}$ and/or Y; and different system bandwidths are predefined to correspond to different values of $N_{RAE}^{sw}$ and/or Y

In the embodiment of the disclosure, the system bandwidth may include: a bandwidth of a carrier where the DL control signaling is located.

In order to achieve the purpose, according to another embodiment of the disclosure, a device for processing dynamic resource allocation is further provided, which may be applied to UE, including: a receiving component, configured to receive DL control signaling; and an acquisition component, configured to acquire resource allocation information configured to indicate DL data and/or UL data from the DL control signaling, wherein the resource allocation information may include positions and number of RAEs, each RAE may include N transmission symbols in a time domain, and may occupy the whole bandwidth in a frequency domain, or each RAE may occupy a BP in X BPs in the frequency domain, the X BPs forming the frequency domain, N being an integer more than 0 and X being an integer more than 1.

In the embodiment of the disclosure, (a) value(s) of N and/or X may be determined in at least one of manners as follows: the value(s) of N and/or X are/is predefined; the value(s) of N and/or X are/is determined according to a system bandwidth; and the value(s) of N and/or X are/is configured through high-layer signaling.

In the embodiment of the disclosure, a time-domain duration of the N transmission symbols may be S times of 0.1 ms or 1 ms, wherein S is an integer more than 0.

In the embodiment of the disclosure, a value of S may be determined in at least one of the following manners of that: predefinition of the value of S; configuration through high-layer signaling; determination by the system bandwidth; determination by both the system bandwidth and the high-layer signaling; and determination by the system bandwidth and multiple predefined values of S.

In the embodiment of the disclosure, in an LTE and high-frequency hybrid carrier network, an LTE carrier may schedule one or more RAEs in Y RAEs on a high-frequency carrier in a cross-carrier manner for the UE to receive the DL data or send the UL data, wherein Y is an integer more than 1; or

in a high-frequency carrier independent network, a high-frequency carrier may schedule multiple RAEs in multiple time-domain elements in a time-domain element for the UE to receive the DL data or send the UL data, wherein the time-domain element may be formed by a duration of an integral number of transmission symbols; or

in an LTE carrier independent network, an LTE carrier may schedule RAEs of multiple successive time-domain elements in a time-domain element, wherein the time-domain element may be formed by a duration of an integral number of transmission symbols.

In the embodiment of the disclosure, in the LTE and high-frequency hybrid carrier network, a time-domain duration of the Y RAEs may be 1ms; or, in the high-frequency carrier independent network, the time-domain element of the high-frequency carrier may be 0.1 ms; or, in the LTE carrier independent network, the time-domain element of the LTE carrier may be 1 ms, each RAE may consist of OFDM symbols in 1 ms in the time domain, and each RAE may include one or more PRBs in the frequency domain.

In the embodiment of the disclosure, the Y RAEs may form a scheduling time window $N_{RAE}^{sw}$ in the time domain, wherein (a) value(s) of $N_{RAE}^{sw}$ and/or Y may be determined in at least one of manners as follows: an evolved Node B configures the value(s) to the UE through high-layer signaling; the evolved Node B and the UE predefine the value(s) of $N_{RAE}^{sw}$ and/or Y; and different system bandwidths are predefined to correspond to different values of $N_{RAE}^{sw}$ and/or Y.

In the embodiment of the disclosure, the system bandwidth may include: a bandwidth of a carrier where the DL control signaling is located.

In order to achieve the purpose, according to another embodiment of the disclosure, an evolved Node B is further provided, which may include: the abovementioned device for dynamically allocating resource.

In order to achieve the purpose, according to another embodiment of the disclosure, UE is further provided, which may include: the abovementioned device for processing dynamic resource allocation.

According to the embodiments of the disclosure, the technical means that the evolved Node B indicates the resource allocation information of the DL data and/or the UL data by virtue of the DL control signaling is adopted, so that the problems of incapability in utilizing an LTE control channel to schedule multiple transmission symbols on a high-frequency carrier for DL service and UL service transmission, high control signaling overhead in LTE carrier and high-frequency carrier independent networks and the like in the related technology are solved, cross-carrier scheduling of the LTE carrier over the high-frequency carrier is implemented, and moreover, in the LTE carrier and high-frequency carrier independent networks, the control signaling overhead may be reduced.

## Brief Description of the Drawings

The drawings described here are adopted to provide further understanding of the disclosure, and form a part of the disclosure. Schematic embodiments of the disclosure and descriptions thereof are adopted to explain the disclosure and not intended to form improper limits to the disclosure. In the drawings:

Fig. 1 is a flowchart of a method for dynamically allocating resource according to an embodiment of the disclosure;
Fig. 2 is a structure block diagram of a device for dynamically allocating resource according to an embodiment of the disclosure;
Fig. 3 is a flowchart of a method for processing dynamic resource allocation according to an embodiment of the disclosure;
Fig. 4 is a structure block diagram of a device for processing dynamic resource allocation according to an embodiment of the disclosure;
Fig. 5 is a diagram of cross-carrier scheduling of an LTE Release 12 (R12) carrier over a high-frequency carrier for data transmission according to an embodiment of the disclosure;
Fig. 6 is a diagram of high-frequency carrier scheduling for data transmission according to an embodiment of the disclosure;
Fig. 7 is a diagram of scheduling resources scheduled by multiple time-domain elements for DL transmission resources or UL transmission resources in a time-domain element by a Carrier Component (CC) according to an embodiment of the disclosure;
Fig. 8 is a diagram of resources corresponding to transmission time-domain elements and corresponding to feedback of UL ACK/NACK information when a CC schedules multiple time-domain elements for UL transmission in a time-domain element according to an embodiment of the disclosure;
Fig. 9 is a diagram of a timing relationship between reception of corresponding DL data and feedback of ACK information when CC0 schedules CC1 in a cross-carrier manner according to an embodiment of the disclosure;
Fig. 10 is a diagram of resources corresponding to transmission time-domain elements and corresponding to feedback of UL ACK/NACK information when CC0 schedules CC1 in a cross-carrier manner and CC0 schedules multiple time-domain elements of CC1 for UL transmission in a time-domain element according to an embodiment of the disclosure;
Fig. 11 is a diagram of a timing relationship between reception of corresponding DL data and feedback of ACK information when an LTE compatible carrier CC0 schedules a high-frequency carrier CC1 in a cross-carrier manner according to an embodiment of the disclosure; and
Fig. 12 is a diagram of resources corresponding to transmission time-domain elements and corresponding to feedback of UL ACK/NACK information when an LTE compatible carrier CC0 schedules a high-frequency carrier CC1 in a cross-carrier manner and CC0 schedules multiple time-domain elements of CC1 for UL transmission in a time-domain element according to an embodiment of the disclosure.

## Detailed Description of the Embodiments

The disclosure will be described below with reference to the drawings and embodiments in detail. It is important to note that an LTE compatible carrier is smaller than a carrier of a 4th-Generation (4G) carrier frequency band, a high-frequency carrier is more than or equal to the carrier of the 4G frequency band, and the embodiments in the disclosure and characteristics in the embodiments may be combined under the condition of no conflicts.

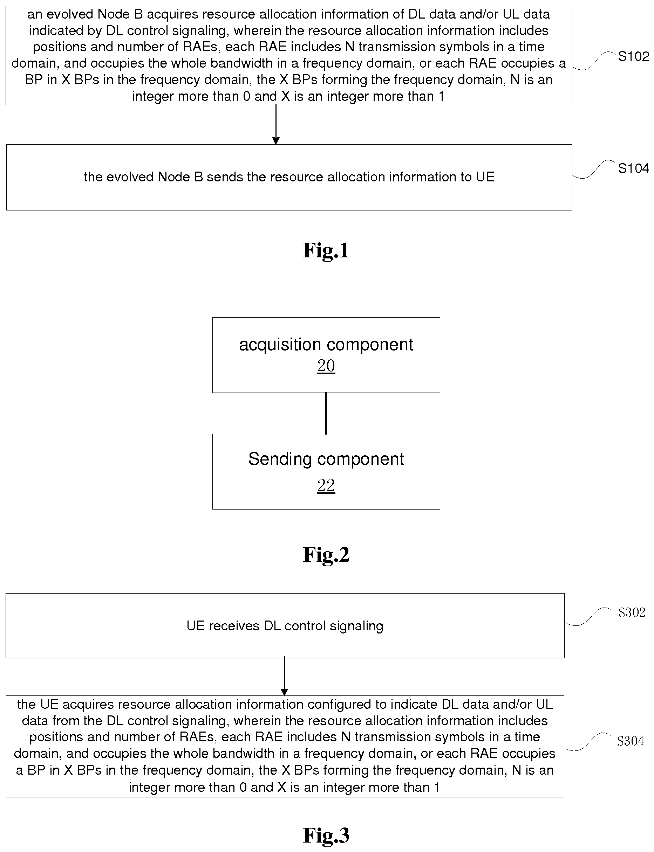

Fig. 1 is a flowchart of a method for dynamically allocating resource according to an embodiment of the disclosure. As shown in Fig. 1, the method includes:

Step 102: an evolved Node B acquires resource allocation information of DL data and/or UL data indicated by DL control signaling, wherein the resource allocation information includes positions and number of RAEs, the RAEs include N transmission symbols in a time domain, and occupy the whole bandwidth in a frequency domain, or each RAE occupies a BP in X BPs in the frequency domain, the X BPs forming the frequency domain, N is an integer more than 0 and X is an integer more than 1; and
Step 104: the evolved Node B sends the resource allocation information to UE.

The solution provided by the abovementioned processing steps may be adopted for both an LTE and high-frequency hybrid carrier network and an LTE carrier independent network or a high-frequency carrier independent network. Moreover, the resource allocation information of the DL data and/or the UL data is indicated by virtue of the DL control signaling, so that cross-carrier scheduling in the hybrid carrier network may be implemented, and control signaling may be saved in the LTE carrier independent network or the high-frequency carrier independent network.

In the embodiment, (a) value(s) of N and/or X may be determined in multiple manners, and for example, may be determined in at least one of manners as follows:

(1) the value(s) of N and/or X are/is predefined; (2) the value(s) of N and/or X are/is determined according to a system bandwidth; and (3) the value(s) of N and/or X are/is configured through high-layer signaling.

In the embodiment, a time-domain duration of the N transmission symbols is S times of 0.1 ms or 1 ms, wherein S is an integer more than 0. In the embodiment of the disclosure, a value of S is 1.

In a preferred implementation mode of the embodiment, the value of S is determined in at least one of the following manners of that: predefinition of the value of S; configuration through high-layer signaling; determination by the system bandwidth; determination by both the system bandwidth and the high-layer signaling; and determination by the system bandwidth and multiple predefined values of S. In the embodiment of the disclosure, there exist S bandwidth configurations corresponding to S values in a system, wherein each bandwidth configuration corresponds to an S value.

In the embodiment of the disclosure, in the LTE and high-frequency hybrid carrier network, The UE is scheduled, by an LTE carrier in a cross-carrier manner, to receive DL data or send UL data on one or more RAEs among Y RAEs on a high-frequency carrier, wherein Y is an integer more than 1; or

in the high-frequency carrier independent network, The UE is scheduled, by a high-frequency carrier in one time-domain element, to receive DL data or send UL data on multiple RAEs in multiple time-domain elements, wherein the time-domain element is formed by a duration of an integral number of transmission symbols; or

in the LTE carrier independent network, an LTE carrier schedules RAEs of multiple successive time-domain elements in a time-domain element, wherein the time-domain element is formed by a duration of an integral number of transmission symbols.

In a preferred implementation mode of the embodiment, the evolved Node B receives UL control information sent by the UE on a UL carrier corresponding to a DL carrier. A resource position of the UL control information is determined by an initial time-domain position and/or initial frequency-domain position of a DL transmission data RAE and at least one of: a resource position of a control channel for scheduling a DL transmission data resource, a semi-statically configured resource offset position of a UL control channel, a dynamic resource offset position of the UL control channel indicated in the control channel for scheduling the DL transmission data resource, and an offset value corresponding to an antenna port index for sending DL transmission data.

Wherein, for the DL carrier or the UL carrier, there may exist the following conditions: the DL carrier is a high-frequency carrier, and the UL carrier is an LTE carrier; or, the DL carrier is a high-frequency carrier, a UL control channel carrier is an LTE carrier, and a UL service channel carrier is a high-frequency carrier; or, the DL carrier is a high-frequency carrier, and the UL carrier is a high-frequency carrier; or, the DL carrier is an LTE carrier, and the UL carrier is an LTE carrier.

In a preferred implementation mode of the embodiment, in the LTE and high-frequency hybrid carrier network, a time-domain duration of the Y RAEs is 1 ms; or, in the high-frequency carrier independent network, the time-domain element of the high-frequency carrier is 0.1 ms; or, in the LTE carrier independent network, the time-domain element of the LTE carrier is 1 ms (i.e. a subframe), each RAE consists of OFDM symbols in 1 ms in the time domain, and each RAE includes one or more PRBs in the frequency domain.

Wherein, the Y RAEs form a scheduling time window $N_{RAE}^{sw}$ in the time domain, wherein (a) value(s) of $N_{RAE}^{sw}$ and/or Y may be determined in at least one of manners as follows:

the evolved Node B configures the value(s) to the UE through high-layer signaling; the evolved Node B and the UE predefine the value(s) of $N_{RAE}^{sw}$ and/or Y; and different system bandwidths are predefined to correspond to different values of $N_{RAE}^{sw}$ and/or Y The system bandwidth includes: a bandwidth of a carrier where the DL control signaling is located, i.e. a bandwidth of the scheduling carrier.

In the LTE and high-frequency hybrid carrier network, the UE is scheduled, by the LTE carrier via a Physical Downlink Control Channel (PDCCH) and an Evolved Physical Downlink Control Channel (EPDCCH) the DL data or send the UL data through a PDCCH and an EPDCCH.

In the embodiment of the disclosure, position(s) and number of the one or more RAEs are indicated by bits in DCI.

In the embodiment of the disclosure, (a) time-domain position(s) and/or frequency-domain position(s) of the one or more RAEs in the time window $N_{RAE}^{sw}$ are/is indicated by the bits of the DCI in the time-domain element. For example, the time-domain position(s) and/or frequency-domain position(s) of the one or more RAEs are/is indicated in a manner of introducing a bitmap into the DCI. Each bit in the bitmap represents whether the RAE at the time-domain position and/or frequency-domain position corresponding to the bit is permitted to map data. In a case that the bitmap only represents the time-domain positions of the RAEs, each RAE represents a whole-bandwidth resource; and in a case that the bitmap represents the time-domain positions and frequency-domain positions of the RAEs, each bit in the bitmap represents the positions of one RAE, wherein each RAE has a predetermined time-domain position and frequency-domain position, and each RAE is sequenced according to a predetermined time-domain and frequency-domain rule.

In the embodiment, the time-domain position(s) and/or frequency-domain position(s) of the one or more RAEs in the time window $N_{RAE}^{sw}$ may also be indicated by LTE DL resource allocation bits in the DCI. At this moment, the LTE DL resource allocation bits include: resource allocation bits in a DL resource allocation manner of Type 0, Type 1 or Type 2. In a case that the resource allocation bits only represent the time-domain positions of the RAEs, each RAE represent a whole-bandwidth resource; and in a case that the resource allocation bits represent the time-domain positions and frequency-domain positions of the RAEs, each RAE has a predetermined time-domain position and frequency-domain position, and the RAEs are sequenced according to a predetermined time-domain and frequency-domain rule (In the embodiment of the disclosure, the RAEs may be sequenced according to rule of time domain after frequency domain).

In the embodiment of the disclosure, the time-domain position(s) and/or frequency-domain position(s) of the one or more RAEs in the time window $N_{RAE}^{sw}$ may also be indicated by LTE UL resource allocation bits in the DCI. At this moment, the LTE UL resource allocation bits at least include: resource allocation bits in a UL resource allocation manner of Type 0 and type 1.

In the embodiment, in the high-frequency carrier independent network and the LTE carrier independent network, one or more allocated RAGs in the time window $N_{RAE}^{sw}$ correspond to one or more UL control channels, wherein each RAG includes at least one RAE. In the embodiment of the disclosure, the number of the RAEs in each RAG is 1.

In a preferred embodiment, the evolved Node B may also receive information transmitted on the UL control channel on the LTE carrier, wherein a resource position of the UL control channel is determined by at least one of:

the resource position of the control channel for scheduling the DL transmission data resource, the semi-statically configured resource offset position of the UL control channel, the dynamic resource offset position of the UL control channel indicated in the control channel for scheduling the DL transmission data resource, the offset value corresponding to the antenna port index for sending the DL transmission data, an initial time-domain position of a DL transmission data RAE, and an initial frequency-domain position of the DL transmission data RAE.

In a preferred embodiment, when the UL control channel includes ACK/NACK information: the ACK/NACK information is fed back after corresponding DL data is received and the time window $N_{RAE}^{sw}$ ends, and an interval from start of DL data sending to ACK/NACK reception of the evolved Node B is set to R1 ms, R1 being an integer more than 0; and/or, the evolved Node B makes a predefinition that the UE feeds back the ACK/NACK information after the time window $N_{RAE}^{sw}$ ends, and set time from ending of the time window to ACK/NACK information reception of the evolved Node B may be R2ms, R2 being an integer more than 0.

A value of R1 may be 8, and/or a value of R2 may be 4, and there are no limits.

In another preferred embodiment, the evolved Node B indicates whether the evolved Node B has correctly received the UL data sent by the corresponding UE or not on a PHICH of the DL carrier. At this moment, (a) time-domain and/or frequency-domain resource(s) of the PHICH are/is determined by at least one of: a resource position of a control channel for scheduling a UL service, bits in DCI for scheduling the UL service, a demodulation reference signal sequence index adopted for the UL service, a demodulation reference signal cyclic shift index adopted for the UL service, a demodulation reference signal orthogonal mask index adopted for the UL service, an initial time-domain position of the DL transmission data RAE, and the initial frequency-domain position of the DL transmission data RAE.

In the embodiment, in the high-frequency carrier independent network and the LTE carrier independent network, the one or more allocated RAGs in the time window $N_{RAE}^{sw}$ correspond to a PHICH. In the embodiment of the disclosure, the number of the RAEs in each RAG is 1.

When the DL carrier includes a PHICH: after receiving corresponding UL data, the PHICH is sent after the time window $N_{RAE}^{sw}$ ends, and set time from UL data scheduling to PHICH sending of the evolved Node B is Mms, wherein M is an integer more than 0; and/or, the evolved Node B makes a predefinition that the UE receives the PHICH after the time window of the Y RAEs for sending the UL service ends, and set time from ending of the time window to reception of the PHICH is Nms, wherein N is an integer more than 0. In the embodiment of the disclosure, a value of M is 8; and/or a value of N is 4.

The embodiment further provides a device for dynamically allocating resource , which is applied to an evolved Node B, and as shown in Fig. 2, the device includes:

an acquisition component 20, configured to acquire resource allocation information of DL data and/or UL data indicated by DL control signaling, wherein the resource allocation information includes positions and number of RAEs, the RAEs include N transmission symbols in a time domain, and occupy the whole bandwidth in a frequency domain, or each RAE occupies a BP in X BPs in the frequency domain, the X BPs forming the frequency domain, N being an integer more than 0 and X being an integer more than 1; and a sending component 22, connected to the sending component and configured to send the resource allocation information to UE.

By functions realized by each of the abovementioned components, cross-carrier scheduling may also be implemented in a hybrid carrier network, and control signaling may also be saved in an LTE carrier independent network or a high-frequency carrier independent network.

(A) value(s) of N and/or X are/is determined in at least one of manners as follows: the value(s) of N and/or X are/is predefined; the value(s) of N and/or X are/is determined according to a system bandwidth; and the value(s) of N and/or X are/is configured through high-layer signaling.

A time-domain duration of the N transmission symbols is S times of 0.1 ms or 1 ms, wherein S is an integer more than 0.

A value of S is determined in at least one of the following manners of that: predefinition of the value of S; configuration through high-layer signaling; determination by the system bandwidth; determination by both the system bandwidth and the high-layer signaling; and determination by the system bandwidth and multiple predefined values of S.

The acquisition component 20 is further configured to acquire the resource allocation information under the following conditions: in an LTE and high-frequency hybrid carrier network, The UE is scheduled, by an LTE carrier in a cross-carrier manner, to receive DL data or send UL data on one or more RAEs among Y RAEs on a high-frequency carrier, wherein Y is an integer more than 1; or in a high-frequency carrier independent network, The UE is scheduled, by a high-frequency carrier in one time-domain element, to receive DL data or send UL data on multiple RAEs in multiple time-domain elements, wherein the time-domain element is formed by a duration of an integral number of transmission symbols; or in an LTE carrier independent network, an LTE carrier schedules RAEs of multiple successive time-domain elements in a time-domain element, wherein the time-domain element is formed by a duration of an integral number of transmission symbols.

The acquisition component 20 is further configured to acquire the resource allocation information under the following conditions: in the LTE and high-frequency hybrid carrier network, a time-domain duration of the Y RAEs is 1 ms; or, in the high-frequency carrier independent network, the time-domain element of the high-frequency carrier is 0.1 ms; or, in the LTE carrier independent network, the time-domain element of the LTE carrier is 1 ms, each RAE consists of OFDM symbols in 1ms in the time domain, and each RAE includes one or more PRBs in the frequency domain.

The acquisition component 20 is further configured to acquire the resource allocation information when the Y RAEs form a scheduling time window $N_{RAE}^{sw}$ in the time domain, wherein (a) value(s) of $N_{RAE}^{sw}$ and/or Y may be determined in at least one of manners as follows: the evolved Node B configures the value(s) to the UE through high-layer signaling; the evolved Node B and the UE predefine the value(s) of $N_{RAE}^{sw}$ and/or Y; and different system bandwidths are predefined to correspond to different values of $N_{RAE}^{sw}$ and/or Y, wherein the system bandwidth includes, but not limited to: a bandwidth of a carrier where the DL control signaling is located.

The embodiment further provides an evolved Node B, which includes: the abovementioned device for dynamically allocating resource.

The embodiment further provides a method for processing dynamic resource allocation, and as shown in Fig. 3, the method includes:

Step 302: UE receives DL control signaling; and
Step 304: the UE acquires resource allocation information configured to indicate DL data and/or UL data from the DL control signaling, wherein the resource allocation information includes positions and number of RAEs, the RAEs include N transmission symbols in a time domain, and occupy the whole bandwidth in a frequency domain, or each RAE occupies a BP in X BPs in the frequency domain, the X BPs forming the frequency domain, N is an integer more than 0 and X is an integer more than 1.

In the embodiment of the disclosure, (a) value(s) of N and/or X are/is determined in at least one of manners as follows: the value(s) of N and/or X are/is predefined; the value(s) of N and/or X are/is determined according to a system bandwidth; and the value(s) of N and/or X are/is configured through high-layer signaling.

In the embodiment of the disclosure, a time-domain duration of the N transmission symbols is S times of 0.1 ms or 1 ms, wherein S is an integer more than 0. A value of S may be determined in at least one of the following manners of that:

predefinition of the value of S; configuration through high-layer signaling; determination by the system bandwidth; determination by both the system bandwidth and the high-layer signaling; and determination by the system bandwidth and multiple predefined values of S.

In the embodiment, in an LTE and high-frequency hybrid carrier network, The UE is scheduled, by an LTE carrier in a cross-carrier manner, to receive DL data or send UL data on one or more RAEs among Y RAEs on a high-frequency carrier, wherein Y is an integer more than 1; or

in a high-frequency carrier independent network, The UE is scheduled, by a high-frequency carrier in one time-domain element, to receive DL data or send UL data on multiple RAEs in multiple time-domain elements, wherein the time-domain element is formed by a duration of an integral number of transmission symbols; or

in an LTE carrier independent network, an LTE carrier schedules RAEs of multiple successive time-domain elements in a time-domain element, wherein the time-domain element is formed by a duration of an integral number of transmission symbols.

In the embodiment, in the LTE and high-frequency hybrid carrier network, a time-domain duration of the Y RAEs is 1ms; or, in the high-frequency carrier independent network, the time-domain element of the high-frequency carrier is 0.1 ms; or, in the LTE carrier independent network, the time-domain element of the LTE carrier is 1 ms, each RAE consists of OFDM symbols in 1 ms in the time domain, and each RAE includes one or more PRBs in the frequency domain.

It is important to note that the acquisition component 20 and the sending component 22 may be implemented by software components, and may also be implemented by hardware, and for the latter, the following implementation manners may be adopted without limits: the acquisition component 20 is positioned in a first processor, and the sending component 22 is positioned in a second processor; or, the acquisition component 20 and the sending component 22 are positioned in the same processor.

In a preferred implementation mode of the embodiment, the Y RAEs form a scheduling time window $N_{RAE}^{sw}$ in the time domain, wherein (a) value(s) of $N_{RAE}^{sw}$ and/or Y may be determined in at least one of manners as follows: an evolved Node B configures the value(s) to the UE through high-layer signaling; the evolved Node B and the UE predefine the value(s) of $N_{RAE}^{sw}$ and/or Y; and different system bandwidths are predefined to correspond to different values of $N_{RAE}^{sw}$ and/or Y. In the embodiment of the disclosure, the system bandwidth includes: a bandwidth of a carrier where the DL control signaling is located.

In the LTE and high-frequency hybrid carrier network, the UE is scheduled, by the LTE carrier via a Physical Downlink Control Channel (PDCCH) and an Evolved Physical Downlink Control Channel (EPDCCH) the DL data or send the UL data through a PDCCH and an EPDCCH. In the embodiment of the disclosure, position(s) and number of the one or more RAEs may be indicated by bits in DCI.

In the embodiment, (a) time-domain position(s) and/or frequency-domain position(s) of the one or more RAEs in the time window $N_{RAE}^{sw}$ may also be indicated by the bits of the DCI in the time-domain element. In the embodiment of the disclosure, the time-domain position(s) and/or frequency-domain position(s) of the one or more RAEs are indicated in a manner of introducing a bitmap into the DCI.

Each bit in the bitmap may represent whether the RAE at the time-domain position and/or frequency-domain position corresponding to the bit is permitted to map data. In a case that the bitmap only represents the time-domain positions of the RAEs, each RAE represents a whole-bandwidth resource; and in a case that the bitmap represents the time-domain positions and frequency-domain positions of the RAEs, each bit in the bitmap represents the positions of one RAE, wherein each RAE has a predetermined time-domain position and frequency-domain position, and each RAE is sequenced according to a predetermined time-domain and frequency-domain rule.

In the embodiment, the time-domain position(s) and/or frequency-domain position(s) of the one or more RAEs in the time window $N_{RAE}^{sw}$ may be indicated by LTE DL resource allocation bits in the DCI. The LTE DL resource allocation bits include: resource allocation bits in a DL resource allocation manner of Type 0, Type 1 or Type 2. In a case that the resource allocation bits only represent the time-domain positions of the RAEs, each RAE represent a whole-bandwidth resource; and in a case that the resource allocation bits represent the time-domain positions and frequency-domain positions of the RAEs, each RAE has a predetermined time-domain position and frequency-domain position, and the RAEs are sequenced according to a predetermined time-domain and frequency-domain rule.

The time-domain position(s) and/or frequency-domain position(s) of the one or more RAEs in the time window $N_{RAE}^{sw}$ may be indicated by LTE UL resource allocation bits in the DCI. The LTE UL resource allocation bits at least include: resource allocation bits in a UL resource allocation manner of Type 0 and type 1.

The UE may send UL control information to the evolved Node B on a UL carrier corresponding to a DL carrier.

A resource position of the UL control information is determined by an initial time-domain position and/or initial frequency-domain position of a DL transmission data RAE and at least one of:

a resource position of a control channel for scheduling a DL transmission data resource, a semi-statically configured resource offset position of a UL control channel, a dynamic resource offset position of the UL control channel indicated in the control channel for scheduling the DL transmission data resource, and an offset value corresponding to an antenna port index for sending DL transmission data.

Wherein, the DL carrier is a high-frequency carrier, and the UL carrier is an LTE carrier; or, the DL carrier is a high-frequency carrier, a UL control channel carrier is an LTE carrier, and a UL service channel carrier is a high-frequency carrier; or, the DL carrier is a high-frequency carrier, and the UL carrier is a high-frequency carrier; or, the DL carrier is an LTE carrier, and the UL carrier is an LTE carrier.

In the high-frequency carrier independent network and the LTE carrier independent network, one or more allocated RAGs in the time window $N_{RAE}^{sw}$ correspond to one or more UL control channels, wherein each RAG includes at least one RAE. In the embodiment of the disclosure, the number of the RAEs in each RAG is 1.

The evolved Node B receives information transmitted on the UL control channel on the LTE carrier. A resource position of the UL control channel is determined by at least one of:

the resource position of the control channel for scheduling the DL transmission data resource, the semi-statically configured resource offset position of the UL control channel, the dynamic resource offset position of the UL control channel indicated in the control channel for scheduling the DL transmission data resource, the offset value corresponding to the antenna port index for sending the DL transmission data, an initial time-domain position of a DL transmission data RAE, and an initial frequency-domain position of the DL transmission data RAE.

When the UL control channel includes ACK/NACK information: the ACK/NACK information is fed back after corresponding DL data is received and the time window $N_{RAE}^{sw}$ ends, and an interval from start of DL data sending to ACK/NACK reception of the evolved Node B is set to R1 ms, R1 being an integer more than 0; and/or, the evolved Node B makes a predefinition that the UE feeds back the ACK/NACK information after the time window $N_{RAE}^{sw}$ ends, and an interval from start of DL data sending to ACK/NACK information reception of the evolved Node B is R2ms, R2 being an integer more than 0. In the embodiment of the disclosure, a value of R1 is 8, and/or a value of R2 is 4.

The evolved Node B indicates whether the evolved Node B has correctly received the UL data sent by the corresponding UE or not on a PHICH of the DL carrier. (A) time-domain and/or frequency-domain resource(s) of the PHICH are/is determined by at least one of: a resource position of a control channel for scheduling a UL service, bits in DCI for scheduling the UL service, a demodulation reference signal sequence index adopted for the UL service, a demodulation reference signal cyclic shift index adopted for the UL service, a demodulation reference signal orthogonal mask index adopted for the UL service, an initial time-domain position of the DL transmission data RAE, and the initial frequency-domain position of the DL transmission data RAE.

In the high-frequency carrier independent network and the LTE carrier independent network, the one or more allocated RAGs in the time window $N_{RAE}^{sw}$ correspond to a PHICH. In the embodiment of the disclosure, the number of the RAEs in each RAG is 1.

When the DL carrier includes a PHICH: after receiving corresponding UL data, the PHICH is sent after the time window $N_{RAE}^{sw}$ ends, and set time from UL data scheduling to PHICH sending of the evolved Node B is Mms, wherein M is an integer more than 0; and/or, the evolved Node B makes a predefinition that the UE receives the PHICH after the time window of the Y RAEs for sending the UL service ends, and set time from ending of the time window to reception of the PHICH is Nms, wherein N is an integer more than 0. In the embodiment of the disclosure, a value of M is 8; and/or a value of N is 4.

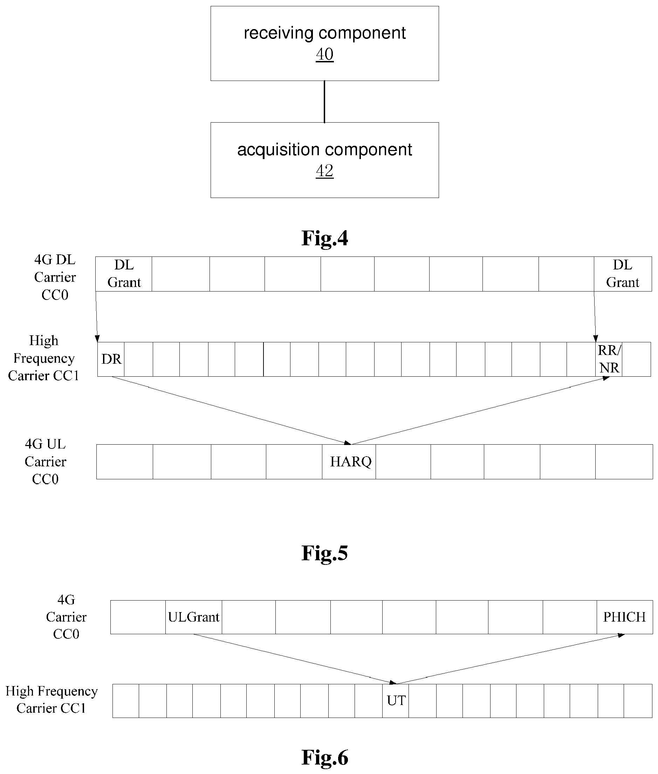

The embodiment further provides a device for processing dynamic resource allocation, which is applied to UE, and as shown in Fig. 4, the device includes: a receiving component 40, configured to receive DL control signaling; and an acquisition component 42, configured to acquire resource allocation information configured to indicate DL data and/or UL data from the DL control signaling, wherein the resource allocation information includes positions and number of RAEs, the RAEs include N transmission symbols in a time domain, and occupy the whole bandwidth in a frequency domain, or each RAE occupies a BP in X BPs in the frequency domain, the X BPs forming the frequency domain, N being an integer more than 0 and X being an integer more than 1.

(A) value(s) of N and/or X are/is determined in at least one of manners as follows: the value(s) of N and/or X are/is predefined; the value(s) of N and/or X are/is determined according to a system bandwidth; and the value(s) of N and/or X are/is configured through high-layer signaling.

The receiving component 40 is further configured to receive the resource allocation information under the following conditions: a time-domain duration of the N transmission symbols is S times of 0.1 ms or 1 ms, wherein S is an integer more than 0. In the embodiment of the disclosure, a value of S may be determined in at least one of the following manners of that:

predefinition of the value of S; configuration through high-layer signaling; determination by the system bandwidth; determination by both the system bandwidth and the high-layer signaling; and determination by the system bandwidth and multiple predefined values of S.

The receiving component 40 is further configured to receive the resource allocation information under the following conditions: in an LTE and high-frequency hybrid carrier network, The UE is scheduled, by an LTE carrier in a cross-carrier manner, to receive DL data or send UL data on one or more RAEs among Y RAEs on a high-frequency carrier, wherein Y is an integer more than 1; or

the Y RAEs form a scheduling time window $N_{RAE}^{sw}$ in the time domain, wherein (a) value(s) of $N_{RAE}^{sw}$ and/or Y may be determined in at least one of manners as follows:

an evolved Node B configures the value(s) to the UE through high-layer signaling;

the evolved Node B and the UE predefine the value(s) of $N_{RAE}^{sw}$ and/or Y; and

different system bandwidths are predefined to correspond to different values of $N_{RAE}^{sw}$ and/or Y. The system bandwidth includes: a bandwidth of a carrier where the DL control signaling is located.

In a high-frequency carrier independent network, The UE is scheduled, by a high-frequency carrier in one time-domain element, to receive DL data or send UL data on multiple RAEs in multiple time-domain elements, wherein the time-domain element is formed by a duration of an integral number of transmission symbols; or

in an LTE carrier independent network, an LTE carrier schedules RAEs of multiple successive time-domain elements in a time-domain element, wherein the time-domain element is formed by a duration of an integral number of transmission symbols.

In the embodiment of the disclosure, in the LTE and high-frequency hybrid carrier network, a time-domain duration of the Y RAEs is 1 ms; or, in the high-frequency carrier independent network, the time-domain element of the high-frequency carrier is 0.1 ms; or, in the LTE carrier independent network, the time-domain element of the LTE carrier is 1 ms, each RAE consists of OFDM symbols in 1ms in the time domain, and each RAE includes one or more PRBs in the frequency domain.

It is important to note that the receiving component 40 and acquisition component 42 in the device may be implemented by software or hardware, and for the latter, the following implementation manners may be adopted without limits: the receiving component 40 is positioned in a first processor, and the acquisition component 42 is positioned in a second processor; or, the receiving component 40 and the acquisition component 42 are positioned in the same processor.

The embodiment further provides UE, which includes: the abovementioned device for processing dynamic resource allocation.

In order to make the embodiment better understood, further descriptions will be made below with reference to the drawings and related embodiments. The PHICH in the embodiment is only adopted to represent a feedback, given to the UE, about whether the evolved Node B has correctly received a UL data indicator channel sent by the UE or not and not intended to limit the embodiment of the disclosure. In addition, the DL resource allocation manner Type 0/1/2 mentioned in the following embodiments may refer to chapter contents of LTE 3rd Generation Partnership Project (3GPP) 36.213 c00 7.1.6, and the UL resource allocation manner Type 0/1 may refer to chapter contents of LTE 3GPP 36.213 c00 8.1. In the embodiment of the disclosure, the transmission symbols in the embodiment of the disclosure may be OFDM symbols. The DCI is only adopted to represent control signaling indicating DL scheduling and UL scheduling control information, and is namely information capable of realizing the abovementioned functions, and the information is not limited by names.

Embodiment 1

It is supposed that at least two CCs are linked with UE1, the two CCs may be positioned in the same node TP0 or positioned in two different nodes TP1 and TP2, and TP1 and TP2 are linked through an ideal backhaul (the backhaul has a short time delay), wherein an LTE R12 CC is set to be CC0, and a high-frequency CC is set to be CC1. When an evolved Node B is intended to send DL data to UE1 on CC1 and expects correct reception of UE1, the evolved Node B sends corresponding DL control indication signaling on CC0 to indicate a time-domain resource position of the DL data corresponding to UE1 on CC, as shown in Fig. 5, wherein it is supposed that CC0 is a 4G LTE carrier, and CC1 is a high-frequency carrier. DR refers to that UE1 receives the DL data on CC1, HARQ refers to that UE1 feeds back HARQ information for the DL data on a UL carrier corresponding to CC0, RR refers to that UE1 receives retransmitted DL data on the high-frequency carrier, and NR refers to that UE1 receives newly transmitted DL data on the high-frequency carrier.

Sub-embodiment 1

The evolved Node B indicates the number of corresponding DL data RAEs by virtue of DL control indication signaling in a predetermined manner. The RAEs consist of N (N>0) transmission symbols in a time domain, and a manner of predefining an N value may be adopted for a value of N. In the embodiment of the disclosure, the predefined N value is one of the following values: 24, 28, 30, 32, 40 and 42. Or, a time-domain duration of the N transmission symbols is predefined to be 0.1 ms.

The evolved Node B schedules UE1 to receive the DL data on one or more corresponding RAEs on the DL carrier corresponding to CC1 through DL grant signaling on the DL carrier corresponding to 4G CC0.

When a maximum scheduling time window of a DL grant is $N_{RAE}^{sw}$ and $N_{RAE}^{sw}$ includes Y RAEs, the evolved Node B indicates UE1 to receive the DL data on one or more RAEs in the Y RAEs. In the embodiment of the disclosure, a value of Y is 10, or the value of Y is the number of the RAEs in 1 ms in the time domain.

In the embodiment of the disclosure, when a first resource allocation manner (similar to a DL resource allocation manner 0 of LTE R12) is adopted in the DL grant, it is necessary to divide multiple RAEs into $NG$ RAGs, wherein $NG = \lceil Y/P \rceil$, and when $Y$ mod $P > 0$, there exist $\lfloor Y/P \rfloor$ RAGs, wherein each RAG includes $P$ RAEs, and in addition, there exist $NG - \lfloor Y/P \rfloor$ RAGs, wherein each RAG includes $Y - P * \lfloor Y/P \rfloor$ RAEs. $NG$ bits form a bitmap, wherein each bit identifies whether the corresponding RAG is allocated or not. The RAGs are arranged from a smallest time index according to a time sequence. A bit mapping sequence of the RAGs is as follows: RAG0 to RAG($NG$-1) are sequentially mapped to a highest bit and a lowest bit respectively, $N_{RAE}^{sw}$ is a size of the scheduling time window, and Y represents the maximum number of RAEs which may be scheduled in the time window $N_{RAE}^{sw}$.

In the embodiment of the disclosure, when a second resource allocation manner is adopted in the DL grant, it is necessary to divide multiple RAEs into $NG$ RAGs, wherein $NG = \lceil Y/P \rceil$, and when $Y$ mod $P > 0$, there exist $\lfloor Y/P \rfloor$ RAGs, wherein each RAG includes $P$ RAEs, and in addition, there exist $NG - \lfloor Y/P \rfloor$ RAGs, wherein each RAG includes $Y - P * \lfloor Y/P \rfloor$ RAEs. It is necessary to divide the $NG$ RAGs into $P$ RAG clusters, wherein each cluster starts with RAGp, wherein $0 \le p < P$, wherein first $\lceil \log_2(P) \rceil$ bits in $NG$ bits indicate a RAG cluster in the $P$ RAG clusters selected for resource mapping.

In the embodiment of the disclosure, a 1-bit offset indicator bit is configured to indicate the number of offset RAEs in a RAG cluster during resource mapping.

The other $N_{RB}^{TYPE1} = \left| N_{RB}^{DL}/P \right| - \lceil \log_2(P) \rceil - X$ bits are configured to represent RAEs for resource mapping in the selected RAG clusters. When the 1-bit offset indicator bit is predefined, a value of X is 1, otherwise is 0, $N_{RAE}^{sw}$ is the size of the scheduling time length, and Y represents the maximum number of the RAEs which may be scheduled in the time window $N_{RAE}^{sw}$.

In the embodiment of the disclosure, when a third resource allocation manner (similar to an LTE resource allocation manner 2) or continuous resource allocation is adopted in the DL grant, it is necessary to indicate starting positions $RAE_{start}$ of corresponding RAEs and the number $L_{CRAEs}$ of continuously allocated RAEs by virtue of resource indicator values, wherein, if $(L_{CRAES}-1) \le \lfloor Y/2 \rfloor$, $RIV = Y(L_{CRAEs}-1) + RAE_{start}$, otherwise $RIV = Y(Y - L_{CRAEs}+1) + (Y-1-RAE_{start})$, wherein $L_{CRAEs} \ge 1$ and does not exceed $Y - RAE_{start}$, $N_{RAE}^{sw}$ is the size of the scheduling time window, and Y represents the maximum number of the RAEs which may be scheduled in the time window $N_{RAE}^{sw}$.

In the embodiment of the disclosure, when a fourth resource allocation manner (similar to an LTE UL resource allocation manner 1) or continuous resource allocation is adopted in the DL grant, resource allocation information indicates continuous RAGs of two clusters of the UE, wherein each cluster has multiple continuous RAGs, a size of each RAG is $P$, $N_{RAE}^{sw}$ is the size of the scheduling time window, and Y represents the maximum number of the RAEs which may be scheduled in the time window $N_{RAE}^{sw}$. An index value $r$ is indicated by $\left\lceil \log_2\left( \binom{\lceil Y/P + 1 \rceil}{4} \right) \right\rceil$ bits, wherein $r$ is configured to indicate a RAG index $s0$ corresponding to a starting position and a RAG index $s1$ corresponding to an

ending position of cluster 0 and a RAG index $s2$ corresponding to a starting position and a RAG index $s3$ corresponding to an ending position of cluster 1. $r$ is defined by equation $r = \sum_{i=0}^{M-1} \left\langle \begin{matrix} N - s_i \\ M - i \end{matrix} \right\rangle$, wherein $M=4$ and $N = \lceil Y/P \rceil + 1$, wherein $\{s_i\}_{i=0}^{M-1}$ $\left(1 \le s_i \le M, s_i < s_{i+1}\right)$ is a RAG index in M RAG indexes which have been sequenced from small to large (wherein the RAGs are sequenced according to a time relationship), and $\left\langle \begin{matrix} x \\ y \end{matrix} \right\rangle = \begin{cases} \left( \begin{matrix} x \\ y \end{matrix} \right) & x \ge y \\ 0 & x < y \end{cases}$.

Wherein, the evolved Node B may configure a value of $P$ to UE1 through high-layer signaling, or, the evolved Node B and the UE make a consistent definition about the value of $P$ in a predetermination manner, or, the value of $P$ is predefined to form a one-to-one corresponding relationship with a bandwidth of the 4G LTE carrier, or, the value of $P$ is predefined to form a one-to-one corresponding relationship with a bandwidth of the high-frequency carrier, for example, as shown in Table 1, wherein Sn(n=1)>0, and In the embodiment of the disclosure, when the corresponding relationship is formed with the bandwidth of the 4G LTE carrier, N1=10, N2=26, N3=63, N4=110, S1=1, S2=2, S3=3 and S4=4.

(A) value(s) of $N_{RAE}^{sw}$ and Y may be determined in manners as follows:

1: the evolved Node B configures the value(s) to the UE through high-layer signaling;

2: the evolved Node B and the UE predefine the value(s) of $N_{RAE}^{sw}$ and/or Y; and

3: different system bandwidths are predefined to corresponding to independent values of $N_{RAE}^{sw}$ and/or Y. In the embodiment of the disclosure, the system bandwidth may be a bandwidth of a scheduling carrier (a bandwidth of a carrier where the DL control signaling is located).

Sub-embodiment 2

The evolved Node B indicates the number of corresponding DL data RAEs by virtue of DL control indication signaling in a predetermined manner. The RAEs consist of N (N>0) transmission symbols in a time domain, and a value of N may be defined by the evolved Node B and UE in a predefinition manner, wherein the value of N forms a one-to-one corresponding relationship with the bandwidth of the 4G LTE CC, or the value of N forms a corresponding relationship with the bandwidth of the high-frequency CC, as shown in Table 2, wherein Zn(1~4) are integers more than 0.

Table 2

| System bandwidth (MHz) | Selection of value of N |
|---|---|
| ≤X1 | Z1 |
| X1+1~X2 | Z2 |
| X2+1~X3 | Z3 |
| X3+1~X4 | Z4 |

The evolved Node B schedules UE1 to receive the DL data on one or more corresponding RAEs on the DL carrier corresponding to CC1 through DL grant signaling on the DL carrier corresponding to 4G CC0.

When a maximum scheduling time window of a DL grant is $N_{RAE}^{sw}$ and $N_{RAE}^{sw}$ includes Y RAEs, the evolved Node B indicates UE1 to receive the DL data on one or more RAEs in the Y RAEs. In the embodiment of the disclosure, a value of Y is 10, or the value of Y is the number of the RAEs in 1 ms in the time domain.

In the embodiment of the disclosure, when a first resource allocation manner (similar to a DL resource allocation manner 0 of LTE R12) is adopted in the DL grant, it is necessary to divide multiple RAEs into *NG* RAGs, wherein $NG = \lceil Y/P \rceil$, and when Y mod P>0, there exist $\lfloor Y/P \rfloor$ RAGs, wherein each RAG includes $P$ RAEs, and in addition, there exist $NG - \lfloor Y/P \rfloor$ RAGs, wherein each RAG includes $Y - P*\lfloor Y/P \rfloor$ RAEs. *NG* bits form a bitmap, wherein each bit identifies whether the corresponding RAG is allocated or not. The RAGs are arranged from a smallest time index according to a time sequence. A bit mapping sequence of the RAGs is as follows: RAG0 to RAG(*NG*-1) are sequentially mapped to a highest bit and a lowest bit respectively, $N_{RAE}^{sw}$ is a size of the scheduling time window, and Y represents the maximum number of RAEs which may be scheduled in the time window $N_{RAE}^{sw}$ .

In the embodiment of the disclosure, when a second resource allocation manner is adopted in the DL grant, it is necessary to divide multiple RAEs into *NG* RAGs, wherein *NG*=⌈*Y/P*⌉, and when *Y* mod *P*>0, there exist ⌊*Y/P*⌋ RAGs, wherein each RAG includes *P* RAEs, and in addition, there exist *NG*-⌊*Y/P*⌋ RAGs, wherein each RAG includes *Y-P*⌊*Y/P*⌋ RAEs. It is necessary to divide the *NG* RAGs into *P* RAG clusters, wherein each cluster starts with RAGp, wherein 0≤*p*<*P*, wherein first ⌈log₂(*P*)⌉ bits in *NG* bits indicate a RAG cluster in the *P* RAG clusters selected for resource mapping.

In the embodiment of the disclosure, a 1-bit offset indicator bit is configured to indicate the number of offset RAEs in a RAG cluster during resource mapping.

The other $N_{RB}^{TYPE1} = \left| N_{RB}^{DL} / P \right| - \left\lceil \log_2 (P) \right\rceil - X$ bits are configured to represent RAEs for resource mapping. When the 1-bit offset indicator bit is predefined, a value of X is 1, otherwise is 0, $N_{RAE}^{sw}$ is the size of the scheduling time length, and Y represents the maximum number of the RAEs which may be scheduled in the time window $N_{RAE}^{sw}$ .

In the embodiment of the disclosure, when a third resource allocation manner (similar to an LTE resource allocation manner 2) or continuous resource allocation is adopted in the DL grant, it is necessary to indicate starting positions $RAE_{start}$ of corresponding RAEs and the number $L_{CRAEs}$ of continuously allocated RAEs by virtue of resource indicator values, wherein, if ($L_{CRAEs}$-1)≤⌊*Y/2*⌋, RIV=Y($L_{CRAEs}$-1)+$RAE_{start}$, otherwise RIV=Y(Y-$L_{CRAEs}$+1)+(Y-1-$RAE_{start}$), wherein $L_{CRAEs}$≥1 and does not exceed Y-$RAE_{start}$, $N_{RAE}^{sw}$ is the size of the scheduling time window, and Y represents the maximum number of the RAEs which may be scheduled in the time window $N_{RAE}^{sw}$ .

In the embodiment of the disclosure, when a fourth resource allocation manner (similar to an LTE UL resource allocation manner 1) or continuous resource allocation is adopted in the DL grant, resource allocation information indicates continuous RAGs of two clusters of the UE, wherein each cluster has multiple continuous RAGs, a size of each RAG is $P$, $N_{RAE}^{sw}$ is the size of the scheduling time window, and Y represents the maximum number of the RAEs which may be scheduled in the time window $N_{RAE}^{sw}$ . An index value *r* is indicated by $\left\lceil \log_2 \left( \left( \begin{array}{c} \lceil Y/P + 1 \rceil \\ 4 \end{array} \right) \right) \right\rceil$ bits, wherein *r* is configured to indicate a RAG index *s*0 corresponding to a starting position and a RAG index *s*1 corresponding to an ending position of cluster 0 and a RAG index *s*2 corresponding to a starting position and a RAG index *s*3 corresponding to an ending position of cluster 1. *r* is defined by equation $r = \sum_{i=0}^{M-1} \left\langle \begin{array}{c} N - s_i \\ M - i \end{array} \right\rangle$ , wherein *M* =4 and *N*=⌈*Y/P*⌉+1, wherein $\{s_i\}_{i=0}^{M-1}$ (1≤$s_i$≤*M*,$s_i$<$s_{i+1}$) is a RAG index in M RAG indexes which have been sequenced from small to large (wherein the RAGs are sequenced according to a time relationship), and $\left\langle \begin{array}{c} x \\ y \end{array} \right\rangle = \left\{ \begin{array}{ll} \left( \begin{array}{c} x \\ y \end{array} \right) & x \geq y \\ 0 & x < y \end{array} \right.$ .

Wherein, the evolved Node B may configure a value of *P* to UE1 through high-layer signaling, or, the evolved Node B and the UE make a consistent definition about the value of *P* in a predetermination manner, or, the value of *P* is predefined to form a one-to-one corresponding relationship with a bandwidth of the 4G LTE carrier, or, the value of *P* is predefined to form a one-to-one corresponding relationship with a bandwidth of the high-frequency carrier, for example, as shown in Table 1, wherein Sn(n=1)>0, and In the embodiment of the disclosure, when the corresponding relationship is formed with the bandwidth of the 4G LTE carrier, N1=10, N2=26, N3=63, N4=110, S1=1, S2=2, S3=3 and S4=4.

(A) value(s) of $N_{RAE}^{sw}$ and Y may be determined in manners as follows:

    1: the evolved Node B configures the value(s) to the UE through high-layer signaling;

    2: the evolved Node B and the UE predefine the value(s) of $N_{RAE}^{sw}$ and/or Y; and

    3: different system bandwidths are predefined to corresponding to independent values of $N_{RAE}^{sw}$ and/or Y. In the embodiment of the disclosure, the system bandwidth may be a bandwidth of a scheduling carrier (a bandwidth of a carrier where the DL control signaling is located).

Sub-embodiment 3

The evolved Node B indicates the number of corresponding DL data RAEs by virtue of DL control indication signaling in a predetermined manner. The RAEs consist of N (N>0) transmission symbols in a time domain, and the evolved Node B may configure a value of N to UE through high-layer signaling. In the embodiment of the disclosure, the predefined N value is one of the following values: 24, 28, 30, 32, 40 and 42.

The evolved Node B schedules UE1 to receive the DL data on one or more corresponding RAEs on CC1 through DL grant signaling on 4G CC0.

When a maximum scheduling time window of a DL grant is $N_{RAE}^{sw}$ and $N_{RAE}^{sw}$ includes Y RAEs, the evolved Node B indicates UE1 to receive the DL data on one or more RAEs in the Y RAEs. In the embodiment of the disclosure, a value of Y is 10, or the value of Y is the number of the RAEs in 1 ms in the time domain.

In the embodiment of the disclosure, when a first resource allocation manner (similar to a DL resource allocation manner 0 of LTE R12) is adopted in the DL grant, it is necessary to divide multiple RAEs into *NG* RAGs, wherein *NG*=⌈*Y/P*⌉, and when *Y* mod *P*>0, there exist ⌊*Y/P*⌋ RAGs, wherein each RAG includes *P* RAEs, and in addition, there exist *NG*-⌊*Y/P*⌋ RAGs, wherein each RAG includes *Y-P*⌊*Y/P*⌋ RAEs. *NG* bits form a bitmap, wherein each bit identifies whether the corresponding RAG is allocated or not. The RAGs are arranged from a smallest time index according to a time sequence. A bit mapping sequence of the RAGs is as follows: RAG0 to RAG(*NG*-1) are sequentially mapped to a highest bit and a lowest bit respectively, $N_{RAE}^{sw}$ is a size of the scheduling time window, and Y represents the maximum number of RAEs which may be scheduled in the time window $N_{RAE}^{sw}$.

In the embodiment of the disclosure, when a second resource allocation manner is adopted in the DL grant, it is necessary to divide multiple RAEs into *NG* RAGs, wherein *NG*=⌈*Y/P*⌉, and when *Y* mod *P*>0, there exist ⌊*Y/P*⌋ RAGs, wherein each RAG includes *P* RAEs, and in addition, there exist *NG*-⌊*Y/P*⌋ RAGs, wherein each RAG includes *Y-P*⌊*Y/P*⌋ RAEs. It is necessary to divide the *NG* RAGs into *P* RAG clusters, wherein each cluster starts with RAGp, wherein 0≤*p*<*P*, wherein first ⌈log$_2$(*P*)⌉ bits in *NG* bits indicate a RAG cluster in the *P* RAG clusters selected for resource mapping.

In the embodiment of the disclosure, a 1-bit offset indicator bit is configured to indicate the number of offset RAEs in a RAG cluster during resource mapping.

The other $N_{RB}^{TYPE1} = \left| N_{RB}^{DL} / P \right| - \left\lceil \log_2(P) \right\rceil - X$ bits are configured to represent RAEs for resource mapping in the selected RAG clusters. When the 1-bit offset indicator bit is predefined, a value of X is 1, otherwise is 0, $N_{RAE}^{sw}$ is the size of the scheduling time length, and Y represents the maximum number of the RAEs which may be scheduled in the time window $N_{RAE}^{sw}$.

In the embodiment of the disclosure, when a third resource allocation manner (similar to an LTE resource allocation manner 2) or continuous resource allocation is adopted in the DL grant, it is necessary to indicate starting positions *RAE$_{start}$* of corresponding RAEs and the number *L$_{CRAEs}$* of continuously allocated RAEs by virtue of resource indicator values, wherein, if (*L$_{CRAEs}$*-1)≤⌊*Y/2*⌋, *RIV*=*Y*(*L$_{CRAEs}$*-1)+*RAE$_{start}$*, otherwise *RIV*=*Y*(*Y-L$_{CRAEs}$*+1)+(*Y*-1-*RAE$_{start}$*), wherein *L$_{CRAEs}$*≥1 and does not exceed *Y-RAE$_{start}$*, $N_{RAE}^{sw}$ is the size of the scheduling time window, and Y represents the maximum number of the RAEs which may be scheduled in the time window $N_{RAE}^{sw}$.

In the embodiment of the disclosure, when a fourth resource allocation manner (similar to an LTE UL resource allocation manner 1) or continuous resource allocation is adopted in the DL grant, resource allocation information indicates continuous RAGs of two clusters of the UE, wherein each cluster has multiple continuous RAGs, a size of each RAG is *P*, $N_{RAE}^{sw}$ is the size of the scheduling time window, and Y represents the maximum number of the RAEs which may be scheduled in the time window $N_{RAE}^{sw}$. An index value *r* is indicated by $\left\lceil \log_2 \left( \left( \left\lceil \frac{Y/P+1}{4} \right\rceil \right) \right) \right\rceil$ bits, wherein *r* is configured to indicate a RAG index *s*0 corresponding to a starting position and a RAG index *s*1 corresponding to an ending position of cluster 0 and a RAG index *s*2 corresponding to a starting position and a RAG index *s*3 corresponding to an ending position of cluster 1. *r* is defined by equation $r = \sum_{i=0}^{M-1} \binom{N-s_i}{M-i}$, wherein *M*=4 and *N*=⌈*Y/P*⌉+1, wherein $\{s_i\}_{i=0}^{M-1}$ (1 ≤ *s$_i$* ≤ *M*, *s$_i$* < *s$_{i+1}$*) is a RAG index in M RAG indexes which have been sequenced from small to large (wherein the RAGs are sequenced according to a time relationship), and $\left\langle \begin{matrix} x \\ y \end{matrix} \right\rangle = \begin{cases} \begin{pmatrix} x \\ y \end{pmatrix} & x \geq y \\ 0 & x < y \end{cases}$.

Wherein, the evolved Node B may configure a value of $P$ to UE1 through high-layer signaling, or, the evolved Node B and the UE make a consistent definition about the value of $P$ in a predetermination manner, or, the value of $P$ is predefined to form a one-to-one corresponding relationship with a bandwidth of the 4G LTE carrier, or, the value of $P$ is predefined to form a one-to-one corresponding relationship with a bandwidth of the high-frequency carrier, for example, as shown in Table 1, wherein Sn(n=1)>0, and In the embodiment of the disclosure, when the corresponding relationship is formed with the bandwidth of the 4G LTE carrier, N1=10, N2=26, N3=63, N4=110, S1=1, S2=2, S3=3 and S4=4.

Table 1

| System bandwidth (MHz) | Selection of value of $P$ |
| --- | --- |
| ≤N1 | S1 |
| N1+1~N2 | S2 |
| N2+1~N3 | S3 |
| N3+1~N4 | S4 |

(A) value(s) of $N_{RAE}^{sw}$ and Y may be determined in manners as follows:

1: the evolved Node B configures the value(s) to the UE through high-layer signaling;

2: the evolved Node B and the UE predefine the value(s) of $N_{RAE}^{sw}$ and/or Y; and

3: different system bandwidths are predefined to corresponding to independent values of $N_{RAE}^{sw}$ and/or Y. In the embodiment of the disclosure, the system bandwidth may be a bandwidth of a scheduling carrier (a bandwidth of a carrier where the DL control signaling is located).

Embodiment 2

It is supposed that at least two CCs are linked with UE1, the two CCs may be positioned in the same node TP0 or positioned in two different nodes TP1 and TP2, and TP1 and TP2 are linked through an ideal backhaul (the backhaul has a short time delay), wherein an LTE R12 CC is set to be CC0, and a high-frequency CC is set to be CC1. When an evolved Node B is intended to schedule UE1 to send UL data on a UL carrier corresponding to CC1 and determines to send corresponding PHICH information (ACK/NACK indicating whether the UL data is correctly received or not) later on a DL carrier corresponding to CC0. The evolved Node B sends corresponding DL control indication signaling on the DL carrier corresponding to CC0 to indicate a time-domain resource position of the UL data corresponding to UE1 on the UL carrier corresponding to CC1, as shown in Fig. 6, wherein it is supposed that CC0 is a 4G LTE CC, and CC1 is a high-frequency CC. UT refers to that UE1 sends the UL data on the UL carrier corresponding to CC1 and receives the PHICH information (ACK/NACK indicating whether the UL data is correctly received or not) on the DL carrier corresponding to CC0.

Sub-embodiment 1

The evolved Node B indicates the number of corresponding UL data RAEs by virtue of DL control indication signaling in a predetermined manner. The RAEs consist of N (N>0) transmission symbols in a time domain, and a manner of predefining an N value may be adopted for a value of N. In the embodiment of the disclosure, the predefined N value is one of the following values: 24, 28, 30, 32, 40 and 42. Or, a time-domain duration of the N transmission symbols is predefined to be 0.1 ms.

The evolved Node B schedules UE1 to send the UL data on one or more corresponding RAEs on the UL carrier corresponding to CC1 through UL grant signaling on the DL carrier corresponding to 4G CC0.

When a maximum scheduling time window of a UL grant is $N_{RAE}^{sw}$ and $N_{RAE}^{sw}$ includes Y RAEs, the evolved Node B indicates UE1 to send the UL data on one or more RAEs in the Y RAEs. In the embodiment of the disclosure, a value of Y is 10, or the value of Y is the number of the RAEs in 1 ms in the time domain.

In the embodiment of the disclosure, when a first resource allocation manner (similar to a DL resource allocation manner 0 of LTE R12) is adopted in the UL grant, it is necessary to divide multiple RAEs into *NG* RAGs, wherein *NG*=⌈*Y/P*⌉, and when *Y* mod *P*>0, there exist ⌊*Y/P*⌋ RAGs, wherein each RAG includes *P* RAEs, and in addition, there exist *NG*-⌊*Y/P*⌋ RAGs, wherein each RAG includes *Y-P*⌊*Y/P*⌋ RAEs. *NG* bits form a bitmap, wherein each bit identifies whether the corresponding RAG is allocated or not. The RAGs are arranged from a smallest time index according to a time sequence. A bit mapping sequence of the RAGs is as follows: RAG0 to RAG(*NG*-1) are sequentially mapped to a highest bit and a lowest bit respectively, $N_{RAE}^{sw}$ is a size of the scheduling time window, and Y represents the maximum number of RAEs which may be scheduled in the time window $N_{RAE}^{sw}$.

In the embodiment of the disclosure, when a second resource allocation manner is adopted in the UL grant, it is necessary to divide multiple RAEs into *NG* RAGs, wherein *NG*=⌈*Y/P*⌉, and when *Y* mod *P*>0, there exist ⌊*Y/P*⌋ RAGs, wherein each RAG includes *P* RAEs, and in addition, there exist *NG*-⌊*Y/P*⌋ RAGs, wherein each RAG includes *Y-P*⌊*Y/P*⌋ RAEs. It is necessary to divide the *NG* RAGs into *P* RAG clusters, wherein each cluster starts with RAGp, wherein 0≤*p*<*P*, wherein first ⌈log₂(*P*)⌉ bits in *NG* bits indicate a RAG cluster in the *P* RAG clusters selected for resource mapping.

In the embodiment of the disclosure, a 1-bit offset indicator bit is configured to indicate the number of offset RAEs in a RAG cluster during resource mapping.

The other $N_{RB}^{TYPE1} = \left\lfloor N_{RB}^{DL} / P \right\rfloor - \left\lceil \log_2(P) \right\rceil - X$ bits are configured to represent RAEs for resource mapping in the selected RAG clusters. When the 1-bit offset indicator bit is predefined, a value of X is 1, otherwise is 0, $N_{RAE}^{sw}$ is the size of the scheduling time length, and Y represents the maximum number of the RAEs which may be scheduled in the time window $N_{RAE}^{sw}$.

In the embodiment of the disclosure, when a third resource allocation manner (similar to an LTE resource allocation manner 2) or continuous resource allocation is adopted in the UL grant, it is necessary to indicate starting positions *RAE_start* of corresponding RAEs and the number *L_CRAEs* of continuously allocated RAEs by virtue of resource indicator values, wherein, if (*L_CRAEs*-1)≤⌊*Y/2*⌋, *RIV*=*Y*(*L_CRAEs*-1)+*RAE_start*, otherwise *RIV*=*Y*(*Y-L_CRAEs*+1)+(*Y*-1-*RAE_start*), wherein *L_CRAEs*≥1 and does not exceed *Y-RAE_start*, $N_{RAE}^{sw}$ is the size of the scheduling time window, and Y represents the maximum number of the RAEs which may be scheduled in the time window $N_{RAE}^{sw}$.

In the embodiment of the disclosure, when a fourth resource allocation manner (similar to an LTE UL resource allocation manner 1) or continuous resource allocation is adopted in the UL grant, resource allocation information indicates continuous RAGs of two clusters of the UE, wherein each cluster has multiple continuous RAGs, a size of each RAG is *P*, $N_{RAE}^{sw}$ is the size of the scheduling time window, and Y represents the maximum number of the RAEs which may be scheduled in the time window $N_{RAE}^{sw}$. An index value *r* is indicated by $\left\lceil \log_2\left(\left(\left\lceil \begin{smallmatrix} \lceil Y/P+1 \rceil \\ 4 \end{smallmatrix} \right\rceil\right)\right)\right\rceil$ bits, wherein *r* is configured to indicate a RAG index *s*0 corresponding to a starting position and a RAG index *s*1 corresponding to an ending position of cluster 0 and a RAG index *s*2 corresponding to a starting position and a RAG index *s*3 corresponding to an ending position of cluster 1. *r* is defined by equation $r = \sum_{i=0}^{M-1} \left\langle \begin{matrix} N - s_i \\ M - i \end{matrix} \right\rangle$, wherein *M* =4 and *N*=⌈*Y/P*⌉+1, wherein $\{s_i\}_{i=0}^{M-1}$ (1 ≤ *s_i* ≤ M, *s_i* < *s_{i+1}*) is a RAG index in M RAG indexes which have been sequenced from small to large (wherein the RAGs are sequenced according to a time relationship), and $\left\langle \begin{matrix} x \\ y \end{matrix} \right\rangle = \begin{cases} \left( \begin{matrix} x \\ y \end{matrix} \right) & x \geq y \\ 0 & x < y \end{cases}$

Wherein, the evolved Node B may configure a value of *P* to UE1 through high-layer signaling, or, the evolved Node B and the UE make a consistent definition about the value of *P* in a predetermination manner, or, the value of *P* is predefined to form a one-to-one corresponding relationship with a bandwidth of the 4G LTE carrier, or, the value of *P* is predefined to form a one-to-one corresponding relationship with a bandwidth of the high-frequency carrier, for example, as shown in Table 1, wherein Sn(n=1)>0, and In the embodiment of the disclosure, when the corresponding relationship is formed with the bandwidth of the 4G LTE carrier, N1=10, N2=26, N3=63, N4=110, S1=1, S2=2, S3=3 and S4=4.

(A) value(s) of $N_{RAE}^{sw}$ and Y may be determined in manners as follows:

1: the evolved Node B configures the value(s) to the UE through high-layer signaling;

2: the evolved Node B and the UE predefine the value(s) of $N_{RAE}^{sw}$ and/or Y; and

3: different system bandwidths are predefined to corresponding to independent values of $N_{RAE}^{sw}$ and/or Y. In the embodiment of the disclosure, the system bandwidth may be a bandwidth of a scheduling carrier (a bandwidth of a carrier where the DL control signaling is located).

The value(s) of the DL $N_{RAE}^{sw}$ and/or Y and the value(s) of the UL $N_{RAE}^{sw}$ and/or Y may be independently defined or configured, or may be defined and configured in a unified manner, and the value(s) of the DL $N_{RAE}^{sw}$ and/or Y are/is equal to the value(s) of the UL $N_{RAE}^{sw}$ and/or Y.

Sub-embodiment 2

The evolved Node B indicates the number of corresponding DL data RAEs by virtue of DL control indication signaling in a predetermined manner. The RAEs consist of N (N>0) transmission symbols in a time domain, and a value of N may be defined by the evolved Node B and UE in a predefinition manner, wherein the value of N forms a one-to-one corresponding relationship with the bandwidth of the 4G LTE CC, or the value of N forms a corresponding relationship with the bandwidth of the high-frequency CC, as shown in Table 2, wherein Zn(1~4) are integers more than 0.

The evolved Node B schedules UE1 to send the UL data on one or more corresponding RAEs on the UL carrier corresponding to CC1 through UL grant signaling on the DL carrier corresponding to 4G CC0.

When a maximum scheduling time window of a UL grant is $N_{RAE}^{sw}$ and $N_{RAE}^{sw}$ includes Y RAEs, the evolved Node B indicates UE1 to send the UL data on one or more RAEs in the Y RAEs. In the embodiment of the disclosure, a value of Y is 10, or the value of Y is the number of the RAEs in 1 ms in the time domain.

In the embodiment of the disclosure, when a first resource allocation manner (similar to a DL resource allocation manner 0 of LTE R12) is adopted in the UL grant, it is necessary to divide multiple RAEs into *NG* RAGs, wherein *NG*=⌈*Y/P*⌉ and when *Y* mod *P* > 0, there exist ⌊*Y/P*⌋ RAGs, wherein each RAG includes *P* RAEs, and in addition, there exist *NG* - ⌊*Y/P*⌋ RAGs, wherein each RAG includes *Y-P\*⌊Y/P⌋* RAEs. *NG* bits form a bitmap, wherein each bit identifies whether the corresponding RAG is allocated or not. The RAGs are arranged from a smallest time index according to a time sequence. A bit mapping sequence of the RAGs is as follows: RAG0 to RAG( *NG*-1) are sequentially mapped to a highest bit and a lowest bit respectively, $N_{RAE}^{sw}$ is a size of the scheduling time window, and Y represents the maximum number of RAEs which may be scheduled in the time window $N_{RAE}^{sw}$.

In the embodiment of the disclosure, when a second resource allocation manner is adopted in the UL grant, it is necessary to divide multiple RAEs into *NG* RAGs, wherein *NG* = ⌈*Y/P*⌉, and when *Y* mod *P* > 0, there exist ⌊*Y/P*⌋ RAGs, wherein each RAG includes *P* RAEs, and in addition, there exist *NG* - ⌊*Y/P*⌋ RAGs, wherein each RAG includes *Y-P\*⌊Y/P⌋* RAEs. It is necessary to divide the *NG* RAGs into *P* RAG clusters, wherein each cluster starts with RAGp, wherein 0 ≤ *p* < *P,* wherein first ⌈log₂(*P*)⌉ bits in *NG* bits indicate a RAG cluster in the *P* RAG clusters selected for resource mapping.

In the embodiment of the disclosure, a 1-bit offset indicator bit is configured to indicate the number of offset RAEs in a RAG cluster during resource mapping.

The other $N_{RB}^{TYPE1} = \left| N_{RB}^{DL} / P \right| - \lceil \log_2(P) \rceil - X$ bits are configured to represent RAEs for resource mapping in the selected RAG clusters. When the 1-bit offset indicator bit is predefined, a value of X is 1, otherwise is 0, $N_{RAE}^{sw}$ is the size of the scheduling time length, and Y represents the maximum number of the RAEs which may be scheduled in the time window $N_{RAE}^{sw}$.

In the embodiment of the disclosure, when a third resource allocation manner (similar to an LTE resource allocation manner 2) or continuous resource allocation is adopted in the UL grant, it is necessary to indicate starting positions $RAE_{start}$ of corresponding RAEs and the number $L_{CRAEs}$ of continuously allocated RAEs by virtue of resource indicator values, wherein, if ($L_{CRAEs}$ -1) ≤ ⌊Y/2⌋, RIV = Y($L_{CRAEs}$ -1) + $RAE_{start}$, otherwise RIV = Y(Y - $L_{CRAEs}$ + 1) + (Y - 1 - $RAE_{start}$), wherein $L_{CRAEs}$≥1 and does not exceed $Y-RAE_{start}$, $N_{RAE}^{sw}$ is the size of the scheduling time window, and Y represents the maximum number of the RAEs which may be scheduled in the time window $N_{RAE}^{sw}$.

In the embodiment of the disclosure, when a fourth resource allocation manner (similar to an LTE UL resource allocation manner 1) or continuous resource allocation is adopted in the DL grant, resource allocation information indicates continuous RAGs of two clusters of the UE, wherein each cluster has multiple continuous RAGs, a size of each RAG is

$P$, $N_{RAE}^{sw}$ is the size of the scheduling time window, and Y represents the maximum number of the RAEs which may be scheduled in the time window $N_{RAE}^{sw}$. An index value $r$ is indicated by $\left\lceil \log_2\left(\left(\left\lceil \dfrac{\lceil Y/P+1 \rceil}{4} \right\rceil\right)\right)\right\rceil$ bits, wherein $r$ is configured to indicate a RAG index $s0$ corresponding to a starting position and a RAG index $s1$ corresponding to an ending position of cluster 0 and a RAG index $s2$ corresponding to a starting position and a RAG index $s3$ corresponding to an ending position of cluster 1. $r$ is defined by equation $r = \sum_{i=0}^{M-1} \left\langle \dfrac{N-s_i}{M-i} \right\rangle$, wherein $M$=4 and $N=\lceil Y/P \rceil+1$, wherein $\{s_i\}_{i=0}^{M-1}$ ($1\leq s_i\leq M, s_i<s_{i+1}$) is a RAG index in M RAG indexes which have been sequenced from small to large (wherein the RAGs are sequenced according to a time relationship), and $\left\langle \dfrac{x}{y} \right\rangle = \begin{cases} \left(\dfrac{x}{y}\right) & x \geq y \\ 0 & x < y \end{cases}$.

Wherein, the evolved Node B may configure a value of $P$ to UE1 through high-layer signaling, or, the evolved Node B and the UE make a consistent definition about the value of $P$ in a predetermination manner, or, the value of $P$ is predefined to form a one-to-one corresponding relationship with a bandwidth of the 4G LTE carrier, or, the value of $P$ is predefined to form a one-to-one corresponding relationship with a bandwidth of the high-frequency carrier, for example, as shown in Table 1, wherein Sn(n=1)>0, and In the embodiment of the disclosure, when the corresponding relationship is formed with the bandwidth of the 4G LTE carrier, N1=10, N2=26, N3=63, N4=110, S1=1, S2=2, S3=3 and S4=4.

(A) value(s) of $N_{RAE}^{sw}$ and Y may be determined in manners as follows:

    1: the evolved Node B configures the value(s) to the UE through high-layer signaling;
    2: the evolved Node B and the UE predefine the value(s) of $N_{RAE}^{sw}$ and/or Y; and
    3: different system bandwidths are predefined to corresponding to independent values of $N_{RAE}^{sw}$ and/or Y. In the embodiment of the disclosure, the system bandwidth may be a bandwidth of a scheduling carrier (a bandwidth of a carrier where the DL control signaling is located).

Sub-embodiment 3

The evolved Node B indicates the number of corresponding DL data RAEs by virtue of DL control indication signaling in a predetermined manner. The RAEs consist of N (N>0) transmission symbols in a time domain, and the evolved Node B may configure a value of N to UE through high-layer signaling. In the embodiment of the disclosure, the predefined N value is one of the following values: 24, 28, 30, 32, 40 and 42.

The evolved Node B schedules UE1 to send the UL data on one or more corresponding RAEs on the UL carrier corresponding to CC1 through UL grant signaling on 4G CC0.

When a maximum scheduling time window of a UL grant is $N_{RAE}^{sw}$ and $N_{RAE}^{sw}$ includes Y RAEs, the evolved Node B indicates UE1 to send the UL data on one or more RAEs in the Y RAEs. In the embodiment of the disclosure, a value of Y is 10, or the value of Y is the number of the RAEs in 1 ms in the time domain.

In the embodiment of the disclosure, when a first resource allocation manner (similar to a DL resource allocation manner 0 of LTE R12) is adopted in the UL grant, it is necessary to divide multiple RAEs into *NG* RAGs, wherein *NG* $=\lceil Y/P \rceil$, and when *Y* mod *P* > 0, there exist $\lfloor Y/P \rfloor$ RAGs, wherein each RAG includes *P* RAEs, and in addition, there exist *NG*-$\lfloor Y/P \rfloor$ RAGs, wherein each RAG includes *Y*- *P*\* $\lfloor Y/P \rfloor$ RAEs. *NG* bits form a bitmap, wherein each bit identifies whether the corresponding RAG is allocated or not. The RAGs are arranged from a smallest time index according to a time sequence. A bit mapping sequence of the RAGs is as follows: RAG0 to RAG(*NG*-1) are sequentially mapped to a highest bit and a lowest bit respectively, $N_{RAE}^{sw}$ is a size of the scheduling time window, and Y represents the maximum number of RAEs which may be scheduled in the time window $N_{RAE}^{sw}$.

In the embodiment of the disclosure, when a second resource allocation manner is adopted in the UL grant, it is necessary to divide multiple RAEs into *NG* RAGs, wherein *NG*$=\lceil Y/P \rceil$, and when *Y* mod *P* > 0, there exist $\lfloor Y/P \rfloor$ RAGs, wherein each RAG includes *P* RAEs, and in addition, there exist *NG*-$\lfloor Y/P \rfloor$ RAGs, wherein each RAG includes *Y-P*\*$\lfloor Y/P \rfloor$ RAEs. It is necessary to divide the *NG* RAGs into *P* RAG clusters, wherein each cluster starts with RAGp, wherein

$0 \le p < P$, wherein first $\lceil \log_2(P) \rceil$ bits in $NG$ bits indicate a RAG cluster in the $P$ RAG clusters selected for resource mapping.

In the embodiment of the disclosure, a 1-bit offset indicator bit is configured to indicate the number of offset RAEs in a RAG cluster during resource mapping.

The other $N_{RB}^{TYPE1} = \left| N_{RB}^{DL}/P \right| - \lceil \log_2(P) \rceil - X$ bits are configured to represent RAEs for resource mapping in the selected RAG clusters. When the 1-bit offset indicator bit is predefined, a value of X is 1, otherwise is 0, $N_{RAE}^{sw}$ is the size of the scheduling time length, and Y represents the maximum number of the RAEs which may be scheduled in the time window $N_{RAE}^{sw}$.

In the embodiment of the disclosure, when a third resource allocation manner (similar to an LTE resource allocation manner 2) or continuous resource allocation is adopted in the UL grant, it is necessary to indicate starting positions $RAE_{start}$ of corresponding RAEs and the number $L_{CRAEs}$ of continuously allocated RAEs by virtue of resource indicator values, wherein, if $(L_{CRAEs}-1) \le \lfloor Y/2 \rfloor$, $RIV = Y(L_{CRAEs}-1)+RAE_{start}$, otherwise $RIV = Y(Y-L_{CRAEs}+1)+(Y-1-RAE_{start})$, wherein $L_{CRAEs} \ge 1$ and does not exceed $Y-RAE_{start}$, $N_{RAE}^{sw}$ is the size of the scheduling time window, and Y represents the maximum number of the RAEs which may be scheduled in the time window $N_{RAE}^{sw}$.

In the embodiment of the disclosure, when a fourth resource allocation manner (similar to an LTE UL resource allocation manner 1) or continuous resource allocation is adopted in the UL grant, resource allocation information indicates continuous RAGs of two clusters of the UE, wherein each cluster has multiple continuous RAGs, a size of each RAG is $P$, $N_{RAE}^{sw}$ is the size of the scheduling time window, and Y represents the maximum number of the RAEs which may be scheduled in the time window $N_{RAE}^{sw}$. An index value $r$ is indicated by $\left\lceil \log_2 \left( \binom{\lceil Y/P+1 \rceil}{4} \right) \right\rceil$ bits, wherein $r$ is configured to indicate a RAG index $s0$ corresponding to a starting position and a RAG index $s1$ corresponding to an ending position of cluster 0 and a RAG index $s2$ corresponding to a starting position and a RAG index $s3$ corresponding to an ending position of cluster 1. $r$ is defined by equation $r = \sum_{i=0}^{M-1} \binom{N-s_i}{M-i}$, wherein $M = 4$ and $N = \lceil Y/P \rceil + 1$, wherein $\{s_i\}_{i=0}^{M-1} \left( 1 \le s_i \le M, s_i < s_{i+1} \right)$ is a RAG index in M RAG indexes which have been sequenced from small to large (wherein the RAGs are sequenced according to a time relationship), and $\binom{x}{y} = \begin{cases} \binom{x}{y} & x \ge y \\ 0 & x < y \end{cases}$.

Wherein, the evolved Node B may configure a value of $P$ to UE1 through high-layer signaling, or, the evolved Node B and the UE make a consistent definition about the value of $P$ in a predetermination manner, or, the value of $P$ is predefined to form a one-to-one corresponding relationship with a bandwidth of the 4G LTE carrier, or, the value of $P$ is predefined to form a one-to-one corresponding relationship with a bandwidth of the high-frequency carrier, for example, as shown in Table 1, wherein Sn(n=1)>0, and In the embodiment of the disclosure, when the corresponding relationship is formed with the bandwidth of the 4G LTE carrier, N1=10, N2=26, N3=63, N4=110, S1=1, S2=2, S3=3 and S4=4.

(A) value(s) of $N_{RAE}^{sw}$ and Y may be determined in manners as follows:

1: the evolved Node B configures the value(s) to the UE through high-layer signaling;
2: the evolved Node B and the UE predefine the value(s) of $N_{RAE}^{sw}$ and/or Y; and
3: different system bandwidths are predefined to corresponding to independent values of $N_{RAE}^{sw}$ and/or Y. In the embodiment of the disclosure, the system bandwidth may be a bandwidth of a scheduling carrier (a bandwidth of a carrier where the DL control signaling is located).

Embodiment 3

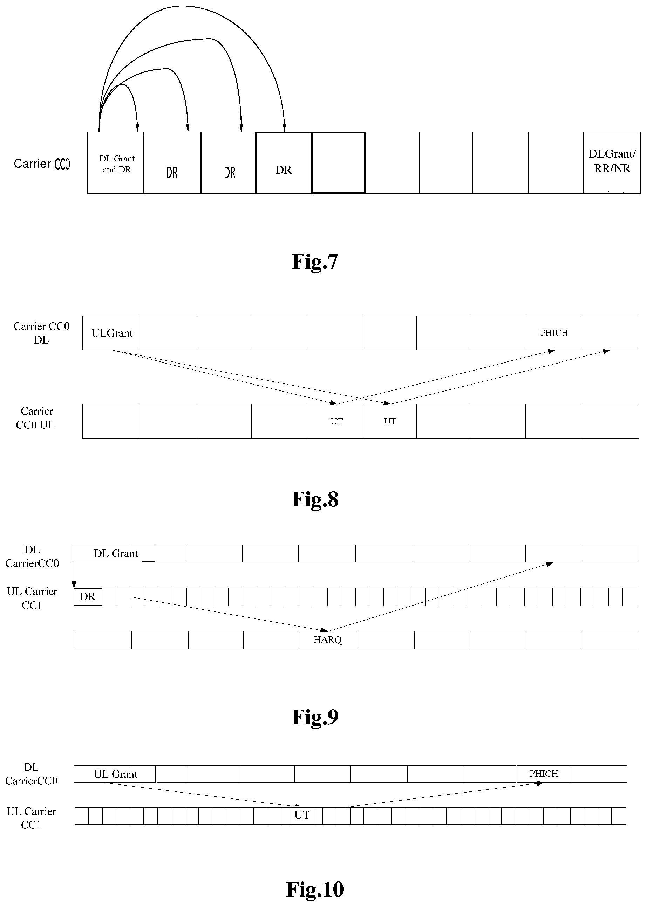

It is supposed that at least one CC, i.e. CC0, is linked with UE1, and CC0 may be positioned in node TP0. When an evolved Node B is intended to send DL data to UE1 on a DL carrier corresponding to the CC and expects correct reception of UE1, the evolved Node B sends corresponding DL control indication signaling on CC0 to indicate a time-domain resource position of the DL data corresponding to UE1 on CC0, as shown in Fig. 7, wherein it is supposed that CC0 is a 4G LTE CC, or, CC0 is a high-frequency CC. DR refers to that UE1 receives the DL data on the DL carrier corresponding to CC0, HARQ refers to that UE1 feeds back HARQ information for the DL data on a UL carrier corresponding to CC0, RR refers to that UE1 receives retransmitted DL data on a high-frequency carrier, and NR refers to that UE1 receives newly transmitted DL data on the high-frequency carrier.

Sub-embodiment 1

The evolved Node B indicates the number of corresponding DL data RAEs by virtue of DL control indication signaling in a predetermined manner. The RAEs consist of N (N>0) transmission symbols in a time domain, and a manner of predefining an N value may be adopted for a value of N. In the embodiment of the disclosure, the predefined N value is one of the following values: 24, 28, 30, 32, 40 and 42. Or, when the CC is a high-frequency carrier, a time-domain duration of the N transmission symbols is predefined to be 0.1 ms, and when the CC is a 4G LTE CC, the time-domain duration of the N transmission symbols is predefined to be 1 ms.

The evolved Node B schedules UE1 to receive the DL data on one or more corresponding RAEs on the DL carrier corresponding to CC0 through DL grant signaling on the DL carrier corresponding to CC0.

When a maximum scheduling time window of a DL grant is $N_{RAE}^{sw}$ and $N_{RAE}^{sw}$ includes Y RAEs, the evolved Node B indicates UE1 to receive the DL data on one or more RAEs in the Y RAEs. In the embodiment of the disclosure, a value of Y is more than or equal to 1.

In the embodiment of the disclosure, when a first resource allocation manner (similar to a DL resource allocation manner 0 of LTE R12) is adopted in the DL grant, it is necessary to divide multiple RAEs into $NG$ RAGs, wherein $NG=\lceil Y/P \rceil$, and when $Y \bmod P > 0$, there exist $\lfloor Y/P \rfloor$ RAGs, wherein each RAG includes $P$ RAEs, and in addition, there exist $NG-\lfloor Y/P \rfloor$ RAGs, wherein each RAG includes $Y-P*\lfloor Y/P \rfloor$ RAEs. $NG$ bits form a bitmap, wherein each bit identifies whether the corresponding RAG is allocated or not. The RAGs are arranged from a smallest time index according to a time sequence. A bit mapping sequence of the RAGs is as follows: RAG0 to RAG($NG$-1) are sequentially mapped to a highest bit and a lowest bit respectively, $N_{RAE}^{sw}$ is a size of the scheduling time window, and Y represents the maximum number of RAEs which may be scheduled in the time window $N_{RAE}^{sw}$.

In the embodiment of the disclosure, when a second resource allocation manner is adopted in the DL grant, it is necessary to divide multiple RAEs into $NG$ RAGs, wherein $NG=\lfloor Y/P \rfloor$, and when $Y \bmod P > 0$, there exist $\lfloor Y/P \rfloor$ RAGs, wherein each RAG includes $P$ RAEs, and in addition, there exist $NG-\lfloor Y/P \rfloor$ RAGs, wherein each RAG includes $Y - P*\lfloor Y/P \rfloor$ RAEs. It is necessary to divide the $NG$ RAGs into $P$ RAG clusters, wherein each cluster starts with RAGp, wherein $0 \le p < P$, wherein first $\lceil \log_2(P) \rceil$ bits in $NG$ bits indicate a RAG cluster in the $P$ RAG clusters selected for resource mapping.

In the embodiment of the disclosure, a 1-bit offset indicator bit is configured to indicate the number of offset RAEs in a RAG cluster during resource mapping.

The other $N_{RB}^{TYPE1} = \left| N_{RB}^{DL} / P \right| - \lceil \log_2(P) \rceil - X$ bits are configured to represent RAEs for resource mapping in the selected RAG clusters. When the 1-bit offset indicator bit is predefined, a value of X is 1, otherwise is 0, $N_{RAE}^{sw}$ is the size of the scheduling time length, and Y represents the maximum number of the RAEs which may be scheduled.

In the embodiment of the disclosure, when a third resource allocation manner (similar to an LTE resource allocation manner 2) or continuous resource allocation is adopted in the DL grant, it is necessary to indicate starting positions $RAE_{start}$ of corresponding RAEs and the number $L_{CRAEs}$ of continuously allocated RAEs by virtue of resource indicator values, wherein, if $(L_{CRAEs}-1) \le \lfloor Y/2 \rfloor$, $RIV=Y(L_{CRAEs}-1)+RAE_{start}$, otherwise $RIV=Y(Y-L_{CRAEs}+1)+(Y-1-RAE_{start})$, wherein $L_{CRAEs} \ge 1$ and does not exceed $Y-RAE_{start}$, $N_{RAE}^{sw}$ is the size of the scheduling time window, and Y represents the maximum number of the RAEs which may be scheduled in the time window $N_{RAE}^{sw}$.

In the embodiment of the disclosure, when a fourth resource allocation manner (similar to an LTE UL resource allocation manner 1) or continuous resource allocation is adopted in the DL grant, resource allocation information indicates continuous RAGs of two clusters of the UE, wherein each cluster has multiple continuous RAGs, a size of each RAG is $P$, $N_{RAE}^{sw}$ is the size of the scheduling time window, and Y represents the maximum number of the RAEs which may be scheduled in the time window $N_{RAE}^{sw}$. An index value $r$ is indicated by $\left\lceil \log_2\left(\left(\left\lceil \dfrac{Y/P+1}{4} \right\rceil\right)\right)\right\rceil$ bits, wherein $r$ is configured to indicate a RAG index $s0$ corresponding to a starting position and a RAG index $s1$ corresponding to an ending position of cluster 0 and a RAG index $s2$ corresponding to a starting position and a RAG index $s3$ corresponding to an ending position of cluster 1. $r$ is defined by equation $r = \sum_{i=0}^{M-1}\left\langle \begin{matrix} N-s_i \\ M-i \end{matrix} \right\rangle$, wherein $M=4$ and $N=\lceil Y/P\rceil+1$, wherein $\{s_i\}_{i=0}^{M-1}$ $(1 \le s_i \le M, s_i < s_{i+1})$ is a RAG index in M RAG indexes which have been sequenced from small to large (wherein the RAGs are sequenced according to a time relationship), and $\left\langle \begin{matrix} x \\ y \end{matrix} \right\rangle = \begin{cases} \left( \begin{matrix} x \\ y \end{matrix} \right) & x \ge y \\ 0 & x < y \end{cases}$.

Wherein, the evolved Node B may configure a value of $P$ to UE1 through high-layer signaling, or, the evolved Node B and the UE make a consistent definition about the value of $P$ in a predetermination manner, or, the value of $P$ is predefined to form a one-to-one corresponding relationship with a bandwidth of the CC, for example, as shown in Table 1, wherein Sn(n=1)>0, and In the embodiment of the disclosure, when the corresponding relationship is formed with the bandwidth of the 4G LTE carrier, N1=10, N2=26, N3=63, N4=110, S1=1, S2=2, S3=3 and S4=4.

(A) value(s) of $N_{RAE}^{sw}$ and Y may be determined in manners as follows:

1: the evolved Node B configures the value(s) to the UE through high-layer signaling;

2: the evolved Node B and the UE predefine the value(s) of $N_{RAE}^{sw}$ and/or Y; and

3: different system bandwidths are predefined to corresponding to independent values of $N_{RAE}^{sw}$ and/or Y. In the embodiment of the disclosure, the system bandwidth may be a bandwidth of a scheduling carrier (a bandwidth of a carrier where the DL control signaling is located).

Sub-embodiment 2

The evolved Node B indicates the number of corresponding DL data RAEs by virtue of DL control indication signaling in a predetermined manner. The RAEs consist of N (N>0) transmission symbols in a time domain, and a value of N may be defined by the evolved Node B and UE in a predefinition manner, wherein the value of N forms a one-to-one corresponding relationship with the bandwidth of the carrier, or the value of N forms a corresponding relationship with the bandwidth of the high-frequency carrier, as shown in Table 2, wherein Zn(1~4) are integers more than 0.

The evolved Node B schedules UE1 to receive the DL data on one or more corresponding RAEs on the DL carrier corresponding to CC0 through DL grant signaling on the DL carrier corresponding to CC0.

When a maximum scheduling time window of a DL grant is $N_{RAE}^{sw}$ and $N_{RAE}^{sw}$ includes Y RAEs, the evolved Node B indicates UE1 to receive the DL data on one or more RAEs in the Y RAEs. In the embodiment of the disclosure, a value of Y is more than or equal to 1.

In the embodiment of the disclosure, when a first resource allocation manner (similar to a DL resource allocation manner 0 of LTE R12) is adopted in the DL grant, it is necessary to divide multiple RAEs into $NG$ RAGs, wherein $NG=\lceil Y/P\rceil$, and when $Y$ mod $P>0$, there exist $\lfloor Y/P\rfloor$ RAGs, wherein each RAG includes $P$ RAEs, and in addition, there exist $NG-\lfloor Y/P\rfloor$ RAGs, wherein each RAG includes $Y-P*\lfloor Y/P\rfloor$ RAEs. $NG$ bits form a bitmap, wherein each bit identifies whether the corresponding RAG is allocated or not. The RAGs are arranged from a smallest time index according to a time sequence. A bit mapping sequence of the RAGs is as follows: RAG0 to RAG($NG$-1) are sequentially mapped to a highest bit and a lowest bit respectively, $N_{RAE}^{sw}$ is a size of the scheduling time window, and Y represents the maximum number of RAEs which may be scheduled.

In the embodiment of the disclosure, when a second resource allocation manner is adopted in the DL grant, it is necessary to divide multiple RAEs into $NG$ RAGs, wherein $NG=\lceil Y/P\rceil$, and when $Y$ mod $P>0$, there exist $\lfloor Y/P\rfloor$ RAGs, wherein each RAG includes $P$ RAEs, and in addition, there exist $NG-\lfloor Y/P\rfloor$ RAGs, wherein each RAG includes $Y-P*\lfloor Y/P\rfloor$ RAEs. It is necessary to divide the $NG$ RAGs into $P$ RAG clusters, wherein each cluster starts with RAGp, wherein $0 \le p<P$, wherein first $\lceil \log_2(P)\rceil$ bits in $NG$ bits indicate a RAG cluster in the $P$ RAG clusters selected for resource mapping.

In the embodiment of the disclosure, a 1-bit offset indicator bit is configured to indicate the number of offset RAEs in a RAG cluster during resource mapping.

The other $N_{RB}^{TYPE1} = \left| N_{RB}^{DL}/P \right| - \left\lceil \log_2(P) \right\rceil - X$ bits are configured to represent RAEs for resource mapping in the selected RAG clusters. When the 1-bit offset indicator bit is predefined, a value of X is 1, otherwise is 0, $N_{RAE}^{sw}$ is the size of the scheduling time length, and Y represents the maximum number of the RAEs which may be scheduled.

In the embodiment of the disclosure, when a third resource allocation manner (similar to an LTE resource allocation manner 2) or continuous resource allocation is adopted in the DL grant, it is necessary to indicate starting positions $RAE_{start}$ of corresponding RAEs and the number $L_{CRAEs}$ of continuously allocated RAEs by virtue of resource indicator values, wherein, if $(L_{CRAEs}-1) \leq \lfloor Y/2 \rfloor$, $RIV=Y(L_{CRAEs}-1)+RAE_{start}$, otherwise $RIV=Y(Y-LCRAEs+1)+(Y-1-RAE_{start})$, wherein $L_{CRAEs} \geq 1$ and does not exceed $Y-RAE_{start}$, $N_{RAE}^{sw}$ is the size of the scheduling time window, and Y represents the maximum number of the RAEs which may be scheduled in the time window $N_{RAE}^{sw}$.

In the embodiment of the disclosure, when a fourth resource allocation manner (similar to an LTE UL resource allocation manner 1) or continuous resource allocation is adopted in the DL grant, resource allocation information indicates continuous RAGs of two clusters of the UE, wherein each cluster has multiple continuous RAGs, a size of each RAG is $P$, $N_{RAE}^{sw}$ is the size of the scheduling time window, and Y represents the maximum number of the RAEs which may be scheduled. An index value $r$ is indicated by $\left\lceil \log_2 \left( \left( \begin{array}{c} \lceil Y/P+1 \rceil \\ 4 \end{array} \right) \right) \right\rceil$ bits, wherein $r$ is configured to indicate a RAG index $s0$ corresponding to a starting position and a RAG index $s1$ corresponding to an ending position of cluster 0 and a RAG index $s2$ corresponding to a starting position and a RAG index $s3$ corresponding to an ending position of cluster 1. $r$ is defined by equation $r = \sum_{i=0}^{M-1} \left( \begin{array}{c} N - s_i \\ M - i \end{array} \right)$, wherein $M=4$ and $N=\lceil Y/P \rceil +1$, wherein $\{s_i\}_{i=0}^{M-1} \left( 1 \leq s_i \leq M, s_i < s_{i+1} \right)$ is a RAG index in M RAG indexes which have been sequenced from small to large (wherein the RAGs are sequenced according to a time relationship), and $\left( \begin{array}{c} x \\ y \end{array} \right) = \left\{ \begin{array}{ll} \left( \begin{array}{c} x \\ y \end{array} \right) & x \geq y \\ 0 & x < y \end{array} \right.$.

Wherein, the evolved Node B may configure a value of $P$ to UE1 through high-layer signaling, or, the evolved Node B and the UE make a consistent definition about the value of $P$ in a predetermination manner, or, the value of $P$ is predefined to form a one-to-one corresponding relationship with a bandwidth of the CC, for example, as shown in Table 1, wherein Sn(n=1)>0, and In the embodiment of the disclosure, when the corresponding relationship is formed with the bandwidth of the 4G LTE carrier, N1=10, N2=26, N3=63, N4=110, S1=1, S2=2, S3=3 and S4=4.

(A) value(s) of $N_{RAE}^{sw}$ and Y may be determined in manners as follows:

> 1: the evolved Node B configures the value(s) to the UE through high-layer signaling;
>
> 2: the evolved Node B and the UE predefine the value(s) of $N_{RAE}^{sw}$ and/or Y; and
>
> 3: different system bandwidths are predefined to corresponding to independent values of $N_{RAE}^{sw}$ and/or Y. In the embodiment of the disclosure, the system bandwidth may be a bandwidth of a scheduling carrier (a bandwidth of a carrier where the DL control signaling is located).

Sub-embodiment 3

The evolved Node B indicates the number of corresponding DL data RAEs by virtue of DL control indication signaling in a predetermined manner. The RAEs consist of N (N>0) transmission symbols in a time domain, and the evolved Node B may configure a value of N to UE through high-layer signaling. In the embodiment of the disclosure, the predefined N value is one of the following values: 24, 28, 30, 32, 40 and 42.

The evolved Node B schedules UE1 to receive the DL data on one or more corresponding RAEs on a DL carrier corresponding to CC1 through DL grant signaling on the DL carrier corresponding to CC0.

When a maximum scheduling time window of a DL grant is $N_{RAE}^{sw}$ and $N_{RAE}^{sw}$ includes Y RAEs, the evolved Node B indicates UE1 to receive the DL data on one or more RAEs in the Y RAEs. In the embodiment of the disclosure, a value of Y is more than or equal to 1.

In the embodiment of the disclosure, when a first resource allocation manner (similar to a DL resource allocation manner 0 of LTE R12) is adopted in the DL grant, it is necessary to divide multiple RAEs into *NG* RAGs, wherein *NG*=⌈*Y/P*⌉, and when *Y* mod *P*>0, there exist ⌊*Y/P*⌋ RAGs, wherein each RAG includes *P* RAEs, and in addition, there exist *NG*-⌊*Y/P*⌋ RAGs, wherein each RAG includes *Y-P*⌊*Y/P*⌋ RAEs. *NG* bits form a bitmap, wherein each bit identifies whether the corresponding RAG is allocated or not. The RAGs are arranged from a smallest time index according to a time sequence. A bit mapping sequence of the RAGs is as follows: RAG0 to RAG(*NG*-1) are sequentially mapped to a highest bit and a lowest bit respectively, $N_{RAE}^{sw}$ is a size of the scheduling time window, and Y represents the maximum number of RAEs which may be scheduled.

In the embodiment of the disclosure, when a second resource allocation manner is adopted in the DL grant, it is necessary to divide multiple RAEs into *NG* RAGs, wherein *NG*=⌈*Y/P*⌉, and when *Y* mod *P*>0, there exist ⌊*Y/P*⌋ RAGs, wherein each RAG includes *P* RAEs, and in addition, there exist *NG*-⌊*Y/P*⌋ RAGs, wherein each RAG includes *Y-P*⌊*Y/P*⌋ RAEs. It is necessary to divide the *NG* RAGs into *P* RAG clusters, wherein each cluster starts with RAGp, wherein 0 ≤ *p* < *P*, wherein first ⌈log$_2$(*P*)⌉ bits in *NG* bits indicate a RAG cluster in the *P* RAG clusters selected for resource mapping.

In the embodiment of the disclosure, a 1-bit offset indicator bit is configured to indicate the number of offset RAEs in a RAG cluster during resource mapping.

The other $N_{RB}^{TYPE1} = \left| N_{RB}^{DL} / P \right| - \lceil \log_2 (P) \rceil - X$ bits are configured to represent RAEs for resource mapping in the selected RAG clusters. When the 1-bit offset indicator bit is predefined, a value of X is 1, otherwise is 0, $N_{RAE}^{sw}$ is the size of the scheduling time length, and Y represents the maximum number of the RAEs which may be scheduled.

In the embodiment of the disclosure, when a third resource allocation manner (similar to an LTE resource allocation manner 2) or continuous resource allocation is adopted in the DL grant, it is necessary to indicate starting positions $RAE_{start}$ of corresponding RAEs and the number $L_{CRAEs}$ of continuously allocated RAEs by virtue of resource indicator values, wherein, if ($L_{CRAEs}$-1)≤⌊*Y*/2⌋, $RIV=Y(L_{CRAEs}$-1)+$RAE_{start}$, otherwise $RIV=Y(Y-L_{CRAEs}$+1)+($Y$-1-$RAE_{start}$), wherein $L_{CRAEs}$≥1 and does not exceed $Y-RAE_{start}$, $N_{RAE}^{sw}$ is the size of the scheduling time window, and Y represents the maximum number of the RAEs which may be scheduled.

In the embodiment of the disclosure, when a fourth resource allocation manner (similar to an LTE UL resource allocation manner 1) or continuous resource allocation is adopted in the DL grant, resource allocation information indicates continuous RAGs of two clusters of the UE, wherein each cluster has multiple continuous RAGs, a size of each RAG is *P*, $N_{RAE}^{sw}$ is the size of the scheduling time window, and Y represents the maximum number of the RAEs which may be scheduled in the time window $N_{RAE}^{sw}$. An index value *r* is indicated by $\left\lceil \log_2 \left( \left( \begin{matrix} \lceil Y/P+1 \rceil \\ 4 \end{matrix} \right) \right) \right\rceil$ bits, wherein *r* is configured to indicate a RAG index *s*0 corresponding to a starting position and a RAG index *s*1 corresponding to an ending position of cluster 0 and a RAG index *s*2 corresponding to a starting position and a RAG index *s*3 corresponding to an ending position of cluster 1. *r* is defined by equation $r = \sum_{i=0}^{M-1} \left\langle \begin{matrix} N - s_i \\ M - i \end{matrix} \right\rangle$, wherein *M* =4 and *N*=⌈*Y/P*⌉+1, wherein $\{s_i\}_{i=0}^{M-1} \left(1 \le s_i \le M, s_i < s_{i+1}\right)$ is a RAG index in M RAG indexes which have been sequenced from small to large (wherein the RAGs are sequenced according to a time relationship), and $\left\langle \begin{matrix} x \\ y \end{matrix} \right\rangle = \begin{cases} \left( \begin{matrix} x \\ y \end{matrix} \right) & x \ge y \\ 0 & x < y \end{cases}$.

Wherein, the evolved Node B may configure a value of *P* to UE1 through high-layer signaling, or, the evolved Node B and the UE make a consistent definition about the value of *P* in a predetermination manner, or, the value of *P* is predefined to form a one-to-one corresponding relationship with a bandwidth of the CC, for example, as shown in Table 1, wherein Sn(n=1)>0, and In the embodiment of the disclosure, when the corresponding relationship is formed with the bandwidth of the 4G LTE carrier, N1=10, N2=26, N3=63, N4=110, S1=1, S2=2, S3=3 and S4=4.

(A) value(s) of $N_{RAE}^{sw}$ and Y may be determined in manners as follows:

1: the evolved Node B configures the value(s) to the UE through high-layer signaling;

2: the evolved Node B and the UE predefine the value(s) of $N_{RAE}^{sw}$ and/or Y; and

3: different system bandwidths are predefined to corresponding to independent values of $N_{RAE}^{sw}$ and/or Y. In the embodiment of the disclosure, the system bandwidth may be a bandwidth of a scheduling carrier (a bandwidth of a carrier where the DL control signaling is located).

Embodiment 4

It is supposed that at least one CC, i.e. CC0, is linked with UE1, and CC0 may be positioned in node TP0. When an evolved Node B is intended to send UL grant signaling to UE1 on a DL carrier corresponding to the CC to indicate UE1 to send UL data on a UL carrier corresponding to CC0 and simultaneously indicate a time-domain resource position of the UL data corresponding to UE1, as shown in Fig. 8, wherein it is supposed that CC0 is a 4G LTE CC, or, CC0 is a high-frequency CC. UT refers to that UE1 sends the UL data on the UL carrier corresponding to CC0 and receives the PHICH information (ACK/NACK indicating whether the UL data is correctly received or not) on the DL carrier corresponding to CC0.

Sub-embodiment 1

The evolved Node B indicates the number of corresponding UL data RAEs by virtue of DL control indication signaling in a predetermined manner. The RAEs consist of N (N>0) transmission symbols in a time domain, and a manner of predefining an N value may be adopted for a value of N. In the embodiment of the disclosure, the predefined N value is one of the following values: 24, 28, 30, 32, 40 and 42. Or, when the CC is a high-frequency carrier, a time-domain duration of the N transmission symbols is predefined to be 0.1 ms, and when the CC is a 4G LTE CC, the time-domain duration of the N transmission symbols is predefined to be 1 ms.

The evolved Node B schedules UE1 to send the UL data on one or more corresponding RAEs on the UL carrier corresponding to CC0 through UL grant signaling on the DL carrier corresponding to CC0.

When a maximum scheduling time window of a UL grant is $N_{RAE}^{sw}$ and $N_{RAE}^{sw}$ includes Y RAEs, the evolved Node B indicates UE1 to send the UL data on one or more RAEs in the Y RAEs. In the embodiment of the disclosure, a value of Y is more than or equal to 1.

In the embodiment of the disclosure, when a first resource allocation manner (similar to a DL resource allocation manner 0 of LTE R12) is adopted in the UL grant, it is necessary to divide multiple RAEs into *NG* RAGs, wherein *NG*=⌈*Y/P*⌉, and when *Y* mod *P*>0, there exist ⌊*Y/P*⌋ RAGs, wherein each RAG includes *P* RAEs, and in addition, there exist *NG*-⌊*Y/P*⌋ RAGs, wherein each RAG includes *Y-P\**⌊*Y/P*⌋ RAEs. *NG* bits form a bitmap, wherein each bit identifies whether the corresponding RAG is allocated or not. The RAGs are arranged from a smallest time index according to a time sequence. A bit mapping sequence of the RAGs is as follows: RAG0 to RAG(*NG*-1) are sequentially mapped to a highest bit and a lowest bit respectively, $N_{RAE}^{sw}$ is a size of the scheduling time window, and Y represents the maximum number of RAEs which may be scheduled in the time window $N_{RAE}^{sw}$.

In the embodiment of the disclosure, when a second resource allocation manner is adopted in the UL grant, it is necessary to divide multiple RAEs into *NG* RAGs, wherein *NG*=⌈*Y/P*⌉, and when *Y* mod *P*>0, there exist ⌊*Y/P*⌋ RAGs, wherein each RAG includes *P* RAEs, and in addition, there exist *NG*-⌊*Y/P*⌋ RAGs, wherein each RAG includes *Y-P\**⌊*Y/P*⌋ RAEs. It is necessary to divide the *NG* RAGs into *P* RAG clusters, wherein each cluster starts with RAGp, wherein 0 ≤ *p* < *P*, wherein first ⌈log₂(*P*)⌉ bits in *NG* bits indicate a RAG cluster in the *P* RAG clusters selected for resource mapping.

In the embodiment of the disclosure, a 1-bit offset indicator bit is configured to indicate the number of offset RAEs in a RAG cluster during resource mapping.

The other $N_{RB}^{TYPE1} = \left| N_{RB}^{DL}/P \right| - \left\lceil \log_2(P) \right\rceil - X$ bits are configured to represent RAEs for resource mapping in the selected RAG clusters. When the 1-bit offset indicator bit is predefined, a value of X is 1, otherwise is 0, $N_{RAE}^{sw}$ is the size of the scheduling time length, and Y represents the maximum number of the RAEs which may be scheduled in the time window $N_{RAE}^{sw}$.

In the embodiment of the disclosure, when a third resource allocation manner (similar to an LTE resource allocation manner 2) or continuous resource allocation is adopted in the UL grant, it is necessary to indicate starting positions $RAE_{start}$ of corresponding RAEs and the number $L_{CRAEs}$ of continuously allocated RAEs by virtue of resource indicator values, wherein, if ($L_{CRAEs}$-1)≤⌊Y/2⌋, RIV=Y($L_{CRAEs}$-1)+$RAE_{start}$, otherwise RIV=Y(Y-$L_{CRAEs}$+1)+(Y-1-$RAE_{start}$), wherein $L_{CRAEs}$≥1 and does not exceed Y-$RAE_{start}$, $N_{RAE}^{sw}$ is the size of the scheduling time window, and Y represents the maximum number of the RAEs which may be scheduled in the time window $N_{RAE}^{sw}$.

In the embodiment of the disclosure, when a fourth resource allocation manner (similar to an LTE UL resource allocation manner 1) or continuous resource allocation is adopted in the UL grant, resource allocation information indicates continuous RAGs of two clusters of the UE, wherein each cluster has multiple continuous RAGs, a size of each RAG is $P$, $N_{RAE}^{sw}$ is the size of the scheduling time window, and Y represents the maximum number of the RAEs which may be scheduled in the time window $N_{RAE}^{sw}$. An index value $r$ is indicated by $\left\lceil \log_2\left(\left(\left\lceil \dfrac{Y/P+1}{4}\right\rceil\right)\right)\right\rceil$ bits, wherein $r$ is configured to indicate a RAG index $s0$ corresponding to a starting position and a RAG index $s1$ corresponding to an ending position of cluster 0 and a RAG index $s2$ corresponding to a starting position and a RAG index $s3$ corresponding to an ending position of cluster 1. $r$ is defined by equation $r = \displaystyle\sum_{i=0}^{M-1}\left\langle \begin{matrix} N - s_i \\ M - i \end{matrix} \right\rangle$, wherein $M=4$ and $N=\lceil Y/P\rceil+1$, wherein $\{s_i\}_{i=0}^{M-1}$ $(1 \leq s_i \leq M, s_i < s_{i+1})$ is a RAG index in M RAG indexes which have been sequenced from small to large (wherein the RAGs are sequenced according to a time relationship), and $\left\langle \begin{matrix} x \\ y \end{matrix} \right\rangle = \begin{cases} \begin{pmatrix} x \\ y \end{pmatrix} & x \geq y \\ 0 & x < y \end{cases}$.

Wherein, the evolved Node B may configure a value of $P$ to UE1 through high-layer signaling, or, the evolved Node B and the UE make a consistent definition about the value of $P$ in a predetermination manner, or, the value of $P$ is predefined to form a one-to-one corresponding relationship with a bandwidth of the CC, for example, as shown in Table 1, wherein Sn(n=1)>0, and In the embodiment of the disclosure, when the corresponding relationship is formed with the bandwidth of the 4G LTE carrier, N1=10, N2=26, N3=63, N4=110, S1=1, S2=2, S3=3 and S4=4.

(A) value(s) of $N_{RAE}^{sw}$ and Y may be determined in manners as follows:

1: the evolved Node B configures the value(s) to the UE through high-layer signaling;

2: the evolved Node B and the UE predefine the value(s) of $N_{RAE}^{sw}$ and/or Y; and

3: different system bandwidths are predefined to corresponding to independent values of $N_{RAE}^{sw}$ and/or Y. In the embodiment of the disclosure, the system bandwidth may be a bandwidth of a scheduling carrier (a bandwidth of a carrier where the DL control signaling is located).

Sub-embodiment 2

The evolved Node B indicates the number of corresponding DL data RAEs by virtue of DL control indication signaling in a predetermined manner. The RAEs consist of N (N>0) transmission symbols in a time domain, and a value of N may be defined by the evolved Node B and UE in a predefinition manner, wherein the value of N forms a one-to-one corresponding relationship with the bandwidth of the carrier, or the value of N forms a corresponding relationship with the bandwidth of the high-frequency carrier, as shown in Table 2, wherein Zn(1~4) are integers more than 0.

The evolved Node B schedules UE1 to send the UL data on one or more corresponding RAEs on the UL carrier corresponding to CC0 through UL grant signaling on the DL carrier corresponding to CC0.

When a maximum scheduling time window of a UL grant is $N_{RAE}^{sw}$ and $N_{RAE}^{sw}$ includes Y RAEs, the evolved Node B indicates UE1 to send the UL data on one or more RAEs in the Y RAEs. In the embodiment of the disclosure, a value of Y is more than or equal to 1.

In the embodiment of the disclosure, when a first resource allocation manner (similar to a DL resource allocation manner 0 of LTE R12) is adopted in the UL grant, it is necessary to divide multiple RAEs into *NG* RAGs, wherein *NG*=⌈*Y/P*⌉, and when *Y* mod *P*>0, there exist ⌊*Y/P*⌋ RAGs, wherein each RAG includes *P* RAEs, and in addition, there exist *NG*-⌊*Y/P*⌋ RAGs, wherein each RAG includes *Y-P*⌊*Y/P*⌋ RAEs. *NG* bits form a bitmap, wherein each bit identifies whether the corresponding RAG is allocated or not. The RAGs are arranged from a smallest time index according to a time sequence. A bit mapping sequence of the RAGs is as follows: RAG0 to RAG(*NG*-1) are sequentially mapped to a highest bit and a lowest bit respectively, $N_{RAE}^{sw}$ is a size of the scheduling time window, and Y represents the maximum number of RAEs which may be scheduled in the time window $N_{RAE}^{sw}$.

In the embodiment of the disclosure, when a second resource allocation manner is adopted in the UL grant, it is necessary to divide multiple RAEs into $NG$ RAGs, wherein $NG=\lceil Y/P\rceil$, and when $Y \bmod P>0$, there exist $\lfloor Y/P\rfloor$ RAGs, wherein each RAG includes $P$ RAEs, and in addition, there exist $NG-\lfloor Y/P\rfloor$ RAGs, wherein each RAG includes $Y-P*\lfloor Y/P\rfloor$ RAEs. It is necessary to divide the $NG$ RAGs into $P$ RAG clusters, wherein each cluster starts with RAGp, wherein $0\leq p<P$, wherein first $\lceil\log_2(P)\rceil$ bits in $NG$ bits indicate a RAG cluster in the $P$ RAG clusters selected for resource mapping.

In the embodiment of the disclosure, a 1-bit offset indicator bit is configured to indicate the number of offset RAEs in a RAG cluster during resource mapping.

The other $N_{RB}^{TYPE1}=\left|N_{RB}^{DL}/P\right|-\lceil\log_2(P)\rceil-X$ bits are configured to represent RAEs for resource mapping in the selected RAG clusters. When the 1-bit offset indicator bit is predefined, a value of X is 1, otherwise is 0, $N_{RAE}^{sw}$ is the size of the scheduling time length, and Y represents the maximum number of the RAEs which may be scheduled.

In the embodiment of the disclosure, when a third resource allocation manner (similar to an LTE resource allocation manner 2) or continuous resource allocation is adopted in the UL grant, it is necessary to indicate starting positions $RAE_{start}$ of corresponding RAEs and the number $L_{CRAEs}$ of continuously allocated RAEs by virtue of resource indicator values, wherein, if $(L_{CRAEs}-1)\leq\lfloor Y/2\rfloor$, $RIV=Y(L_{CRAEs}-1)+RAE_{start}$, otherwise $RIV=Y(Y-L_{CRAEs}+1)+(Y-1-RAE_{start})$, wherein $L_{CRAEs}\geq1$ and does not exceed $Y-RAE_{start}$, $N_{RAE}^{sw}$ is the size of the scheduling time window, and Y represents the maximum number of the RAEs which may be scheduled in the time window $N_{RAE}^{sw}$.

In the embodiment of the disclosure, when a fourth resource allocation manner (similar to an LTE UL resource allocation manner 1) or continuous resource allocation is adopted in the DL grant, resource allocation information indicates continuous RAGs of two clusters of the UE, wherein each cluster has multiple continuous RAGs, a size of each RAG is $P$, $N_{RAE}^{sw}$ is the size of the scheduling time window, and Y represents the maximum number of the RAEs which may be scheduled in the time window $N_{RAE}^{sw}$. An index value $r$ is indicated by $\left\lceil\log_2\left(\left(\begin{array}{c}\lceil Y/P+1\rceil\\4\end{array}\right)\right)\right\rceil$ bits, wherein $r$ is configured to indicate a RAG index $s0$ corresponding to a starting position and a RAG index $s1$ corresponding to an ending position of cluster 0 and a RAG index $s2$ corresponding to a starting position and a RAG index $s3$ corresponding to an ending position of cluster 1. $r$ is defined by equation $r=\sum_{i=0}^{M-1}\left\langle\begin{array}{c}N-s_i\\M-i\end{array}\right\rangle$, wherein $M=4$ and $N=\lceil Y/P\rceil+1$, wherein $\{s_i\}_{i=0}^{M-1}$ $(1\leq s_i\leq M, s_i<s_{i+1})$ is a RAG index in M RAG indexes which have been sequenced from small to large (wherein the RAGs are sequenced according to a time relationship), and $\left\langle\begin{array}{c}x\\y\end{array}\right\rangle=\left\{\begin{array}{cc}\left(\begin{array}{c}x\\y\end{array}\right)&x\geq y\\0&x<y\end{array}\right.$.

Wherein, the evolved Node B may configure a value of $P$ to UE1 through high-layer signaling, or, the evolved Node B and the UE make a consistent definition about the value of $P$ in a predetermination manner, or, the value of $P$ is predefined to form a one-to-one corresponding relationship with a bandwidth of the CC, for example, as shown in Table 1, wherein Sn(n=1)>0, and In the embodiment of the disclosure, when the corresponding relationship is formed with the bandwidth of the 4G LTE carrier, N1=10, N2=26, N3=63, N4=110, S1=1, S2=2, S3=3 and S4=4.

(A) value(s) of $N_{RAE}^{sw}$ and Y may be determined in manners as follows:

1: the evolved Node B configures the value(s) to the UE through high-layer signaling;

2: the evolved Node B and the UE predefine the value(s) of $N_{RAE}^{sw}$ and/or Y; and

3: different system bandwidths are predefined to corresponding to independent values of $N_{RAE}^{sw}$ and/or Y. In the embodiment of the disclosure, the system bandwidth may be a bandwidth of a scheduling carrier (a bandwidth of a carrier where the DL control signaling is located).

Sub-embodiment 3

The evolved Node B indicates the number of corresponding DL data RAEs by virtue of DL control indication signaling in a predetermined manner. The RAEs consist of N (N>0) transmission symbols in a time domain, and the evolved Node B may configure a value of N to UE through high-layer signaling. In the embodiment of the disclosure, the predefined N value is one of the following values: 24, 28, 30, 32, 40 and 42.

The evolved Node B schedules UE1 to send the UL data on one or more corresponding RAEs on the UL carrier corresponding to CC1 through UL grant signaling on the DL carrier corresponding to CC0.

When a maximum scheduling time window of a UL grant is $N_{RAE}^{sw}$ and $N_{RAE}^{sw}$ includes Y RAEs, the evolved Node B indicates UE1 to send the UL data on one or more RAEs in the Y RAEs. In the embodiment of the disclosure, a value of Y is more than or equal to 1.

In the embodiment of the disclosure, when a first resource allocation manner (similar to a DL resource allocation manner 0 of LTE R12) is adopted in the UL grant, it is necessary to divide multiple RAEs into *NG* RAGs, wherein *NG*=⌈*Y/P*⌉, and when *Y* mod *P*> 0, there exist ⌊*Y/P*⌋ RAGs, wherein each RAG includes *P* RAEs, and in addition, there exist *NG*-⌊*Y/P*⌋ RAGs, wherein each RAG includes *Y-P*\*⌊*Y/P*⌋ RAEs. *NG* bits form a bitmap, wherein each bit identifies whether the corresponding RAG is allocated or not. The RAGs are arranged from a smallest time index according to a time sequence. A bit mapping sequence of the RAGs is as follows: RAG0 to RAG(*NG*-1) are sequentially mapped to a highest bit and a lowest bit respectively, $N_{RAE}^{sw}$ is a size of the scheduling time window, and Y represents the maximum number of RAEs which may be scheduled in the time window $N_{RAE}^{sw}$.

In the embodiment of the disclosure, when a second resource allocation manner is adopted in the UL grant, it is necessary to divide multiple RAEs into *NG* RAGs, wherein *NG*=⌈*Y/P*⌉, and when *Y* mod *P*>0, there exist ⌊*Y/P*⌋ RAGs, wherein each RAG includes *P* RAEs, and in addition, there exist *NG*-⌊*Y/P*⌋ RAGs, wherein each RAG includes *Y - P*\*⌊*Y/P*⌋ RAEs. It is necessary to divide the *NG* RAGs into *P* RAG clusters, wherein each cluster starts with RAGp, wherein 0≤*p*<*P*, wherein first ⌈log₂(*P*)⌉ bits in *NG* bits indicate a RAG cluster in the *P* RAG clusters selected for resource mapping.

In the embodiment of the disclosure, a 1-bit offset indicator bit is configured to indicate the number of offset RAEs in a RAG cluster during resource mapping.

The other $N_{RB}^{TYPE1} = \left| N_{RB}^{DL}/P \right| - \lceil \log_2(P) \rceil - X$ bits are configured to represent RAEs for resource mapping in the selected RAG clusters. When the 1-bit offset indicator bit is predefined, a value of X is 1, otherwise is 0, $N_{RAE}^{sw}$ is the size of the scheduling time length, and Y represents the maximum number of the RAEs which may be scheduled.

In the embodiment of the disclosure, when a third resource allocation manner (similar to an LTE resource allocation manner 2) or continuous resource allocation is adopted in the UL grant, it is necessary to indicate starting positions *RAE_start* of corresponding RAEs and the number *L_CRAEs* of continuously allocated RAEs by virtue of resource indicator values, wherein, if (*L_CRAEs*-1)≤⌊*Y/2*⌋, *RIV*=Y(*L_CRAEs*-1)+*RAE_start*, otherwise *RIV*=Y(Y-*L_CRAEs*+1)+(Y-1-*RAE_start*), wherein *L_CRAEs*≥1 and does not exceed *Y-RAE_start*, $N_{RAE}^{sw}$ is the size of the scheduling time window, and Y represents the maximum number of the RAEs which may be scheduled in the time window $N_{RAE}^{sw}$.

In the embodiment of the disclosure, when a fourth resource allocation manner (similar to an LTE UL resource allocation manner 1) or continuous resource allocation is adopted in the UL grant, resource allocation information indicates continuous RAGs of two clusters of the UE, wherein each cluster has multiple continuous RAGs, a size of each RAG is *P*, $N_{RAE}^{sw}$ is the size of the scheduling time window, and Y represents the maximum number of the RAEs which may be scheduled. An index value *r* is indicated by $\left\lceil \log_2\left(\binom{\lceil Y/P+1 \rceil}{4}\right)\right\rceil$ bits, wherein *r* is configured to indicate a RAG index *s*0 corresponding to a starting position and a RAG index *s*1 corresponding to an ending position of cluster 0 and a RAG index *s*2 corresponding to a starting position and a RAG index *s*3 corresponding to an ending position of cluster 1. *r* is defined by equation $r = \sum_{i=0}^{M-1}\binom{N - s_i}{M - i}$, wherein *M* =4 and *N*=⌈*Y/P*⌉+1, wherein $\{s_i\}_{i=0}^{M-1}$ $(1 \le s_i \le M, s_i < s_{i+1})$ is a RAG index in M RAG indexes which have been sequenced from small to large (wherein the RAGs are sequenced according to a time relationship), and $\left\langle {x \atop y} \right\rangle = \begin{cases} \left( {x \atop y} \right) & x \ge y \\ 0 & x < y \end{cases}$ .

Wherein, the evolved Node B may configure a value of *P* to UE1 through high-layer signaling, or, the evolved Node B and the UE make a consistent definition about the value of *P* in a predetermination manner, or, the value of *P* is predefined to form a one-to-one corresponding relationship with a bandwidth of the CC, for example, as shown in Table 1, wherein Sn(n=1)>0, and In the embodiment of the disclosure, when the corresponding relationship is formed with the bandwidth of the 4G LTE carrier, N1=10, N2=26, N3=63, N4=110, S1=1, S2=2, S3=3 and S4=4.

(A) value(s) of $N_{RAE}^{sw}$ and Y may be determined in manners as follows:

1: the evolved Node B configures the value(s) to the UE through high-layer signaling;

2: the evolved Node B and the UE predefine the value(s) of $N_{RAE}^{sw}$ and/or Y; and

3: different system bandwidths are predefined to corresponding to independent values of $N_{RAE}^{sw}$ and/or Y. In the embodiment of the disclosure, the system bandwidth may be a bandwidth of a scheduling carrier (a bandwidth of a carrier where the DL control signaling is located).

For the abovementioned embodiments, frequency-domain resources may be considered to be sent in the whole bandwidth, or, positions and/or occupied bandwidth sizes of the frequency-domain resources may be configured through high-layer signaling and/or in a predefined manner, or, the positions and/or occupied bandwidth sizes of the frequency-domain resources may be indicated by a state of bits left after allocation to time-domain resources in DCI.

In the abovementioned embodiments, for multiple scheduled RAEs, the same ACK/NACK or PHICH may In the embodiment of the disclosure be adopted to indicate whether data transmitted in the multiple scheduled RAEs is correctly received or not.

In the embodiment of the disclosure, the multiple scheduled RAEs may bear different parts of a transport block.

Embodiment 5

It is supposed that at least two CCs are linked with UE1, the two CCs may be positioned in the same node TP0 or positioned in two different nodes TP1 and TP2, and TP1 and TP2 are linked through an ideal backhaul (the backhaul has a short time delay), wherein an LTE R12 CC is set to be CC0, and a high-frequency CC is set to be CC1. When an evolved Node B is intended to send DL data to UE1 on CC1 and expects correct reception of UE1, the evolved Node B sends corresponding DL control indication signaling (DCI) on CC0 to indicate a time-domain resource position of the DL data corresponding to UE1 on CC1, as shown in Fig. 5, wherein it is supposed that CC0 is a 4G LTE carrier and CC1 is a high-frequency carrier. DR refers to that UE1 receives the DL data on CC1, HARQ refers to that UE1 feeds back HARQ information for the DL data on a UL carrier corresponding to CC0, RR refers to that UE1 receives retransmitted DL data on the high-frequency carrier, and NR refers to that UE1 receives newly transmitted DL data on the high-frequency carrier.

The evolved Node B indicates (a) time-domain position(s) and/or frequency-domain position(s) of one or more RAEs in a time window $N_{RAE}^{sw}$ in a manner of introducing a bitmap in the DCI, wherein each bit in the bitmap represents whether the RAE at the corresponding time-domain position and/or frequency-domain position may be configured to map data or not. In a case that the bitmap only represents the time-domain positions of the RAEs, each RAE represents a whole-bandwidth resource; and in a case that the bitmap represents the time-domain positions and frequency-domain positions of the RAEs, each bit in the bitmap represents an RAE, wherein each RAE has a predetermined time-domain position and frequency-domain position, and the RAEs are sequenced according to a predetermined time-domain and frequency-domain rule.

The UE obtains the time-domain position(s) and/or frequency-domain position(s) of the one or more RAEs in the time window $N_{RAE}^{sw}$ in a manner of detecting the bitmap introduced into the DCI, wherein each bit in the bitmap represents whether the RAE at the corresponding time-domain position and/or frequency-domain position may be configured to map data or not. In a case that the bitmap only represents the time-domain positions of the RAEs, each RAE represents a whole-bandwidth resource; and in a case that the bitmap represents the time-domain positions and frequency-domain positions of the RAEs, each bit in the bitmap represents an RAE, wherein each RAE has the predetermined time-domain position and frequency-domain position, and the RAEs are sequenced according to the predetermined time-domain and frequency-domain rule. For example, the RAEs are In the embodiment of the disclosure sequenced according to the time domain, and then are sequenced according to the frequency domain.

Embodiment 6

It is supposed that at least two CCs are linked with UE1, the two CCs may be positioned in the same node TP0 or positioned in two different nodes TP1 and TP2, and TP1 and TP2 are linked through an ideal backhaul (the backhaul has a short time delay), wherein an LTE R12 CC is set to be CC0, and a high-frequency CC is set to be CC1. When an evolved Node B is intended to send DL data to UE1 on CC1 and expects correct reception of UE1, the evolved Node B sends corresponding DL control indication signaling (DCI) on CC0 to indicate a time-domain resource position of the DL data corresponding to UE1 on CC1, as shown in Fig. 5, wherein it is supposed that CC0 is a 4G LTE carrier and CC1 is a high-frequency carrier. DR refers to that UE1 receives the DL data on CC1, HARQ refers to that UE1 feeds back HARQ information for the DL data on a UL carrier corresponding to CC0, RR refers to that UE1 receives retransmitted DL data on the high-frequency carrier, and NR refers to that UE1 receives newly transmitted DL data on the high-frequency carrier.

The evolved Node B indicates (a) time-domain position(s) and/or frequency-domain position(s) of one or more RAEs in a time window $N_{RAE}^{sw}$ by virtue of LTE DL resource allocation bits in the DCI. In the embodiment of the disclosure, the LTE DL resource allocation bits at least include: resource allocation bits in a DL resource allocation manner of Type 0, Type 1 or Type 2.

The UE obtains the time-domain position(s) and/or frequency-domain position(s) of the one or more RAEs in the time window $N_{RAE}^{sw}$ by detecting the LTE DL resource allocation bits in the DCI. In the embodiment of the disclosure, the LTE DL resource allocation bits at least include: the resource allocation bits in the DL resource allocation manner Type 0/1/2.

Embodiment 7

It is supposed that at least two CCs are linked with UE1, the two CCs may be positioned in the same node TP0 or positioned in two different nodes TP1 and TP2, and TP1 and TP2 are linked through an ideal backhaul (the backhaul has a short time delay), wherein an LTE R12 CC is set to be CC0, and a high-frequency CC is set to be CC1. When an evolved Node B is intended to send DL data to UE1 on CC1 and expects correct reception of UE1, the evolved Node B sends corresponding DL control indication signaling (DCI) on CC0 to indicate a time-domain resource position of the DL data corresponding to UE1 on CC1, as shown in Fig. 5, wherein it is supposed that CC0 is a 4G LTE carrier and CC1 is a high-frequency carrier. DR refers to that UE1 receives the DL data on CC1, HARQ refers to that UE1 feeds back HARQ information for the DL data on a UL carrier corresponding to CC0, RR refers to that UE1 receives retransmitted DL data on the high-frequency carrier, and NR refers to that UE1 receives newly transmitted DL data on the high-frequency carrier.

The evolved Node B indicates (a) time-domain position(s) and/or frequency-domain position(s) of one or more RAEs in a time window $N_{RAE}^{sw}$ by virtue of LTE DL resource allocation bits in the DCI. In the embodiment of the disclosure, the LTE DL resource allocation bits at least include: resource allocation bits in a DL resource allocation manner of Type 0, Type 1 or Type 2.

The evolved Node B indicates the time-domain position(s) and/or frequency-domain position(s) of the one or more RAEs in the time window $N_{RAE}^{sw}$ by virtue of LTE UL resource allocation bits in the DCI. In the embodiment of the disclosure, the LTE UL resource allocation bits at least include: resource allocation bits in a UL resource allocation manner Type 1/2.

The UE obtains the time-domain position(s) and/or frequency-domain position(s) of the one or more RAEs in the time window $N_{RAE}^{sw}$ by detecting the LTE UL resource allocation bits in the DCI. In the embodiment of the disclosure, the LTE UL resource allocation bits at least include: the resource allocation bits in the UL resource allocation manner Type 1/2.

Embodiment 8

An evolved Node B receives UL control information on a UL control channel on a UL carrier corresponding to a DL carrier. A resource position of the UL control channel is determined by at least one of a resource position of a corresponding control channel for scheduling the DL transmission data resource, a semi-statically configured resource offset position of the UL control channel, a dynamic resource offset position of the UL control channel indicated in the control channel for scheduling the DL transmission data resource and an offset value corresponding to an antenna port index for sending DL transmission data, and an initial time-domain position and/or initial frequency-domain position of a DL transmission data RAE. In the embodiment of the disclosure, the DL carrier may be a high-frequency carrier, and the UL carrier may be an LTE carrier. Or, the DL carrier may be a high-frequency carrier, and the UL carrier may be a high-frequency carrier. Or, the DL carrier may be an LTE carrier, and the UL carrier may be an LTE carrier.

In the embodiment of the disclosure, one or more allocated RAEs in a time window $N_{RAE}^{sw}$ correspond to a UL control channel.

In the embodiment of the disclosure, one or more allocated RAGs in the time window $N_{RAE}^{sw}$ correspond to one or more UL control channels, wherein each RAG includes at least one RAG. In the embodiment of the disclosure, the number of the RAEs in each RAG is 1.

When the UL control channel includes ACK/NACK information, the ACK/NACK information is fed back after corresponding DL data is received and the time window formed by Y RAEs ends, and set time from DL data sending to ACK/NACK reception of the evolved Node B is 8ms. The evolved Node B makes a predefinition that UE feeds back the ACK/NACK information after the time window formed by the Y RAEs ends, and set time from ending of the time window to ACK/NACK reception of the evolved Node B is 4ms, as shown in Fig. 9.

The UE sends the UL control channel on the UL carrier corresponding to the DL carrier. The resource position of the UL control channel is determined by at least one of the resource position of the corresponding control channel for scheduling the DL transmission data resource, the semi-statically configured resource offset position of the UL control channel, the dynamic resource offset position of the UL control channel indicated in the control channel for scheduling the DL transmission data resource and the offset value corresponding to the antenna port index for sending the DL transmission data, and the initial time-domain position and/or initial frequency-domain position of the DL transmission data RAE. In the embodiment of the disclosure, the DL carrier may be a high-frequency carrier, and the UL carrier may be an LTE carrier. Or, the DL carrier may be a high-frequency carrier, and the UL carrier may be an LTE carrier. Or, the DL carrier may be a high-frequency carrier, and the UL carrier may be a high-frequency carrier. Or, the DL carrier may be an LTE carrier, and the UL carrier may be an LTE carrier.

In the embodiment of the disclosure, the one or more allocated RAEs in the time window $N_{RAE}^{sw}$ correspond to a UL control channel.

In the embodiment of the disclosure, the one or more allocated RAGs in the time window $N_{RAE}^{sw}$ correspond to one or more UL control channels, wherein each RAG includes at least one RAG. In the embodiment of the disclosure, the number of the RAEs in each RAG is 1.

In the embodiment of the disclosure, when the UL control channel includes the ACK/NACK information, the ACK/NACK information is fed back after the corresponding DL data is received and the time window $N_{RAE}^{sw}$ ends, and the UE predefines that set time from DL data sending to ACK/NACK reception of the evolved Node B is 8ms. The UE feeds back the ACK/NACK information after the time window $N_{RAE}^{sw}$ ends, and the set time from ending of the time window to ACK/NACK reception of the evolved Node B is 4ms, as shown in Fig. 9.

Embodiment 9

An evolved Node B receives a UL control channel on an LTE carrier. A resource position of the UL control channel is determined by at least one of a resource position of a corresponding control channel for scheduling a DL transmission data resource, a semi-statically configured resource offset position of the UL control channel, a dynamic resource offset position of the UL control channel indicated in the control channel for scheduling the DL transmission data resource, an offset value corresponding to an antenna port index for sending DL transmission data, and an initial time-domain position and/or initial frequency-domain position of a DL transmission data RAE.

In the embodiment of the disclosure, one or more allocated RAEs in a time window $N_{RAE}^{sw}$ correspond to a UL control channel.

In the embodiment of the disclosure, one or more allocated RAGs in the time window $N_{RAE}^{sw}$ correspond to one or more UL control channels, wherein each RAG includes at least one RAG. In the embodiment of the disclosure, the number of the RAEs in each RAG is 1.

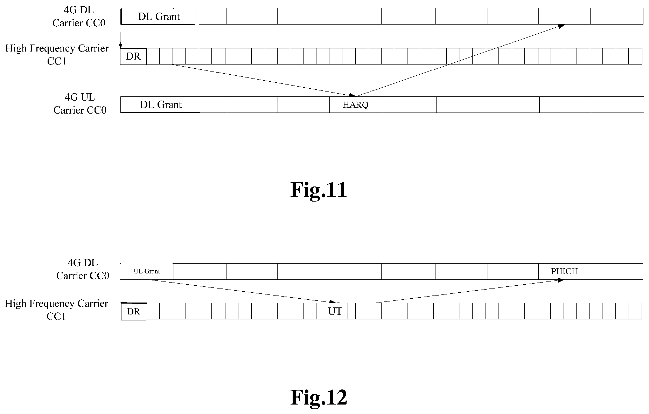

When the UL control channel includes ACK/NACK information, the ACK/NACK information is fed back after corresponding DL data is received and the time window $N_{RAE}^{sw}$ ends, and set time from DL data sending to ACK/NACK reception of the evolved Node B is 8ms. The evolved Node B makes a predefinition that UE feeds back the ACK/NACK information after the time window $N_{RAE}^{sw}$ ends, and set time from ending of the time window to ACK/NACK reception of the evolved Node B is 4ms, as shown in Fig. 11.

The UE sends the UL control channel on the LTE carrier. The resource position of the UL control channel is determined by at least one of the resource position of the corresponding control channel for scheduling the DL transmission data resource, the semi-statically configured resource offset position of the UL control channel, the dynamic resource offset position of the UL control channel indicated in the control channel for scheduling the DL transmission data resource, the offset value corresponding to the antenna port index for sending the DL transmission data, and the initial time-domain position and/or initial frequency-domain position of the DL transmission data RAE.

When the UL control channel includes the ACK/NACK information, the ACK/NACK information is fed back after the corresponding DL data is received and the time window $N_{RAE}^{sw}$ ends, and the UE predefines that set time from DL data sending to ACK/NACK reception of the evolved Node B is 8ms. The UE feeds back the ACK/NACK information after the time window $N_{RAE}^{sw}$ ends, and the set time from ending of the time window to ACK/NACK reception of the evolved Node B is 4ms, as shown in Fig. 11.

Embodiment 10

An evolved Node B indicates UE that whether the evolved Node B correctly receives UL data sent by the corresponding UE or not on a PHICH of a DL carrier. (A) time-domain and/or frequency-domain resource(s) of the PHICH are/is determined by at least one of a resource position of a corresponding control channel for scheduling a UL service, bits in the control channel for scheduling the UL service, a demodulation reference signal sequence index adopted for the UL service, a demodulation reference signal cyclic shift index adopted for the UL service, a demodulation reference signal orthogonal mask index adopted for the UL service and an initial time-domain position and/or initial frequency-domain position of a DL transmission data RAE.

In the embodiment of the disclosure, one or more allocated RAEs in a time window $N_{RAE}^{sw}$ correspond to a PHICH.

In the embodiment of the disclosure, one or more allocated RAGs in the time window $N_{RAE}^{sw}$ correspond to one or more PHICHs, wherein each RAG includes at least one RAG. In the embodiment of the disclosure, the number of the RAEs in each RAG is 1.

When the DL carrier includes a PHICH: after receiving corresponding UL data, the PHICH is sent after the time window $N_{RAE}^{sw}$ ends, and set time from UL data scheduling to PHICH sending of the evolved Node B is 8ms. The evolved Node B makes a predefinition that the UE receives the PHICH after the time window $N_{RAE}^{sw}$ for sending the UL service ends, and set time from ending of the time window to reception of the PHICH is 4ms, as shown in Fig. 10 and Fig. 12.

The UE learns about whether the evolved Node B correctly receives UL data information sent by the corresponding UE or not on the PHICH of the DL carrier. The time-domain and/or frequency-domain resource(s) of the PHICH are/is determined by at least one of the resource position of the corresponding control channel for scheduling the UL service, the bits in the control channel for scheduling the UL service, the demodulation reference signal sequence index adopted for the UL service, the demodulation reference signal cyclic shift index adopted for the UL service, the demodulation reference signal orthogonal mask index adopted for the UL service and the initial time-domain position and/or initial frequency-domain position of the DL transmission data RAE.

In the embodiment of the disclosure, the one or more allocated RAEs in the time window $N_{RAE}^{sw}$ correspond to a PHICH.

In the embodiment of the disclosure, the one or more allocated RAGs in the time window $N_{RAE}^{sw}$ correspond to one or more PHICHs, wherein each RAG includes at least one RAG. In the embodiment of the disclosure, the number of the RAEs in each RAG is 1.

When the DL carrier includes the PHICH: the UE predefines that the PHICH is sent after the evolved Node B finishes receiving the corresponding UL data and the time window $N_{RAE}^{sw}$ ends, and the set time from UL data scheduling to PHICH sending of the evolved Node B is 8ms. The terminal receives the PHICH after the time window $N_{RAE}^{sw}$ for sending the UL service ends, and set time from ending of the time window to reception of the PHICH is 4ms, as shown in Fig. 10 and Fig. 12.

The solutions of each of the abovementioned embodiments may be combined to form some combined solutions in certain manners, and all of the combined solutions of each solution in the embodiments may be adopted as optional solutions or preferred solutions of the embodiments.

In another embodiment software is further provided, which is configured to execute the technical solutions described in the abovementioned embodiments and preferred implementation modes.

In another embodiment, a storage medium is further provided, in which the software is stored, the storage medium including, but not limited to: an optical disk, a floppy disk, a hard disk, an erasable memory and the like.

Obviously, those skilled in the art should know that each component or step of the disclosure may be implemented by a universal computing device, and the components or steps may be concentrated on a single computing device or distributed on a network formed by a plurality of computing devices, and may optionally be implemented by programmable codes executable for the computing devices, so that the components or steps may be stored in a storage device for execution with the computing devices, the shown or described steps may be executed in sequences different from those described here in some circumstances, or may form each integrated circuit component respectively, or multiple components or steps therein may form a single integrated circuit component for implementation. As a consequence, the disclosure is not limited to any specific hardware and software combination.

The above is only the preferred embodiment of the disclosure and not intended to limit the embodiment of the disclosure, and for those skilled in the art, the disclosure may have various modifications and variations. Any modifications, equivalent replacements, improvements and the like within the spirit and principle of the disclosure shall fall within the scope of protection of the disclosure.

**Industrial Applicability**

Based on the technical solutions provided by the embodiment of the disclosure, the technical means that the evolved Node B indicates the resource allocation information of the DL data and/or the UL data by virtue of the DL control signaling is adopted, so that the problems of incapability in utilizing an LTE control channel to schedule multiple transmission symbols on a high-frequency carrier for DL service and UL service transmission, high control signaling overhead in LTE carrier and high-frequency carrier independent networks and the like in the related technology are solved, cross-carrier scheduling of the LTE carrier over the high-frequency carrier is implemented, and moreover, in the LTE carrier and high-frequency carrier independent networks, the control signaling overhead may be reduced.

**Claims**

1. A method for dynamically allocating resource, comprising:

   acquiring, by an evolved Node B, resource allocation information of DownLink (DL) data and/or UpLink (UL) data indicated by DL control signaling, wherein the resource allocation information comprises positions and number of Resource Allocation Elements (RAEs),
   each RAE comprises N transmission symbols in a time domain, and occupies the whole bandwidth in a frequency domain, or each RAE occupies a Bandwidth Part (BP) in X BPs in the frequency domain, the X BPs forms the frequency domain, N is an integer more than 0 and X is an integer more than 1; and
   sending, by the evolved Node B, the resource allocation information to User Equipment (UE).

2. The method as claimed in claim 1, wherein (a) value(s) of N and/or X are/is determined in at least one of manners as follows:

   the value(s) of N and/or X are/is predefined;
   the value(s) of N and/or X are/is determined according to a system bandwidth; and
   the value(s) of N and/or X are/is configured through high-layer signaling.

3. The method as claimed in claim 1, wherein a time-domain duration of the N transmission symbols is S times of 0.1 ms or 1 ms, wherein S is an integer more than 0.

4. The method as claimed in claim 3, wherein a value of S is determined in at least one of the following manners of that:

   the value of S is predefined; the value of S is configured through high-layer signaling; the value of S is determined by the system bandwidth; the value of S is determined by both the system bandwidth and the high-layer signaling; and the value of S is determined by the system bandwidth and multiple predefined values of S.

5. The method as claimed in claim 1, wherein
   in a Long-Term Evolution (LTE) and high-frequency hybrid carrier network, The UE is scheduled, by an LTE carrier in a cross-carrier manner, to receive DL data or send UL data on one or more RAEs among Y RAEs on a high-frequency carrier, wherein Y is an integer more than 1; or
   in a high-frequency carrier independent network, The UE is scheduled, by a high-frequency carrier in one time-domain element, to receive DL data or send UL data on multiple RAEs in multiple time-domain elements, wherein the time-domain element is formed by a duration of an integral number of transmission symbols; or
in an LTE carrier independent network, an LTE carrier schedules RAEs of multiple successive time-domain elements in a time-domain element, wherein the time-domain element is formed by a duration of an integral number of transmission symbols.

6. The method as claimed in claim 5, wherein
in the LTE and high-frequency hybrid carrier network, a time-domain duration of the Y RAEs is 1 ms; or,
in the high-frequency carrier independent network, the time-domain element of the high-frequency carrier is 0.1 ms; or,
in the LTE carrier independent network, the time-domain element of the LTE carrier is 1 ms, each RAE consists of Orthogonal Frequency Division Multiplexing (OFDM) symbols in 1 ms in the time domain, and each RAE comprises one or more Physical Resource Blocks (PRBs) in the frequency domain.

7. The method as claimed in claim 5, wherein the Y RAEs form a scheduling time window $N_{RAE}^{sw}$ in the time domain, wherein (a) value(s) of $N_{RAE}^{sw}$ and/or Y are/is determined in at least one of manners as follows:
the evolved Node B configures the value(s) to the UE through high-layer signaling;
the evolved Node B and the UE predefine the value(s) of $N_{RAE}^{sw}$ and/or Y; and
different system bandwidths are predefined to correspond to different values of $N_{RAE}^{sw}$ and/or Y

8. The method as claimed in claim 7, wherein the system bandwidth comprises:

    a bandwidth of a carrier where the DL control signaling is located.

9. The method as claimed in claim 5, wherein, in the LTE and high-frequency hybrid carrier network, the UE is scheduled, by the LTE carrier via a Physical Downlink Control Channel (PDCCH) and an Evolved Physical Downlink Control Channel (EPDCCH) to receive the DL data or send the UL data in multiple RAEs of the high-frequency carrier.

10. The method as claimed in claim 9, wherein position(s) and number of the one or more RAEs are/is indicated by bits in Downlink Control Information (DCI).

11. The method as claimed in claim 7, wherein (a) time-domain position(s) and/or frequency-domain position(s) of the one or more RAEs in the time window $N_{RAE}^{sw}$ are/is indicated by the bits of the DCI in the time-domain element.

12. The method as claimed in claim 11, wherein the time-domain position(s) and/or frequency-domain position(s) of the one or more RAEs are/is indicated in a manner of introducing a bitmap into the DCI.

13. The method as claimed in claim 12, wherein each bit in the bitmap represents whether the RAE at the time-domain position and/or frequency-domain position corresponding to the bit is permitted to map data.

14. The method as claimed in claim 12, wherein, in a case that the bitmap only represents the time-domain positions of the RAEs, each RAE represents a whole-bandwidth resource; and in a case that the bitmap represents the time-domain positions and frequency-domain positions of the RAEs, each bit in the bitmap represents the positions of one RAE, wherein each RAE has a predetermined time-domain position and frequency-domain position, and each RAE is sequenced according to a predetermined time-domain and frequency-domain rule.

15. The method as claimed in claim 11, wherein the time-domain position(s) and/or frequency-domain position(s) of the one or more RAEs in the time window $N_{RAE}^{sw}$ are/is indicated by LTE DL resource allocation bits in the DCI.

16. The method as claimed in claim 15, wherein the LTE DL resource allocation bits comprise: resource allocation bits in a DL resource allocation manner of Type 0, Type 1 or Type 2.

17. The method as claimed in claim 16, wherein, in a case that the resource allocation bits only represent the time-domain positions of the RAEs, each RAE represents a whole-bandwidth resource; and in a case that the resource allocation bits represent the time-domain positions and frequency-domain positions of the RAEs, each RAE has a predetermined time-domain position and frequency-domain position, and the RAEs are sequenced according to a predetermined time-domain and frequency-domain rule.

18. The method as claimed in claim 11, wherein the time-domain position(s) and/or frequency-domain position(s) of the one or more RAEs in the time window $N_{RAE}^{sw}$ are/is indicated by LTE UL resource allocation bits in the DCI.

19. The method as claimed in claim 18, wherein the LTE UL resource allocation bits at least comprise: resource allocation bits in a UL resource allocation manner of Type 0 and type 1.

20. The method as claimed in claim 5, wherein the evolved Node B receives UL control information sent by the UE on a UL carrier corresponding to a DL carrier.

21. The method as claimed in claim 20, wherein a resource position of the UL control information is determined by an initial time-domain position and/or initial frequency-domain position of a DL transmission data RAE and at least one of:

a resource position of a control channel for scheduling a DL transmission data resource, a semi-statically configured resource offset position of a UL control channel, a dynamic resource offset position of the UL control channel indicated in the control channel for scheduling the DL transmission data resource, and an offset value corresponding to an antenna port index for sending DL transmission data.

22. The method as claimed in claim 21, wherein the DL carrier is a high-frequency carrier, and the UL carrier is an LTE carrier; or, the DL carrier is a high-frequency carrier, a UL control channel carrier is an LTE carrier, and a UL service channel carrier is a high-frequency carrier; or, the DL carrier is a high-frequency carrier, and the UL carrier is a high-frequency carrier; or, the DL carrier is an LTE carrier, and the UL carrier is an LTE carrier.

23. The method as claimed in claim 7, wherein, in the high-frequency carrier independent network and the LTE carrier independent network, one or more allocated RAE Groups (RAGs) in the time window $N_{RAE}^{sw}$ correspond to one or more UL control channels, wherein each RAG comprises at least one RAE.

24. The method as claimed in claim 23, wherein the number of the RAEs in each RAG is 1.

25. The method as claimed in claim 9, wherein the evolved Node B receives information transmitted on the UL control channel on the LTE carrier.

26. The method as claimed in claim 25, wherein a resource position of the UL control channel is determined by at least one of:

the resource position of the control channel for scheduling the DL transmission data resource, the semi-statically configured resource offset position of the UL control channel, the dynamic resource offset position of the UL control channel indicated in the control channel for scheduling the DL transmission data resource, the offset value corresponding to the antenna port index for sending the DL transmission data, an initial time-domain position of a DL transmission data RAE, and an initial frequency-domain position of the DL transmission data RAE.

27. The method as claimed in any one of claims 7 to 10, wherein, when the UL control channel comprises Acknowledgement/Non-Acknowledgement (ACK/NACK) information:
the ACK/NACK information is fed back after corresponding DL data is received and the time window $N_{RAE}^{sw}$ ends, and an interval from start of DL data sending to ACK/NACK reception of the evolved Node B is set to R1 ms, R1 is an integer more than 0; and/or,
the evolved Node B makes a predefinition that the UE feeds back the ACK/NACK information after the time window $N_{RAE}^{sw}$ ends, and an interval from start of DL data sending to ACK/NACK information reception of the evolved Node B is set to R2ms, R2 is an integer more than 0.

28. The method as claimed in claim 27, wherein a value of R1 is 8, and/or a value of R2 is 4.

29. The method as claimed in any one of claims 7 to 10, wherein the evolved Node B indicates whether the evolved Node B has correctly received the UL data sent by the corresponding UE on a Physical Hybrid Automatic Repeat Request (ARQ) Indicator Channel (PHICH) of the DL carrier.

30. The method as claimed in claim 29, wherein (a) time-domain and/or frequency-domain resource(s) of the PHICH are/is determined by at least one of: a resource position of a control channel for scheduling a UL service, bits in DCI for scheduling the UL service, a demodulation reference signal sequence index adopted for the UL service, a demodulation reference signal cyclic shift index adopted for the UL service, a demodulation reference signal orthogonal mask index adopted for the UL service, an initial time-domain position of the DL transmission data RAE, and the initial frequency-domain position of the DL transmission data RAE.

31. The method as claimed in claim 7, wherein, in the high-frequency carrier independent network and the LTE carrier independent network, one or more allocated RAGs in the time window $N_{RAE}^{sw}$ correspond to a PHICH.

32. The method as claimed in claim 7, wherein the number of the RAEs in each RAG is 1.

33. The method as claimed in any one of claims 7 to 10, wherein, in a case that the DL carrier comprises a PHICH:
after receiving corresponding UL data, the PHICH is sent after the time window $N_{RAE}^{sw}$ ends, and an interval from start of UL data scheduling to PHICH sending of the evolved Node B is Mms, wherein M is an integer more than 0; and/or,
the evolved Node B makes a predefinition that the UE receives the PHICH after the time window of the Y RAEs for sending the UL service ends, and an interval from start of ending of the time window to reception of the PHICH is set to Nms, wherein N is an integer more than 0.

34. The method as claimed in claim 33, wherein a value of M is 8; and/or a value of N is 4.

35. A method for processing dynamic resource allocation, comprising:

receiving, by User Equipment (UE), DownLink (DL) control signaling; and
acquiring, by the UE, resource allocation information from the DL control signaling, wherein resource allocation information is used for indicating DL data and/or UpLink (UL) data, the resource allocation information comprises positions and number of Resource Allocation Elements (RAEs),
each RAE comprises N transmission symbols in a time domain, and occupies the whole bandwidth in a frequency domain, or each RAE occupies a Bandwidth Part (BP) in X BPs in the frequency domain, the X BPs forming the frequency domain, N is an integer more than 0 and X is an integer more than 1.

36. The method as claimed in claim 35, wherein (a) value(s) of N and/or X are/is determined in at least one of manners as follows:

the value(s) of N and/or X are/is predefined;
the value(s) of N and/or X are/is determined according to a system bandwidth; and
the value(s) of N and/or X are/is configured through high-layer signaling.

37. The method as claimed in claim 35, wherein a time-domain duration of the N transmission symbols is S times of 0.1 ms or 1 ms, wherein S is an integer more than 0.

38. The method as claimed in claim 37, wherein a value of S is determined in at least one of the following manners of that:

the value of S is predefined; the value of S is configured through high-layer signaling; the value of S is determined by a system bandwidth; the value of S is determined by both the system bandwidth and the high-layer signaling; and the value of S is determined by the system bandwidth and multiple predefined values of S.

39. The method as claimed in claim 35, wherein
in a Long-Term Evolution (LTE) and high-frequency hybrid carrier network, The UE is scheduled, by an LTE carrier in a cross-carrier manner, to receive DL data or send UL data on one or more RAEs among Y RAEs on a high-frequency carrier, wherein Y is an integer more than 1; or
in a high-frequency carrier independent network, The UE is scheduled, by a high-frequency carrier in one time-domain element, to receive DL data or send UL data on multiple RAEs in multiple time-domain elements, wherein the time-domain element is formed by a duration of an integral number of transmission symbols; or
in an LTE carrier independent network, an LTE carrier schedules RAEs of multiple successive time-domain elements in a time-domain element, wherein the time-domain element is formed by a duration of an integral number of transmission symbols.

40. The method as claimed in claim 39, wherein
in the LTE and high-frequency hybrid carrier network, a time-domain duration of the Y RAEs is 1 ms; or,
in the high-frequency carrier independent network, the time-domain element of the high-frequency carrier is 0.1 ms; or,
in the LTE carrier independent network, the time-domain element of the LTE carrier is 1 ms, each RAE consists of Orthogonal Frequency Division Multiplexing (OFDM) symbols in 1 ms in the time domain, and each RAE comprises one or more Physical Resource Blocks (PRBs) in the frequency domain.

41. The method as claimed in claim 39, wherein the Y RAEs form a scheduling time window $N_{RAE}^{sw}$ in the time domain, wherein (a) value(s) of $N_{RAE}^{sw}$ and/or Y are/is determined in at least one of manners as follows:
an evolved Node B configures the value(s) to the UE through high-layer signaling;
the evolved Node B and the UE predefine the value(s) of $N_{RAE}^{sw}$ and/or Y; and
different system bandwidths are predefined to correspond to different values of $N_{RAE}^{sw}$ and/or Y

42. The method as claimed in claim 41, wherein the system bandwidth comprises: a bandwidth of a carrier where the DL control signaling is located.

43. The method as claimed in claim 39, wherein, in the LTE and high-frequency hybrid carrier network, the UE is scheduled, by the LTE carrier via a Physical Downlink Control Channel (PDCCH) and an Evolved Physical Downlink Control Channel (EPDCCH) the DL data or send the UL data through a Physical Downlink Control Channel (PDCCH) and an Evolved Physical Downlink Control Channel (EPDCCH).

44. The method as claimed in claim 43, wherein position(s) and number of the one or more RAEs are indicated by bits in Downlink Control Information (DCI).

45. The method as claimed in claim 41, wherein (a) time-domain position(s) and/or frequency-domain position(s) of the one or more RAEs in the time window $N_{RAE}^{sw}$ are/is indicated by the bits of the DCI in the time-domain element.

46. The method as claimed in claim 45, wherein the time-domain position(s) and/or frequency-domain position(s) of the one or more RAEs are/is indicated in a manner of introducing a bitmap into the DCI.

47. The method as claimed in claim 46, wherein each bit in the bitmap represents whether the RAE at the time-domain position and/or frequency-domain position corresponding to the bit is permitted to map data.

48. The method as claimed in claim 46, wherein, in a case that the bitmap only represents the time-domain positions of the RAEs, each RAE represents a whole-bandwidth resource; and in a case that the bitmap represents the time-domain positions and frequency-domain positions of the RAEs, each bit in the bitmap represents the positions of one RAE, wherein each RAE has a predetermined time-domain position and frequency-domain position, and each RAE is sequenced according to a predetermined time-domain and frequency-domain rule.

49. The method as claimed in claim 48, wherein the time-domain position(s) and/or frequency-domain position(s) of the one or more RAEs in the time window $N_{RAE}^{sw}$ are/is indicated by LTE DL resource allocation bits in the DCI.

50. The method as claimed in claim 49, wherein the LTE DL resource allocation bits comprises: resource allocation bits in a DL resource allocation manner of Type 0, Type 1 or Type 2.

51. The method as claimed in claim 50, wherein, in a case that the resource allocation bits only represent the time-domain positions of the RAEs, each RAE represents a whole-bandwidth resource; and in a case that the resource allocation bits represent the time-domain positions and frequency-domain positions of the RAEs, each RAE has a predetermined time-domain position and frequency-domain position, and the RAEs are sequenced according to a predetermined time-domain and frequency-domain rule.

52. The method as claimed in claim 45, wherein the time-domain position(s) and/or frequency-domain position(s) of the one or more RAEs in the time window $N_{RAE}^{sw}$ are/is indicated by LTE UL resource allocation bits in the DCI.

53. The method as claimed in claim 52, wherein the LTE UL resource allocation bits at least comprise: resource allocation bits in a UL resource allocation manner of Type 0 and type 1.

54. The method as claimed in claim 39, wherein the UE sends UL control information to the evolved Node B on a UL carrier corresponding to a DL carrier.

55. The method as claimed in claim 54, wherein a resource position of the UL control information is determined by an initial time-domain position and/or initial frequency-domain position of a DL transmission data RAE and at least one of:

a resource position of a control channel for scheduling a DL transmission data resource, a semi-statically configured resource offset position of a UL control channel, a dynamic resource offset position of the UL control channel indicated in the control channel for scheduling the DL transmission data resource, and an offset value corresponding to an antenna port index for sending DL transmission data.

56. The method as claimed in claim 55, wherein the DL carrier is a high-frequency carrier, and the UL carrier is an LTE carrier; or, the DL carrier is a high-frequency carrier, a UL control channel carrier is an LTE carrier, and a UL service channel carrier is a high-frequency carrier; or, the DL carrier is a high-frequency carrier, and the UL carrier is a high-frequency carrier; or, the DL carrier is an LTE carrier, and the UL carrier is an LTE carrier.

57. The method as claimed in claim 41, wherein, in the high-frequency carrier independent network and the LTE carrier independent network, one or more allocated RAE Groups (RAGs) in the time window $N_{RAE}^{sw}$ correspond to one or more UL control channels, wherein each RAG comprises at least one RAE.

58. The method as claimed in claim 57, wherein the number of the RAEs in each RAG is 1.

59. The method as claimed in claim 43, wherein the evolved Node B receives information transmitted on the UL control channel on the LTE carrier.

60. The method as claimed in claim 59, wherein a resource position of the UL control channel is determined by at least one of:

the resource position of the control channel for scheduling the DL transmission data resource, the semi-statically configured resource offset position of the UL control channel, the dynamic resource offset position of the UL control channel indicated in the control channel for scheduling the DL transmission data resource, the offset value corresponding to the antenna port index for sending the DL transmission data, an initial time-domain position of a DL transmission data RAE, and an initial frequency-domain position of the DL transmission data RAE.

61. The method as claimed in any one of claims 41 to 44, wherein, when the UL control channel comprises ACK/NACK information:
the ACK/NACK information is fed back after corresponding DL data is received and the time window $N_{RAE}^{sw}$ ends, and an interval from start of DL data sending to ACK/NACK reception of the evolved Node B is set to R1ms, R1 being an integer more than 0; and/or,
the evolved Node B makes a predefinition that the UE feeds back the ACK/NACK information after the time window $N_{RAE}^{sw}$ ends, and an interval from start of DL data sending to ACK/NACK information reception of the evolved Node B is R2ms, R2 being an integer more than 0.

62. The method as claimed in claim 61, wherein a value of R1 is 8, and/or a value of R2 is 4.

63. The method as claimed in any one of claims 41 to 44, wherein the evolved Node B indicates whether the evolved Node B has correctly received the UL data sent by the corresponding UE or not on a Physical Hybrid Automatic Repeat Request (ARQ) Indicator Channel (PHICH) of the DL carrier.

64. The method as claimed in claim 63, wherein (a) time-domain and/or frequency-domain resource(s) of the PHICH is determined by at least one of: a resource position of a control channel for scheduling a UL service, bits in DCI for scheduling the UL service, a demodulation reference signal sequence index adopted for the UL service, a demodulation reference signal cyclic shift index adopted for the UL service, a demodulation reference signal orthogonal mask index adopted for the UL service, an initial time-domain position of the DL transmission data RAE, and the initial frequency-domain position of the DL transmission data RAE.

65. The method as claimed in claim 41, wherein, in the high-frequency carrier independent network and the LTE carrier independent network, the one or more allocated RAGs in the time window $N_{RAE}^{sw}$ correspond to a PHICH.

66. The method as claimed in claim 41, wherein the number of the RAEs in each RAG is 1.

67. The method as claimed in any one of claims 41 to 44, wherein, in a case that the DL carrier comprises a PHICH: after receiving corresponding UL data, the PHICH is sent after the time window $N_{RAE}^{sw}$ ends, and set time from UL data scheduling to PHICH sending of the evolved Node B is Mms, wherein M is an integer more than 0; and/or, the evolved Node B makes a predefinition that the UE receives the PHICH after the time window of the Y RAEs for sending the UL service ends, and set time from ending of the time window to reception of the PHICH is Nms, wherein N is an integer more than 0.

68. The method as claimed in claim 65, wherein a value of M is 8; and/or a value of N is 4.

69. A device for dynamically allocating resource , applied to an evolved Node B, comprising:

an acquisition component, configured to acquire resource allocation information of DownLink (DL) data and/or UpLink (UL) data indicated by DL control signaling, wherein the resource allocation information comprises positions and number of Resource Allocation Elements (RAEs), each RAE comprises N transmission symbols in a time domain, and occupies the whole bandwidth in a frequency domain, or each RAE occupies a Bandwidth Part (BP) in X BPs in the frequency domain, the X BPs forming the frequency domain, N being an integer more than 0 and X being an integer more than 1; and
a sending component, configured to send the resource allocation information to UE.

70. The device as claimed in claim 69, wherein (a) value(s) of N and/or X are/is determined in at least one of manners as follows:

the value(s) of N and/or X are/is predefined;
the value(s) of N and/or X are/is determined according to a system bandwidth; and
the value(s) of N and/or X are/is configured through high-layer signaling.

71. The device as claimed in claim 69, wherein a time-domain duration of the N transmission symbols is S times of 0.1 ms or 1 ms, wherein S is an integer more than 0.

72. The device as claimed in claim 71, wherein a value of S is determined in at least one of the following manners of that:

predefinition of the value of S; configuration through high-layer signaling; determination by the system bandwidth; determination by both the system bandwidth and the high-layer signaling; and determination by the system bandwidth and multiple predefined values of S.

73. The device as claimed in claim 69, wherein
in a Long-Term Evolution (LTE) and high-frequency hybrid carrier network, The UE is scheduled, by an LTE carrier in a cross-carrier manner, to receive DL data or send UL data on one or more RAEs among Y RAEs on a high-frequency carrier, wherein Y is an integer more than 1; or
in a high-frequency carrier independent network, The UE is scheduled, by a high-frequency carrier in one time-domain element, to receive DL data or send UL data on multiple RAEs in multiple time-domain elements, wherein the time-domain element is formed by a duration of an integral number of transmission symbols; or
in an LTE carrier independent network, an LTE carrier schedules RAEs of multiple successive time-domain elements in a time-domain element, wherein the time-domain element is formed by a duration of an integral number of transmission symbols.

**74.** The device as claimed in claim 73, wherein,
in the LTE and high-frequency hybrid carrier network, a time-domain duration of the Y RAEs is 1 ms;
or, in the high-frequency carrier independent network, the time-domain element of the high-frequency carrier is 0.1 ms;
or, in the LTE carrier independent network, the time-domain element of the LTE carrier is 1 ms, each RAE consists of Orthogonal Frequency Division Multiplexing (OFDM) symbols in 1 ms in the time domain, and each RAE comprises one or more Physical Resource Blocks (PRBs) in the frequency domain.

**75.** The device as claimed in claim 73, wherein the Y RAEs form a scheduling time window $N_{RAE}^{sw}$ in the time domain, wherein (a) value(s) of $N_{RAE}^{sw}$ and/or Y are/is determined in at least one of manners as follows:
the evolved Node B configures the value(s) to the UE through high-layer signaling;
the evolved Node B and the UE predefine the value(s) of $N_{RAE}^{sw}$ and/or Y; and
different system bandwidths are predefined to correspond to different values of $N_{RAE}^{sw}$ and/or Y

**76.** The device as claimed in claim 75, wherein the system bandwidth comprises:

a bandwidth of a carrier where the DL control signaling is located.

**77.** A device for processing dynamic resource allocation, applied to User Equipment (UE), comprising:

a receiving component, configured to receive DownLink (DL) control signaling; and
an acquisition component, configured to acquire resource allocation information configured to indicate DL data and/or UpLink (UP) data from the DL control signaling, wherein the resource allocation information comprises positions and number of Resource Allocation Elements (RAEs),
each RAE comprises N transmission symbols in a time domain, and occupies the whole bandwidth in a frequency domain, or each RAE occupies a Bandwidth Part (BP) in X BPs in the frequency domain, the X BPs forming the frequency domain, N being an integer more than 0 and X being an integer more than 1.

**78.** The device as claimed in claim 77, wherein (a) value(s) of N and/or X are/is determined in at least one of manners as follows:

the value(s) of N and/or X are/is predefined;
the value(s) of N and/or X are/is determined according to a system bandwidth; and
the value(s) of N and/or X are/is configured through high-layer signaling.

**79.** The device as claimed in claim 78, wherein a time-domain duration of the N transmission symbols is S times of 0.1 ms or 1 ms, wherein S is an integer more than 0.

**80.** The device as claimed in claim 79, wherein a value of S is determined in at least one of the following manners of that:

predefinition of the value of S; configuration through high-layer signaling; determination by the system bandwidth; determination by both the system bandwidth and the high-layer signaling; and determination by the system bandwidth and multiple predefined values of S.

**81.** The device as claimed in claim 77, wherein
in a Long-Term Evolution (LTE) and high-frequency hybrid carrier network, The UE is scheduled, by an LTE carrier in a cross-carrier manner, to receive DL data or send UL data on one or more RAEs among Y RAEs on a high-frequency carrier, wherein Y is an integer more than 1; or
in a high-frequency carrier independent network, The UE is scheduled, by a high-frequency carrier in one time-domain element, to receive DL data or send UL data on multiple RAEs in multiple time-domain elements, wherein the time-domain element is formed by a duration of an integral number of transmission symbols; or
in an LTE carrier independent network, an LTE carrier schedules RAEs of multiple successive time-domain elements in a time-domain element, wherein the time-domain element is formed by a duration of an integral number of transmission symbols.

**82.** The device as claimed in claim 81, wherein
in the LTE and high-frequency hybrid carrier network, a time-domain duration of the Y RAEs is 1 ms;

or, in the high-frequency carrier independent network, the time-domain element of the high-frequency carrier is 0.1 ms; or, in the LTE carrier independent network, the time-domain element of the LTE carrier is 1 ms, each RAE consists of Orthogonal Frequency Division Multiplexing (OFDM) symbols in 1 ms in the time domain, and each RAE comprises one or more Physical Resource Blocks (PRBs) in the frequency domain.

83. The device as claimed in claim 81, wherein the Y RAEs form a scheduling time window $N_{RAE}^{sw}$ in the time domain, wherein (a) value(s) of $N_{RAE}^{sw}$ and/or Y are/is determined in at least one of manners as follows:

an evolved Node B configures the value(s) to the UE through high-layer signaling;

the evolved Node B and the UE predefine the value(s) of $N_{RAE}^{sw}$ and/or Y; and

different system bandwidths are predefined to correspond to different values of $N_{RAE}^{sw}$ and/or Y

84. The device as claimed in claim 83, wherein the system bandwidth comprises:

a bandwidth of a carrier where the DL control signaling is located.

85. An evolved Node B, comprising the device as claimed in any one of claims 69 to 76.

86. User Equipment (UE), comprising the device as claimed in any one of claims 77 to 84.

an evolved Node B acquires resource allocation information of DL data and/or UL data indicated by DL control signaling, wherein the resource allocation information includes positions and number of RAEs, each RAE includes N transmission symbols in a time domain, and occupies the whole bandwidth in a frequency domain, or each RAE occupies a BP in X BPs in the frequency domain, the X BPs forming the frequency domain, N is an integer more than 0 and X is an integer more than 1 — S102

the evolved Node B sends the resource allocation information to UE — S104

**Fig.1**

acquisition component
20

Sending component
22

**Fig.2**

UE receives DL control signaling — S302

the UE acquires resource allocation information configured to indicate DL data and/or UL data from the DL control signaling, wherein the resource allocation information includes positions and number of RAEs, each RAE includes N transmission symbols in a time domain, and occupies the whole bandwidth in a frequency domain, or each RAE occupies a BP in X BPs in the frequency domain, the X BPs forming the frequency domain, N is an integer more than 0 and X is an integer more than 1 — S304

**Fig.3**

```
┌─────────────────────────────┐
│    receiving component      │
│             40              │
└─────────────────────────────┘
               │
               │
┌─────────────────────────────┐
│   acquisition component     │
│             42              │
└─────────────────────────────┘
```

**Fig.4**

**Fig.5**

**Fig.6**

| | DL Grant and DR | DR | DR | DR | | | | | | DLGrant/ RR/NR |
|---|---|---|---|---|---|---|---|---|---|---|

Carrier CC0

**Fig.7**

Carrier CC0 DL

| ULGrant | | | | | | | | | PHICH | |
|---|---|---|---|---|---|---|---|---|---|---|

Carrier CC0 UL

| | | | | UT | UT | | | | |
|---|---|---|---|---|---|---|---|---|---|

**Fig.8**

DL CarrierCC0

| DL Grant | | | | | | | | |
|---|---|---|---|---|---|---|---|---|

UL Carrier CC1

| DR | | | | | | | | | | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|---|---|---|---|---|---|---|---|---|

| | | | HARQ | | | | | |
|---|---|---|---|---|---|---|---|---|

**Fig.9**

DL CarrierCC0

| UL Grant | | | | | | | PHICH | |
|---|---|---|---|---|---|---|---|---|

UL Carrier CC1

| | | | | | | | | | | | | UT | | | | | | | | | | | | | | | | | | | | | |
|---|---|---|---|---|---|---|---|---|---|---|---|---|---|---|---|---|---|---|---|---|---|---|---|---|---|---|---|---|---|---|---|---|---|

**Fig.10**

4G DL
Carrier CC0

DL Grant

High Frequency Carrier
CC1

DR

4G UL
Carrier CC0

DL Grant                          HARQ

**Fig.11**

4G DL
Carrier CC0

UL Grant                                              PHICH

High Frequency Carrier
CC1

DR                          UT

**Fig.12**

# INTERNATIONAL SEARCH REPORT

| International application No. |
|---|
| PCT/CN2014/087471 |

## A. CLASSIFICATION OF SUBJECT MATTER

H04L 5/00 (2006.01) i

According to International Patent Classification (IPC) or to both national classification and IPC

## B. FIELDS SEARCHED

Minimum documentation searched (classification system followed by classification symbols)

H04L; H04W; H04M; H04B

Documentation searched other than minimum documentation to the extent that such documents are included in the fields searched

Electronic data base consulted during the international search (name of data base and, where practicable, search terms used)

WPI, EPODOC, CNPAT, CNKI: resource, allocation, downlink, RAE, terminal, base w station, unit, element, block, position, number, time, frequency, bandwidth, information, time domain, frequency domain, transmitting code, distribution information

## C. DOCUMENTS CONSIDERED TO BE RELEVANT

| Category* | Citation of document, with indication, where appropriate, of the relevant passages | Relevant to claim No. |
|---|---|---|
| A | CN 102196574 A (ZTE CORPORATION) 21 September 2011 (21.09.2011) see description, paragraphs [0034]-[0060], and figures 2a-4c | 1-86 |
| A | CN 101291513 A (ZTE CORPORATION) 22 October 2008 (22.10.2008) see the whole document | 1-86 |
| A | CN 102035785 A (TINGHUA UNIVERSITY) 27 April 2011 (27.04.2011) see the whole document | 1-86 |

☐ Further documents are listed in the continuation of Box C.     ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 20 January 2015 | 17 February 2015 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>WANG, Feng<br><br>Telephone No. (86-10) 62413316 |

Form PCT/ISA /210 (second sheet) (July 2009)

**INTERNATIONAL SEARCH REPORT**
Information on patent family members

| | International application No. |
|---|---|
| | PCT/CN2014/087471 |

| Patent Documents referred in the Report | Publication Date | Patent Family | Publication Date |
|---|---|---|---|
| CN 102196574 A | 21 September 2011 | WO 2011/106945 A1 | 09 September 2011 |
| CN 101291513 A | 22 October 2008 | None | |
| CN 102035785 A | 27 April 2011 | None | |

Form PCT/ISA /210 (patent family annex) (July 2009)